(19)

Europäisches
Patentamt
European
Patent Office
Office européen
des brevets

(11) **EP 3 138 413 A1**

(12) **EUROPEAN PATENT APPLICATION**

(43) Date of publication:
08.03.2017 Bulletin 2017/10

(21) Application number: 15181078.5

(22) Date of filing: 14.08.2015

(51) Int Cl.:
*A23L 29/30* $^{(2016.01)}$    *A23L 27/30* $^{(2016.01)}$
*C07H 3/02* $^{(2006.01)}$

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **Pfeifer & Langen GmbH & Co. KG
50858 Köln (DE)**

(72) Inventors:
• **Ludovici, Karl**
  **51465 Bergisch-Gladbach (DE)**
• **Koch, Timo Johannes**
  **50189 Elsdorf (DE)**
• **Kaufmann, Birgit**
  **40591 Düsseldorf (DE)**

(74) Representative: **Kutzenberger Wolff & Partner
Theodor-Heuss-Ring 23
50668 Köln (DE)**

(54) **RARE SUGARS**

(57)    The invention relates to an aqueous caramelized carbohydrate composition comprising at least one common D-aldohexose, at least one common D-ketohexose, at least one rare hexose, especially psicose and/or allose, and at least one carboxylic acid. The invention also relates to the preparation of such an aqueous caramelized carbohydrate composition and to the isolation of the rare hexose from the aqueous caramelized carbohydrate composition.

EP 3 138 413 A1

**Description**

The invention relates to an aqueous caramelized carbohydrate composition comprising at least one common D-aldohexose, at least one common D-ketohexose, at least one rare hexose, especially psicose and/or allose, and at least one carboxylic acid. The invention also relates to the preferably non-enzymatic preparation of such an aqueous caramelized carbohydrate composition and to the isolation of the rare hexose from the aqueous caramelized carbohydrate composition.

While several monosaccharides are available in large amounts from natural sources, especially D-glucose, D-mannose, D-galactose, D-fructose and D-sorbose, there is a demand for rare hexoses that cannot be obtained from natural sources as easy, because they naturally occur only in minor amounts or do not naturally occur at all. Said rare hexoses and the mixtures thereof are useful for several purposes, especially for certain pharmaceutical applications and as additive for foodstuffs, e.g. as sweeteners or low calorie sweeteners.

US 3,285,776 relates to the production of syrup by hydrolysis and alkali treatment of starch, and more specifically relates to sweetener high dextrose equivalent corn syrups and methods of making the same.

US 4,692,514 discloses the solid bed adsorptive separation of a ketose from other ketoses and aldoses. More specifically, it relates to a process for separating psicose from a mixture comprising psicose, fructose and one or more additional ketoses, and/or aldoses which process employs an adsorbent comprising a calcium-exchanged Y-type zeolite to selectively adsorb psicose from the feed mixture.

US 2010/0204346 and US 2013/0274350 relate to a method for producing a sweetener containing glucose, fructose, and psicose, wherein an isomerase and an epimerase are allowed to act on glucose liquid sugar produced in a glucose liquid sugar production plant to thereby produce D-psicose, thereby providing a sweetener that maintains the degree and quality of sweetness of a glucose-fructose mixed solution and never causes obesity, a method for producing the same, and use of the same.

US 2012/0094940 discloses a process of producing a sugar composition comprising a definite amount of an target hexose, comprising treating a starting liquid sugar material comprising a starting sugar material hexose or a mixture comprising hexose in a system in the presence of one or more types selected from the group consisting of basic ion exchange resins, alkalis and calcium salts to initiate an isomerization reaction as an equilibrium reaction to transform the starting sugar material hexose to the target hexose to prepare a sugar mixture comprising a definite amount of the target hexose and having a sugar constitution different from that of the starting sugar material, and hexose compositions containing D-allose and D-psicose and the use of the hexose compositions.

WO 2014/168018 relates to a method for manufacturing a sweetener composition, said method comprising: treating sucrose with an acid and/or an enzyme under specific conditions to thereby efficiently decompose sucrose into glucose and fructose; and then isomerizing the obtained mixture using an alkali and/or an enzyme under specific conditions in such a manner as to allow the resultant isomerized product to contain D-psicose mainly as a rare sugar so that the product comprises, at a specific composition ratio, sucrose, D-glucose, D-fructose and rare sugar(s) at least containing D-psicose, or the product comprises, at a specific composition ratio, D-glucose, D-fructose and rare sugar(s) at least containing D-psicose.

Conventional processes for the manufacture of such rare hexoses often require enzymatically catalyzed reaction. Several enzymes for specific conversions are commercially available, especially for isomerizing common hexoses into rare hexoses. These conventional enzymatic processes, however, are comparatively expensive and there is a demand for alternative processes that are less expensive and that provide rare hexoses in high yields.

It is an object of the invention to provide rare hexoses and compositions comprising rare hexoses that have advantages compared to the prior art. The compositions comprising rare hexoses should be obtainable by simple preparation methods and should either be useful without purification and/or contain rare hexoses in comparatively high amounts so that upon purification considerable yields of rare hexoses can be achieved.

This object has been achieved by the subject-matter of the patent claims.

A first aspect of the invention relates to an aqueous caramelized carbohydrate composition comprising

(i) at least one common D-aldohexose selected from the group consisting of D-glucose, D-mannose, and D-galactose, wherein the content of said at least one common D-aldohexose is at least 0.1 wt.-%, relative to the total content of all carbohydrates in the composition;

(ii) at least one common D-ketohexose selected from the group consisting of D-fructose and D-sorbose, wherein the content of said at least one common D-ketohexose is at least 0.1 wt.-%, relative to the total content of all carbohydrates in the composition; and

(iii) at least one rare hexose being

(a) a rare D-aldohexose selected from the group consisting of D-allose, D-altrose, D-gulose, D-idose, and D-talose; or

(b) a rare L-aldohexose selected from the group consisting of L-allose, L-altrose, L-glucose, L-mannose, L-gulose, L-idose, L-galactose, and L-talose; or

(c) a rare D-ketohexose selected from the group consisting of D-psicose and D-tagatose; or

(d) a rare L-ketohexose selected from the group consisting of L-psicose, L-sorbose, L-fructose, and L-tagatose;

wherein the content of said at least one rare hexose is at least 0.1 wt.-%, relative to the total content of all carbohydrates in the composition; and

wherein the aqueous caramelized carbohydrate composition has a water content of at least 0.1 wt.-%, relative to the total weight of the composition.

The carbohydrate composition according to the invention is aqueous, i.e. comprises water. The water content is not particularly limited so that the composition according to the invention may be essentially solid, semisolid, pasty or liquid. Preferably, the composition is liquid, e.g. a symp or a symp-like composition.

The content of water within the composition according to the invention is at least 0.1 wt.-%, relative to the total weight of the composition.

Preferably, the water content is at least 1.0 wt.-%, more preferably at least 5.0 wt.-%, still more preferably at least 7.5 wt.-%, yet more preferably at least 10 wt.-%, most preferably at least 15 wt.-%, and in particular at least 20 wt.-%, relative to the total weight of the composition.

Preferably, the water content is at most 99 wt.-%, more preferably at most 95 wt.-%, still more preferably at most 92.5 wt.-%, yet more preferably at most 90 wt.-%, most preferably at most 85 wt.-%, and in particular at most 80 wt.-%, relative to the total weight of the composition.

In preferred embodiments, the water content of the composition is within the range of $5\pm2.5$ wt.-%, $10\pm7.5$ wt.-%, $10\pm5$ wt.-%, $15\pm12.5$ wt.-%, $15\pm10$ wt.-%, $15\pm7.5$ wt.-%, $15\pm5$ wt.-%, $20\pm17.5$ wt.-%, $20\pm15$ wt.-%, $20\pm12.5$ wt.-%, $20\pm10$ wt.-%, $20\pm7.5$ wt.-%, $20\pm5$ wt.-%, $25\pm22.5$ wt.-%, $25\pm20$ wt.-%, $25\pm17.5$ wt.-%, $25\pm15$ wt.-%, $25\pm12.5$ wt.-%, $25\pm10$ wt.-%, $25\pm7.5$ wt.-%, $25\pm5$ wt.-%, $30\pm27.5$ wt.-%, $30\pm25$ wt.-%, $30\pm22.5$ wt.-%, $30\pm20$ wt.-%, $30\pm17.5$ wt.-%, $30\pm15$ wt.-%, $30\pm12.5$ wt.-%, $30\pm10$ wt.-%, $30\pm7.5$ wt.-%, $30\pm5$ wt.-%, $35\pm32.5$ wt.-%, $35\pm30$ wt.-%, $35\pm27.5$ wt.-%, $35\pm25$ wt.-%, $35\pm22.5$ wt.-%, $35\pm20$ wt.-%, $35\pm17.5$ wt.-%, $35\pm15$ wt.-%, $35\pm12.5$ wt.-%, $35\pm10$ wt.-%, $35\pm7.5$ wt.-%, $35\pm5$ wt.-%, $40\pm37.5$ wt.-%, $40\pm35$ wt.-%, $40\pm32.5$ wt.-%, $40\pm30$ wt.-%, $40\pm27.5$ wt.-%, $40\pm25$ wt.-%, $40\pm22.5$ wt.-%, $40\pm20$ wt.-%, $40\pm17.5$ wt.-%, $40\pm15$ wt.-%, $40\pm12.5$ wt.-%, $40\pm10$ wt.-%, $40\pm7.5$ wt.-%, $40\pm5$ wt.-%, $45\pm42.5$ wt.-%, $45\pm40$ wt.-%, $45\pm37.5$ wt.-%, $45\pm35$ wt.-%, $45\pm32.5$ wt.-%, $45\pm30$ wt.-%, $45\pm27.5$ wt.-%, $45\pm25$ wt.-%, $45\pm22.5$ wt.-%, $45\pm20$ wt.-%, $45\pm17.5$ wt.-%, $45\pm15$ wt.-%, $45\pm12.5$ wt.-%, $45\pm10$ wt.-%, $45\pm7.5$ wt.-%, $45\pm5$ wt.-%, $50\pm47.5$ wt.-%, $50\pm45$ wt.-%, $50\pm42.5$ wt.-%, $50\pm40$ wt.-%, $50\pm37.5$ wt.-%, $50\pm35$ wt.-%, $50\pm32.5$ wt.-%, $50\pm30$ wt.-%, $50\pm27.5$ wt.-%, $50\pm25$ wt.-%, $50\pm22.5$ wt.-%, $50\pm20$ wt.-%, $50\pm17.5$ wt.-%, $50\pm15$ wt.-%, $50\pm12.5$ wt.-%, $50\pm10$ wt.-%, $50\pm7.5$ wt.-%, $50\pm5$ wt.-%, $55\pm42.5$ wt.-%, $55\pm40$ wt.-%, $55\pm37.5$ wt.-%, $55\pm35$ wt.-%, $55\pm32.5$ wt.-%, $55\pm30$ wt.-%, $55\pm27.5$ wt.-%, $55\pm25$ wt.-%, $55\pm22.5$ wt.-%, $55\pm20$ wt.-%, $55\pm17.5$ wt.-%, $55\pm15$ wt.-%, $55\pm12.5$ wt.-%, $55\pm10$ wt.-%, $55\pm7.5$ wt.-%, $55\pm5$ wt.-%, $60\pm37.5$ wt.-%, $60\pm35$ wt.-%, $60\pm32.5$ wt.-%, $60\pm30$ wt.-%, $60\pm27.5$ wt.-%, $60\pm25$ wt.-%, $60\pm22.5$ wt.-%, $60\pm20$ wt.-%, $60\pm17.5$ wt.-%, $60\pm15$ wt.-%, $60\pm12.5$ wt.-%, $60\pm10$ wt.-%, $60\pm7.5$ wt.-%, $60\pm5$ wt.-%, $65\pm32.5$ wt.-%, $65\pm30$ wt.-%, $65\pm27.5$ wt.-%, $65\pm25$ wt.-%, $65\pm22.5$ wt.-%, $65\pm20$ wt.-%, $65\pm17.5$ wt.-%, $65\pm15$ wt.-%, $65\pm12.5$ wt.-%, $65\pm10$ wt.-%, $65\pm7.5$ wt.-%, $65\pm5$ wt.-%, $70\pm27.5$ wt.-%, $70\pm25$ wt.-%, $70\pm22.5$ wt.-%, $70\pm20$ wt.-%, $70\pm17.5$ wt.-%, $70\pm15$ wt.-%, $70\pm12.5$ wt.-%, $70\pm10$ wt.-%, $70\pm7.5$ wt.-%, $70\pm5$ wt.-%, $75\pm22.5$ wt.-%, $75\pm20$ wt.-%, $75\pm17.5$ wt.-%, $75\pm15$ wt.-%, $75\pm12.5$ wt.-%, $75\pm10$ wt.-%, $75\pm7.5$ wt.-%, $75\pm5$ wt.-%, $80\pm17.5$ wt.-%, $80\pm15$ wt.-%, $80\pm12.5$ wt.-%, $80\pm10$ wt.-%, $80\pm7.5$ wt.-%, $80\pm5$ wt.-%, $85\pm12.5$ wt.-%, $85\pm10$ wt.-%, $85\pm7.5$ wt.-%, $85\pm5$ wt.-%, $90\pm7.5$ wt.-%, or $90\pm5$ wt.-%, relative to the total weight of the composition.

The carbohydrate composition according to the invention is caramelized, i.e. has been subjected to caramelization.

Caramelization has an important influence on color and flavor. Caramelization is a non-enzymatic browning reaction where water is removed from a sugar followed by isomerization and polymerization. The caramelization process involves a complex series of chemical reactions. When e.g. disaccharides are employed as starting material, caramelization involves decomposition into monosaccharides followed by condensation wherein the individual sugars lose water and react with each other. A typical condensation product or intermediate is difructose-anhydride. Further, aldoses are isomerized to ketoses and vice versa, followed by further dehydration reactions. Furthermore, a series of reactions takes place including fragmentations, which are essential to the final flavor, and polymerizations, which are essential to the final color. Thus, the caramelized carbohydrate composition according to the invention typically comprises a complex mixture of various high molecular weight components.

Preferably, the carbohydrate composition according to the invention comprises caramelization products which include but are not limited to one or more ingredients selected from the group consisting of caramelans ($C_{24}H_{35}O_{18}$), caramelens ($C_{36}H_{50}O_{25}$), caramelins ($C_{125}H_{188}O_{80}$), and (other) caramel flavors. Preferred (other) caramel falvors are selected from the group consisting of diacetyl, hydroxymethylfurfural (HMF), hydroxyacetylfuran (HAF), hydroxydimethylfuranone (HDF), dihydroxydimethylfuranone (DDF), maltol and hydroxymaltol. For the purpose of the specification, these ingredients are generically referred to as "caramelization products". The content of these caramelization products that qualify the carbohydrate composition as being caramelized is not particularly limited.

Typically, the content of caramelization products is not more than 10 wt.-%, preferably not more than 5 wt.-%, relative to the total weight of the composition. In a preferred embodiment, for the purpose of the specification, percent values related to the overall content of all carbohydrates in the composition include caramelization products.

Preferably, the composition according to the invention comprises not more than 8 ppmw, not more than 7 ppmw, not more than 6 ppmw, not more than 5 ppmw, not more than 4 ppmw, not more than 3 ppmw, or not more than 2 ppmw 5-(hydroxymethyl)furfural (HMF), relative to the total content of all carbohydrates in the composition.

As component (i), the composition according to the invention comprises at least one common D-aldohexose selected from the group consisting of D-glucose, D-mannose, and D-galactose.

The composition according to the invention may comprise only a single common D-aldohexose selected from the group consisting of D-glucose, D-mannose, and D-galactose, i.e.

- D-glucose, but essentially neither D-mannose nor D-galactose; or

- D-mannose, but essentially neither D-glucose nor D-galactose; or

- D-galactose, but essentially neither D-glucose nor D-mannose.

For the purpose of the specification, "common" preferably means that the hexose is easily and ubiquitously available and can be isolated from various natural sources by effective and economic methods. The term is particularly used to distinguish "common" hexoses from "rare" hexoses, which in turn are not so easily and ubiquitous available and cannot be isolated from various natural sources by so effective and so economic methods. However, neither the term "common" nor the term "rare" is to be construed in a limiting meaning.

For the purpose of the specification, "essentially no" preferably means that the content is below 0.1 wt.-%, more preferably below 0.05 wt.-%, most preferably 0.01 wt.-%, relative to the total weight of the composition.

In a preferred embodiment, the composition according to the invention comprises at least two common D-aldohexoses selected from the group consisting of D-glucose, D-mannose, and D-galactose, i.e.

- D-glucose and D-mannose; or

- D-mannose and D-galactose; or

- D-glucose and D-galactose.

In another preferred embodiment, the composition according to the invention comprises exactly two common D-aldohexoses selected from the group consisting of D-glucose, D-mannose, and D-galactose, but not the third of said common D-aldohexoses, i.e.

- D-glucose and D-mannose, but essentially no D-galactose; or

- D-mannose and D-galactose, but essentially no D-glucose; or

- D-glucose and D-galactose, but essentially no D-mannose.

The presence of the two common D-aldohexoses D-glucose and D-mannose is particularly preferred, whereas the composition preferably contains essentially no D-galactose.

In still another preferred embodiment, the composition according to the invention comprises all three common D-aldohexoses, i.e. D-glucose, D-mannose, and D-galactose.

The content of said at least one common D-aldohexose is at least 0.1 wt.-%, relative to the total content of all carbohydrates in the composition. This content only refers to a single one of said common D-aldohexoses. Thus, if the composition according to the invention comprises two or three of said common D-aldohexoses, the requirement is satisfied when the content of any one of said common D-aldohexoses is within the defined range.

Preferably, the content of said at least one common D-aldohexose is at least 1.0 wt.-%, more preferably at least 5.0 wt.-%, still more preferably at least 7.5 wt.-%, yet more preferably at least 10 wt.-%, even more preferably at least 12.5 wt.-%, most preferably at least 15 wt.-%, and in particular at least 20 wt.-%, relative to the total content of all carbohydrates in the composition.

Preferably, the content of said at least one common D-aldohexose is at most 65 wt.-%, at most 60 wt.-%, or at most 55 wt.-%, more preferably at most 50 wt.-%, still more preferably at most 45 wt.-%, yet more preferably at most 40 wt.-%, most preferably at most 35 wt.-%, and in particular at most 30 wt.-%, relative to the total content of all carbohydrates in the composition.

In preferred embodiments, the content of said at least one common D-aldohexose is within the range of 5±2.5 wt.-%, 10±7.5 wt.-%, 10±5 wt.-%, 15±12.5 wt.-%, 15±10 wt.-%, 15±7.5 wt.-%, 15±5 wt.-%, 20±17.5 wt.-%, 20±15 wt.-%, 20±12.5 wt.-%, 20±10 wt.-%, 20±7.5 wt.-%, 20±5 wt.-%, 25±22.5 wt.-%, 25±20 wt.-%, 25±17.5 wt.-%, 25±15 wt.-%, 25±12.5 wt.-%, 25±10 wt.-%, 25±7.5 wt.-%, 25±5 wt.-%, 30±25 wt.-%, 30±22.5 wt.-%, 30±20 wt.-%, 30±17.5 wt.-%, 30±15 wt.-%, 30±12.5 wt.-%, 30±10 wt.-%, 30±7.5 wt.-%, 30±5 wt.-%, 35±20 wt.-%, 35±17.5 wt.-%, 35±15 wt.-%, 35±12.5 wt.-%, 35±10 wt.-%, 35±7.5 wt.-%, 35±5 wt.-%, 40±15 wt.-%, 40±12.5 wt.-%, 40±10 wt.-%, 40±7.5 wt.-%, 40±5 wt.-%, 45±10 wt.-%, 45±7.5 wt.-%, 45±5 wt.-%, or 50±5 wt.-%, relative to the total content of all carbohydrates in the composition.

Preferably, the composition according to the invention comprises D-glucose and the content of D-glucose is at least 1.0 wt.-%, more preferably at least 5.0 wt.-%, still more preferably at least 7.5 wt.-%, yet more preferably at least 10 wt.-%, even more preferably at least 12.5 wt.-%, most preferably at least 15 wt.-%, and in particular at least 20 wt.-%, relative to the total content of all carbohydrates in the composition.

Preferably, the composition according to the invention comprises D-glucose and the content of D-glucose is at most 65 wt.-%, at most 60 wt.-%, at most 55 wt.-%, or at most 50 wt.-%, still more preferably at most 45 wt.-%, yet more preferably at most 40 wt.-%, most preferably at most 35 wt.-%, and in particular at most 30 wt.-%, relative to the total content of all carbohydrates in the composition.

In preferred embodiments, the composition according to the invention comprises D-glucose and the content of D-glucose is within the range of 5±2.5 wt.-%, 10±7.5 wt.-%, 10±5 wt.-%, 15±12.5 wt.-%, 15±10 wt.-%, 15±7.5 wt.-%, 15±5 wt.-%, 20±17.5 wt.-%, 20±15 wt.-%, 20±12.5 wt.-%, 20±10 wt.-%, 20±7.5 wt.-%, 20±5 wt.-%, 25±22.5 wt.-%, 25±20 wt.-%, 25±17.5 wt.-%, 25±15 wt.-%, 25±12.5 wt.-%, 25±10 wt.-%, 25±7.5 wt.-%, 25±5 wt.-%, 30±25 wt.-%, 30±22.5 wt.-%, 30±20 wt.-%, 30±17.5 wt.-%, 30±15 wt.-%, 30±12.5 wt.-%, 30±10 wt.-%, 30±7.5 wt.-%, 30±5 wt.-%, 35±20 wt.-%, 35±17.5 wt.-%, 35±15 wt.-%, 35±12.5 wt.-%, 35±10 wt.-%, 35±7.5 wt.-%, 35±5 wt.-%, 40±15 wt.-%, 40±12.5 wt.-%, 40±10 wt.-%, 40±7.5 wt.-%, 40±5 wt.-%, 45±10 wt.-%, 45±7.5 wt.-%, 45±5 wt.-%, or 50±5 wt.-%, relative to the total content of all carbohydrates in the composition.

Preferably, the composition according to the invention comprises D-mannose and the content of D-mannose is at least 1.0 wt.-%, more preferably at least 5.0 wt.-%, still more preferably at least 7.5 wt.-%, yet more preferably at least 10 wt.-%, even more preferably at least 12.5 wt.-%, most preferably at least 15 wt.-%, and in particular at least 20 wt.-%, relative to the total content of all carbohydrates in the composition.

Preferably, the composition according to the invention comprises D-mannose and the content of D-mannose is at most 65 wt.-%, at most 60 wt.-%, at most 55 wt.-%, or at most 50 wt.-%, still more preferably at most 45 wt.-%, yet more preferably at most 40 wt.-%, most preferably at most 35 wt.-%, and in particular at most 30 wt.-%, relative to the total content of all carbohydrates in the composition.

In preferred embodiments, the composition according to the invention comprises D-mannose and the content of D-mannose is within the range of 5±2.5 wt.-%, 10±7.5 wt.-%, 10±5 wt.-%, 15±12.5 wt.-%, 15±10 wt.-%, 15±7.5 wt.-%, 15±5 wt.-%, 20±17.5 wt.-%, 20±15 wt.-%, 20±12.5 wt.-%, 20±10 wt.-%, 20±7.5 wt.-%, 20±5 wt.-%, 25±22.5 wt.-%, 25±20 wt.-%, 25±17.5 wt.-%, 25±15 wt.-%, 25±12.5 wt.-%, 25±10 wt.-%, 25±7.5 wt.-%, 25±5 wt.-%, 30±25 wt.-%, 30±22.5 wt.-%, 30±20 wt.-%, 30±17.5 wt.-%, 30±15 wt.-%, 30±12.5 wt.-%, 30±10 wt.-%, 30±7.5 wt.-%, 30±5 wt.-%, 35±20 wt.-%, 35±17.5 wt.-%, 35±15 wt.-%, 35±12.5 wt.-%, 35±10 wt.-%, 35±7.5 wt.-%, 35±5 wt.-%, 40±15 wt.-%, 40±12.5 wt.-%, 40±10 wt.-%, 40±7.5 wt.-%, 40±5 wt.-%, 45±10 wt.-%, 45±7.5 wt.-%, 45±5 wt.-%, or 50±5 wt.-%, relative to the total content of all carbohydrates in the composition.

When the composition according to the invention comprises more than a single common D-aldohexose, the overall content of all common D-aldohexoses that are comprised in the composition preferably is at least 2.5 wt.-%, more preferably at least 5.0 wt.-%, still more preferably at least 7.5 wt.-%, yet more preferably at least 10 wt.-%, most preferably at least 15 wt.-%, and in particular at least 20 wt.-%, relative to the total content of all carbohydrates in the composition.

When the composition according to the invention comprises more than a single common D-aldohexose, the overall content of all common D-aldohexoses that are comprised in the composition preferably is at most 95 wt.-%, still more preferably at most 90 wt.-%, yet more preferably at most 85 wt.-%, most preferably at most 80 wt.-%, and in particular at most 75 wt.-%, relative to the total content of all carbohydrates in the composition.

When the composition according to the invention comprises more than a single common D-aldohexose, the overall content of all common D-aldohexoses that are comprised in the composition preferably is within the range of 5±2.5 wt.-%, 10±7.5 wt.-%, 10±5 wt.-%, 15±12.5 wt.-%, 15±10 wt.-%, 15±7.5 wt.-%, 15±5 wt.-%, 20±17.5 wt.-%, 20±15 wt.-%, 20±12.5 wt.-%, 20±10 wt.-%, 20±7.5 wt.-%, 20±5 wt.-%, 25±22.5 wt.-%, 25±20 wt.-%, 25±17.5 wt.-%, 25±15 wt.-%, 25±12.5 wt.-%, 25±10 wt.-%, 25±7.5 wt.-%, 25±5 wt.-%, 30±27.5 wt.-%, 30±25 wt.-%, 30±22.5 wt.-%, 30±20 wt.-%, 30±17.5 wt.-%, 30±15 wt.-%, 30±12.5 wt.-%, 30±10 wt.-%, 30±7.5 wt.-%, 30±5 wt.-%, 35±32.5 wt.-%, 35±30 wt.-%, 35±27.5 wt.-%, 35±25 wt.-%, 35±22.5 wt.-%, 35±20 wt.-%, 35±17.5 wt.-%, 35±15 wt.-%, 35±12.5 wt.-%, 35±10 wt.-%, 35±7.5 wt.-%, 35±5 wt.-%, 40±37.5 wt.-%, 40±35 wt.-%, 40±32.5 wt.-%, 40±30 wt.-%, 40±27.5 wt.-%, 40±25 wt.-%, 40±22.5 wt.-%, 40±20 wt.-%, 40±17.5 wt.-%, 40±15 wt.-%, 40±12.5 wt.-%, 40±10 wt.-%, 40±7.5 wt.-%, 40±5 wt.-%, 45±42.5 wt.-%, 45±40 wt.-%, 45±37.5 wt.-%, 45±35 wt.-%, 45±32.5 wt.-%, 45±30 wt.-%, 45±27.5 wt.-%, 45±25 wt.-%, 45±22.5 wt.-%, 45±20 wt.-%, 45±17.5 wt.-%, 45±15 wt.-%, 45±12.5 wt.-%, 45±10 wt.-%, 45±7.5 wt.-%, 45±5 wt.-%, 50±47.5 wt.-%, 50±45 wt.-%, 50±42.5 wt.-%, 50±40 wt.-%, 50±37.5 wt.-%, 50±35 wt.-%, 50±32.5 wt.-%, 50±30 wt.-%, 50±27.5 wt.-%, 50±25 wt.-%, 50±22.5 wt.-%, 50±20 wt.-%, 50±17.5 wt.-%, 50±15 wt.-%, 50±12.5 wt.-%, 50±10 wt.-%, 50±7.5 wt.-%, 50±5 wt.-%, 55±42.5 wt.-%, 55±40 wt.-%, 55±37.5 wt.-%, 55±35 wt.-%, 55±32.5 wt.-%, 55±30 wt.-%, 55±27.5 wt.-%, 55±25 wt.-%, 55±22.5 wt.-%, 55±20 wt.-%, 55±17.5 wt.-%, 55±15 wt.-%, 55±12.5 wt.-%, 55±10 wt.-%, 55±7.5 wt.-%, 55±5 wt.-%, 60±37.5 wt.-%, 60±35 wt.-%, 60±32.5 wt.-%, 60±30 wt.-%, 60±27.5 wt.-%, 60±25 wt.-%, 60±22.5 wt.-%, 60±20 wt.-%, 60±17.5 wt.-%, 60±15 wt.-%, 60±12.5 wt.-%, 60±10 wt.-%, 60±7.5 wt.-%, 60±5 wt.-%, 65±32.5 wt.-%, 65±30 wt.-%, 65±27.5 wt.-%, 65±25 wt.-%, 65±22.5 wt.-%, 65±20 wt.-%, 65±17.5 wt.-%, 65±15 wt.-%, 65±12.5 wt.-%, 65±10 wt.-%, 65±7.5 wt.-%, 65±5 wt.-%, 70±27.5 wt.-%, 70±25 wt.-%, 70±22.5 wt.-%, 70±20 wt.-%, 70±17.5 wt.-%, 70±15 wt.-%, 70±12.5 wt.-%, 70±10 wt.-%, 70±7.5 wt.-%, 70±5 wt.-%, 75±22.5 wt.-%, 75±20 wt.-%, 75±17.5 wt.-%, 75±15 wt.-%, 75±12.5 wt.-%, 75±10 wt.-%, 75±7.5 wt.-%, 75±5 wt.-%, 80±17.5 wt.-%, 80±15 wt.-%, 80±12.5 wt.-%, 80±10 wt.-%, 80±7.5 wt.-%, 80±5 wt.-%, 85±12.5 wt.-%, 85±10 wt.-%, 85±7.5 wt.-%, 85±5 wt.-%, 90±7.5 wt.-%, or 90±5 wt.-%, relative to the total content of all carbohydrates in the composition.

When the composition according to the invention comprises two common D-aldohexoses, the combination of D-glucose and D-mannose is particularly preferred, whereas the content of D-glucose may be greater than the content D-mannose, the content of D-mannose may be greater than the content of D-glucose, or D-mannose and D-glucose may have substantially the same content. Preferably, the content of D-glucose is greater than the content of D-mannose and the relative weight ratio of D-glucose to D-mannose is within the range of from 100:1 to 1.1:1, more preferably 50:1 to 1.5:1, and in particular 10:1 to 2:1.

Preferred ranges for the contents of D-glucose and D-mannose in the composition according to the invention are summarized as embodiments $T^1$ to $T^{12}$ in the table here below, wherein all percentages are relative to the total content of all carbohydrates in the composition:

| [wt.-%] | $T^1$ | $T^2$ | $T^3$ | $T^4$ | $T^5$ | $T^6$ |
|---|---|---|---|---|---|---|
| D-glucose | 0.1-55 | 0.5-55 | 1.0-55 | 5.0-55 | 7.5-55 | 10-55 |
| D-mannose | 0.1-40 | 0.5-37.5 | 0.5-35 | 0.5-32.5 | 0.5-30 | 0.5-27.5 |
| | $T^7$ | $T^6$ | $T^9$ | $T^{10}$ | $T^{11}$ | $T^{12}$ |
| D-glucose | 12.5-52.5 | 15-50 | 17.5-47.5 | 20-45 | 22.5-42.5 | 20-40 |
| D-mannose | 1.0-25 | 1.5-22.5 | 2.0-20 | 2.5-17.5 | 3.0-15 | 3.5-12.5 |

As component (ii), the composition according to the invention comprises at least one common D-ketohexose selected from the group consisting of D-fructose and D-sorbose. Ketohexoses according to the invention are 2-ketohexoses.

The composition according to the invention may comprise only a single common D-ketohexose selected from the group consisting of D-fructose and D-sorbose, i.e.

- D-fructose. but essentially no D-sorbose; or

- D-sorbose, but essentially no D-fructose.

The presence of the single common D-ketohexose D-fructose is particularly preferred, whereas the composition preferably contains essentially no D-sorbose.

In another preferred embodiment, the composition according to the invention comprises both common D-ketohexoses, i.e. D-fructose and D-sorbose.

**EP 3 138 413 A1**

The content of said at least one common D-ketohexose is at least 0.1, relative to the total content of all carbohydrates in the composition. This content only refers to a single one of said common D-ketohexoses. Thus, if the composition according to the invention comprises both of said common D-ketohexoses, the requirement is satisfied when the content of any one of said common D-ketohexoses is within the defined range.

Preferably, the content of said at least one common D-ketohexose is at least 1.0 wt.-%, more preferably at least 5.0 wt.-%, still more preferably at least 7.5 wt.-%, yet more preferably at least 10 wt.-%, even more preferably at least 12.5 wt.-%, most preferably at least 15 wt.-%, and in particular at least 20 wt.-%, relative to the total content of all carbohydrates in the composition.

Preferably, the content of said at least one common D-ketohexose is at most 95 wt.-%, still more preferably at most 90 wt.-%, yet more preferably at most 85 wt.-%, most preferably at most 80 wt.-%, and in particular at most 75 wt.-%, relative to the total content of all carbohydrates in the composition.

In preferred embodiments, the content of said at least one common D-ketohexose is within the range of $5\pm2.5$ wt.-%, $10\pm7.5$ wt.-%, $10\pm5$ wt.-%, $15\pm12.5$ wt.-%, $15\pm10$ wt.-%, $15\pm7.5$ wt.-%, $15\pm5$ wt.-%, $20\pm17.5$ wt.-%, $20\pm15$ wt.-%, $20\pm12.5$ wt.-%, $20\pm10$ wt.-%, $20\pm7.5$ wt.-%, $20\pm5$ wt.-%, $25\pm22.5$ wt.-%, $25\pm20$ wt.-%, $25\pm17.5$ wt.-%, $25\pm15$ wt.-%, $25\pm12.5$ wt.-%, $25\pm10$ wt.-%, $25\pm7.5$ wt.-%, $25\pm5$ wt.-%, $30\pm27.5$ wt.-%, $30\pm25$ wt.-%, $30\pm22.5$ wt.-%, $30\pm20$ wt.-%, $30\pm17.5$ wt.-%, $30\pm15$ wt.-%, $30\pm12.5$ wt.-%, $30\pm10$ wt.-%, $30\pm7.5$ wt.-%, $30\pm5$ wt.-%, $35\pm32.5$ wt.-%, $35\pm30$ wt.-%, $35\pm27.5$ wt.-%, $35\pm25$ wt.-%, $35\pm22.5$ wt.-%, $35\pm20$ wt.-%, $35\pm17.5$ wt.-%, $35\pm15$ wt.-%, $35\pm12.5$ wt.-%, $35\pm10$ wt.-%, $35\pm7.5$ wt.-%, $35\pm5$ wt.-%, $40\pm37.5$ wt.-%, $40\pm35$ wt.-%, $40\pm32.5$ wt.-%, $40\pm30$ wt.-%, $40\pm27.5$ wt.-%, $40\pm25$ wt.-%, $40\pm22.5$ wt.-%, $40\pm20$ wt.-%, $40\pm17.5$ wt.-%, $40\pm15$ wt.-%, $40\pm12.5$ wt.-%, $40\pm10$ wt.-%, $40\pm7.5$ wt.-%, $40\pm5$ wt.-%, $45\pm42.5$ wt.-%, $45\pm40$ wt.-%, $45\pm37.5$ wt.-%, $45\pm35$ wt.-%, $45\pm32.5$ wt.-%, $45\pm30$ wt.-%, $45\pm27.5$ wt.-%, $45\pm25$ wt.-%, $45\pm22.5$ wt.-%, $45\pm20$ wt.-%, $45\pm17.5$ wt.-%, $45\pm15$ wt.-%, $45\pm12.5$ wt.-%, $45\pm10$ wt.-%, $45\pm7.5$ wt.-%, $45\pm5$ wt.-%, $50\pm47.5$ wt.-%, $50\pm45$ wt.-%, $50\pm42.5$ wt.-%, $50\pm40$ wt.-%, $50\pm37.5$ wt.-%, $50\pm35$ wt.-%, $50\pm32.5$ wt.-%, $50\pm30$ wt.-%, $50\pm27.5$ wt.-%, $50\pm25$ wt.-%, $50\pm22.5$ wt.-%, $50\pm20$ wt.-%, $50\pm17.5$ wt.-%, $50\pm15$ wt.-%, $50\pm12.5$ wt.-%, $50\pm10$ wt.-%, $50\pm7.5$ wt.-%, $50\pm5$ wt.-%, $55\pm42.5$ wt.-%, $55\pm40$ wt.-%, $55\pm37.5$ wt.-%, $55\pm35$ wt.-%, $55\pm32.5$ wt.-%, $55\pm30$ wt.-%, $55\pm27.5$ wt.-%, $55\pm25$ wt.-%, $55\pm22.5$ wt.-%, $55\pm20$ wt.-%, $55\pm17.5$ wt.-%, $55\pm15$ wt.-%, $55\pm12.5$ wt.-%, $55\pm10$ wt.-%, $55\pm7.5$ wt.-%, $55\pm5$ wt.-%, $60\pm37.5$ wt.-%, $60\pm35$ wt.-%, $60\pm32.5$ wt.-%, $60\pm30$ wt.-%, $60\pm27.5$ wt.-%, $60\pm25$ wt.-%, $60\pm22.5$ wt.-%, $60\pm20$ wt.-%, $60\pm17.5$ wt.-%, $60\pm15$ wt.-%, $60\pm12.5$ wt.-%, $60\pm10$ wt.-%, $60\pm7.5$ wt.-%, $60\pm5$ wt.-%, $65\pm32.5$ wt.-%, $65\pm30$ wt.-%, $65\pm27.5$ wt.-%, $65\pm25$ wt.-%, $65\pm22.5$ wt.-%, $65\pm20$ wt.-%, $65\pm17.5$ wt.-%, $65\pm15$ wt.-%, $65\pm12.5$ wt.-%, $65\pm10$ wt.-%, $65\pm7.5$ wt.-%, $65\pm5$ wt.-%, $70\pm27.5$ wt.-%, $70\pm25$ wt.-%, $70\pm22.5$ wt.-%, $70\pm20$ wt.-%, $70\pm17.5$ wt.-%, $70\pm15$ wt.-%, $70\pm12.5$ wt.-%, $70\pm10$ wt.-%, $70\pm7.5$ wt.-%, $70\pm5$ wt.-%, $75\pm22.5$ wt.-%, $75\pm20$ wt.-%, $75\pm17.5$ wt.-%, $75\pm15$ wt.-%, $75\pm12.5$ wt.-%, $75\pm10$ wt.-%, $75\pm7.5$ wt.-%, $75\pm5$ wt.-%, $80\pm17.5$ wt.-%, $80\pm15$ wt.-%, $80\pm12.5$ wt.-%, $80\pm10$ wt.-%, $80\pm7.5$ wt.-%, $80\pm5$ wt.-%, $85\pm12.5$ wt.-%, $85\pm10$ wt.-%, $85\pm7.5$ wt.-%, $85\pm5$ wt.-%, $90\pm7.5$ wt.-%, or $90\pm5$ wt.-%, relative to the total content of all carbohydrates in the composition.

Preferably, the composition according to the invention comprises D-fructose and the content of D-fructose is at least 1.0 wt.-%, more preferably at least 5.0 wt.-%, still more preferably at least 7.5 wt.-%, yet more preferably at least 10 wt.-%, even more preferably at least 12.5 wt.-%, most preferably at least 15 wt.-%, and in particular at least 20 wt.-%, relative to the total content of all carbohydrates in the composition.

Preferably, the composition according to the invention comprises D-fructose and the content of D-fructose is at most 95 wt.-%, still more preferably at most 90 wt.-%, yet more preferably at most 85 wt.-%, most preferably at most 80 wt.-%, and in particular at most 75 wt.-%, relative to the total content of all carbohydrates in the composition.

In a preferred embodiment, the content of D-fructose in the composition according to the invention is less than 25.8 wt.-%, relative to the total content of all carbohydrates in the composition. In another preferred embodiment, the content of D-fructose in the composition according to the invention is more than 25.11 wt.-%, relative to the total content of all carbohydrates in the composition.

In preferred embodiments, the composition according to the invention comprises D-fructose and the content of D-fructose is within the range of $5\pm2.5$ wt.-%, $10\pm7.5$ wt.-%, $10\pm5$ wt.-%, $15\pm12.5$ wt.-%, $15\pm10$ wt.-%, $15\pm7.5$ wt.-%, $15\pm5$ wt.-%, $20\pm17.5$ wt.-%, $20\pm15$ wt.-%, $20\pm12.5$ wt.-%, $20\pm10$ wt.-%, $20\pm7.5$ wt.-%, $20\pm5$ wt.-%, $25\pm22.5$ wt.-%, $25\pm20$ wt.-%, $25\pm17.5$ wt.-%, $25\pm15$ wt.-%, $25\pm12.5$ wt.-%, $25\pm10$ wt.-%, $25\pm7.5$ wt.-%, $25\pm5$ wt.-%, $30\pm27.5$ wt.-%, $30\pm25$ wt.-%, $30\pm22.5$ wt.-%, $30\pm20$ wt.-%, $30\pm17.5$ wt.-%, $30\pm15$ wt.-%, $30\pm12.5$ wt.-%, $30\pm10$ wt.-%, $30\pm7.5$ wt.-%, $30\pm5$ wt.-%, $35\pm32.5$ wt.-%, $35\pm30$ wt.-%, $35\pm27.5$ wt.-%, $35\pm25$ wt.-%, $35\pm22.5$ wt.-%, $35\pm20$ wt.-%, $35\pm17.5$ wt.-%, $35\pm15$ wt.-%, $35\pm12.5$ wt.-%, $35\pm10$ wt.-%, $35\pm7.5$ wt.-%, $35\pm5$ wt.-%, $40\pm37.5$ wt.-%, $40\pm35$ wt.-%, $40\pm32.5$ wt.-%, $40\pm30$ wt.-%, $40\pm27.5$ wt.-%, $40\pm25$ wt.-%, $40\pm22.5$ wt.-%, $40\pm20$ wt.-%, $40\pm17.5$ wt.-%, $40\pm15$ wt.-%, $40\pm12.5$ wt.-%, $40\pm10$ wt.-%, $40\pm7.5$ wt.-%, $40\pm5$ wt.-%, $45\pm42.5$ wt.-%, $45\pm40$ wt.-%, $45\pm37.5$ wt.-%, $45\pm35$ wt.-%, $45\pm32.5$ wt.-%, $45\pm30$ wt.-%, $45\pm27.5$ wt.-%, $45\pm25$ wt.-%, $45\pm22.5$ wt.-%, $45\pm20$ wt.-%, $45\pm17.5$ wt.-%, $45\pm15$ wt.-%, $45\pm12.5$ wt.-%, $45\pm10$ wt.-%, $45\pm7.5$ wt.-%, $45\pm5$ wt.-%, $50\pm47.5$ wt.-%, $50\pm45$ wt.-%, $50\pm42.5$ wt.-%, $50\pm40$ wt.-%, $50\pm37.5$ wt.-%, $50\pm35$ wt.-%, $50\pm32.5$ wt.-%, $50\pm30$ wt.-%, $50\pm27.5$ wt.-%, $50\pm25$ wt.-%, $50\pm22.5$ wt.-%, $50\pm20$ wt.-%, $50\pm17.5$ wt.-%, $50\pm15$ wt.-%, $50\pm12.5$ wt.-%, $50\pm10$ wt.-%, $50\pm7.5$ wt.-%, $50\pm5$ wt.-%, $55\pm42.5$ wt.-

7

%, 55±40 wt.-%, 55±37.5 wt.-%, 55±35 wt.-%, 55±32.5 wt.-%, 55±30 wt.-%, 55±27.5 wt.-%, 55±25 wt.-%, 55±22.5 wt.-%, 55±20 wt.-%, 55±17.5 wt.-%, 55±15 wt.-%, 55±12.5 wt.-%, 55±10 wt.-%, 55±7.5 wt.-%, 55±5 wt.-%, 60±37.5 wt.-%, 60±35 wt.-%, 60±32.5 wt.-%, 60±30 wt.-%, 60±27.5 wt.-%, 60±25 wt.-%, 60±22.5 wt.-%, 60±20 wt.-%, 60±17.5 wt.-%, 60±15 wt.-%, 60±12.5 wt.-%, 60±10 wt.-%, 60±7.5 wt.-%, 60±5 wt.-%, 65±32.5 wt.-%, 65±30 wt.-%, 65±27.5 wt.-%, 65±25 wt.-%, 65±22.5 wt.-%, 65±20 wt.-%, 65±17.5 wt.-%, 65±15 wt.-%, 65±12.5 wt.-%, 65±10 wt.-%, 65±7.5 wt.-%, 65±5 wt.-%, 70±27.5 wt.-%, 70±25 wt.-%, 70±22.5 wt.-%, 70±20 wt.-%, 70±17.5 wt.-%, 70±15 wt.-%, 70±12.5 wt.-%, 70±10 wt.-%, 70±7.5 wt.-%, 70±5 wt.-%, 75±22.5 wt.-%, 75±20 wt.-%, 75±17.5 wt.-%, 75±15 wt.-%, 75±12.5 wt.-%, 75±10 wt.-%, 75±7.5 wt.-%, 75±5 wt.-%, 80±17.5 wt.-%, 80±15 wt.-%, 80±12.5 wt.-%, 80±10 wt.-%, 80±7.5 wt.-%, 80±5 wt.-%, 85±12.5 wt.-%, 85±10 wt.-%, 85±7.5 wt.-%, 85±5 wt.-%, 90±7.5 wt.-%, or 90±5 wt.-%, relative to the total content of all carbohydrates in the composition.

Preferably, the composition according to the invention comprises (i) the common D-aldohexose D-glucose in combination with (ii) the common D-ketohexose D-fructose, whereas the content of D-glucose may be greater than the content D-fructose, the content of D-fructose may be greater than the content of D-glucose, or D-fructose and D-glucose may have substantially the same content. According to this embodiment, the composition according to the invention preferably contains essentially no D-galactose and/or essentially no D-sorbose.

Preferred ranges for the contents of D-glucose and D-fructose in the composition according to the invention are summarized as embodiments $U^1$ to $U^{12}$ in the table here below, wherein all percentages are relative to the total content of all carbohydrates in the composition:

| [wt.-%] | $U^1$ | $U^2$ | $U^3$ | $U^4$ | $U^5$ | $U^6$ |
|---|---|---|---|---|---|---|
| D-glucose | 0.1-55 | 0.5-55 | 1.0-55 | 5.0-55 | 7.5-55 | 10-55 |
| D-fructose | 0.1-97.5 | 0.5-95 | 0.5-92.5 | 0.5-90 | 0.5-87.5 | 0.5-85 |
| | $U^7$ | $U^8$ | $U^9$ | $U^{10}$ | $U^{11}$ | $U^{12}$ |
| D-glucose | 12.5-52.5 | 15-50 | 17.5-47.5 | 20-45 | 22.5-42.5 | 20-40 |
| D-fructose | 1.0-80 | 2.5-77.5 | 5.0-75 | 7.5-72.5 | 10-70 | 12.5-67.5 |

Preferably, the composition according to the invention comprises (i) the two common D-aldohexoses D-glucose and D-mannose in combination with (ii) the common D-ketohexose D-fructose. According to this embodiment, the composition according to the invention preferably contains essentially no D-galactose and/or essentially no D-sorbose.

Preferably, the relative content of D-glucose, D-mannose and D-fructose follows one of the following orders: D-glucose > D-mannose > D-fructose; D-glucose > D-fructose > D-mannose; D-mannose > D-glucose > D-fructose; D-mannose > D-fructose > D-glucose; D-fructose > D-mannose > D-glucose; or D-fructose > D-glucose > D-mannose. The two embodiments D-glucose > D-fructose > D-mannose; and D-fructose > D-glucose > D-mannose are particularly preferred.

Preferably, the composition according to the invention comprises

- D-glucose, wherein the content of D-glucose is at least 0.1 wt.-%, relative to the total content of all carbohydrates in the composition;

- D-mannose, wherein the content of D-mannose is at least 0.1 wt.-%, relative to the total content of all carbohydrates in the composition; and

- D-fructose, wherein the content of D-fructose is at least 0.1 wt.-%, relative to the total content of all carbohydrates in the composition.

Preferred ranges for the contents of D-glucose, D-mannose and D-fructose in the composition according to the invention are summarized as embodiments $V^1$ to $V^{12}$ in the table here below, wherein all percentages are relative to the total content of all carbohydrates in the composition:

| [wt.-%] | $V^1$ | $V^2$ | $V^3$ | $V^4$ | $V^3$ | $V^6$ |
|---|---|---|---|---|---|---|
| D-glucose | 0.1-55 | 0.5-55 | 1.0-55 | 5.0-55 | 7.5-55 | 10-55 |
| D-mannose | 0.1-40 | 0.5-37.5 | 0.5-35 | 0.5-32.5 | 0.5-30 | 0.5-27.5 |
| D-fructose | 0.1-97.5 | 0.5-95 | 0.5-92.5 | 0.5-90 | 0.5-87.5 | 0.5-85 |

(continued)

|  | V⁷ | V⁸ | V⁹ | V¹⁰ | V¹¹ | V¹² |
|---|---|---|---|---|---|---|
| D-glucose | 12.5-52.5 | 15-50 | 17.5-47.5 | 20-45 | 22.5-42.5 | 20-40 |
| D-mannose | 1.0-25 | 1.5-22.5 | 2.0-20 | 2.5-17.5 | 3.0-15 | 3.5-12.5 |
| D-fructose | 1.0-80 | 2.5-77.5 | 5.0-75 | 7.5-72.5 | 10-70 | 12.5-67.5 |

As component (iii), the composition according to the invention comprises at least one rare hexose being

(a) a rare D-aldohexose selected from the group consisting of D-allose, D-altrose, D-gulose, D-idose, and D-talose; or

(b) a rare L-aldohexose selected from the group consisting of L-allose, L-altrose, L-glucose, L-mannose, L-gulose, L-idose, L-galactose, and L-talose; or

(c) a rare D-ketohexose selected from the group consisting of D-psicose and D-tagatose; or

(d) a rare L-ketohexose selected from the group consisting of L-psicose, L-sorbose, L-fructose, and L-tagatose.

For the purpose of the specification, the term "*rare hexose*" preferably comprises the specified rare D-aldohexoses, the rare specified L-aldohexoses, the specified rare D-ketohexoses (D-2-ketohexose), and the specified rare L-ketohexoses (L-2-ketohexose), but no additional rare hexoses, such as 3-ketohexoses.
For the purpose of the specification, the term "*rare D-aldohexose*" refers to a rare hexose selected from the group consisting of D-allose, D-altrose, D-gulose, D-idose, and D-talose.
For the purpose of the specification, the term "*rare L-aldohexose*" refers to a rare hexose selected from the group consisting of L-allose, L-altrose, L-glucose, L-mannose, L-gulose, L-idose, L-galactose, and L-talose.
For the purpose of the specification, the term "*rare D-ketohexose*" refers to a rare hexose selected from the group consisting of D-psicose and D-tagatose.
For the purpose of the specification, the term "*rare L-ketohexose*" refers to a rare hexose selected from the group consisting of L-psicose, L-sorbose, L-fructose, and L-tagatose.
The composition according to the invention may comprise only one or more rare hexoses selected from a single member of the group consisting of rare D-aldohexoses, rare L-aldohexoses, rare D-ketohexoses, and rare L-ketohexoses, i.e.

- one or more rare D-aldohexoses, but essentially neither any rare L-aldohexose, nor any rare D-ketohexose, nor any rare L-ketohexose; or

- one or more rare L-aldohexoses, but essentially neither any rare D-aldohexose, nor any rare D-ketohexose, nor any rare L-ketohexose; or

- one or more rare D-ketohexoses, but essentially neither any rare D-aldohexose, nor any rare L-aldohexose, nor any rare L-ketohexose; or

- one or more rare L-ketohexoses, but essentially neither any rare D-aldohexose, nor any rare L-aldohexose, nor any rare D-ketohexose.

In a preferred embodiment, the composition according to the invention comprises only a single rare hexose, i.e.

- a single rare D-aldohexose, but essentially neither any other rare D-aldohexose, nor any rare L-aldohexose, nor any rare D-ketohexose, nor any rare L-ketohexose; or

- a single rare L-aldohexose, but essentially neither any other rare L-aldohexose, nor any rare D-aldohexose, nor any rare D-ketohexose, nor any rare L-ketohexose; or

- a single rare D-ketohexose, but essentially neither any other rare D-ketohexose, nor any rare D-aldohexose, nor any rare L-aldohexose, nor any rare L-ketohexose; or

- a single rare L-ketohexose, but essentially neither any other rare L-ketohexose, nor any rare D-aldohexose, nor any rare L-aldohexose, nor any rare D-ketohexose.

The presence of the rare hexoses D-psicose, L-psicose, D-allose and/or L-allose is particularly preferred. D-psicose is particularly preferred.

It has been surprisingly found that D-psicose caramels (D-allulose caramels), i.e. caramels made from D-psicose or from compositions containing substantial amounts of D-psicose, have certain advantages compared to caramels made from other carbohydrates. It has been surprisingly found that the content of 5-hydroxymethylfurfural (HMF) in the product caramel can be influenced by selecting the carbohydrate that is employed as starting material. In particular, it has been surprisingly found that compared to D-glucose, D-fructose, sucrose, maltose and cellobiose, D-psicose exhibits the most pronounced tendency towards HMF-formation and color formation, respectively.

Further, it has been surprisingly found that D-psicose (D-allulose) exhibits prebiotic properties and thus can be used *inter alia* for rendering an edible composition such as a foodstuff or a beverage with prebiotic properties. Further, it has been surprisingly found that D-psicose has a sweetening capacity that is about 70% of that of sucrose but at the same time has no or nearly no physiological caloric value. Still further, it has been surprisingly found that D-psicose is not fermented by most microorganisms that are conventionally used in the production of fermented foodstuff, beverages and the like. Thus, in the presence of such microorganisms, D-psicose remains inert, i.e. storage stable. Accordingly, D-psicose can be regarded as a sweetener not exhibiting cariogenic properties. Yet further, it has been surprisingly found that D-psicose does not have a pronounced laxative effect. Furthermore, it has been surprisingly found that D-psicose undergoes Maillard reaction with a pronounced browning effect that is comparable to that of D-fructose. Thus, D-psicose is useful as a substitute of D-fructose, as some people tend to develop fructose intolerance.

In another preferred embodiment, the composition according to the invention comprises at least two rare hexoses (= binary combination of at least two rare hexoses not excluding the presence of further rare hexoses) independently selected from the group consisting of the rare D-aldohexoses, the rare L-aldohexoses, the rare D-ketohexoses, and the rare L-ketohexoses.

When said at least two rare hexoses are selected from the same group, i.e. both from the rare D-aldohexoses, or both from the rare L-aldohexoses, or both from the rare D-ketohexoses, or both from the rare L-ketohexoses, the following (homologous) binary combinations are preferred: $A^1A^2$, $A^1A^3$, $A^1A^4$, $A^1A^5$; $A^2A^3$, $A^2A^4$, $A^2A^5$; $A^3A^4$, $A^3A^5$; $A^4A^5$; $B^1B^2$, $B^1B^3$, $B^1B^4$, $B^1B^5$, $B^1B^6$, $B^1B^7$, $B^1B^8$; $B^2B^3$, $B^2B^4$, $B^2B^5$, $B^2B^6$, $B^2B^7$, $B^2B^8$; $B^3B^4$, $B^3B^5$, $B^3B^6$, $B^3B^7$, $B^3B^8$; $B^4B^5$, $B^4B^6$, $B^4B^7$, $B^4B^8$; $B^5B^6$, $B^5B^7$, $B^5B^8$; $B^6B^7$, $B^6B^8$; $B^7B^8$; $C^1C^2$; $D^1D^2$, $D^1D^3$, $D^1D^4$; $D^2D^3$, $D^2D^4$; or $D^3D^4$; wherein $A^1$ means D-allose, $A^2$ means D-altrose, $A^3$ means D-gulose, $A^2$ means D-idose, $A^5$ means D-talose, $B^1$ means L-allose, $B^2$ means L-altrose, $B^3$ means L-glucose, $B^4$ means L-mannose, $B^5$ means L-gulose, $B^6$ means L-idose, $B^7$ means L-galactose, $B^8$ means L-talose, $C^1$ means D-psicose, $C^2$ means D-tagatose, $D^1$ means L-psicose, $D^2$ means L-sorbose, $D^3$ means L-fructose, and $D^4$ means L-tagatose.

When said at least two rare hexoses are selected from different groups, the following (heterologous) binary combinations are preferred: $A^1B^1$, $A^2B^1$, $A^3B^1$, $A^4B^1$, $A^5B^1$; $A^1B^2$, $A^2B^2$, $A^3B^2$, $A^4B^2$, $A^5B^2$; $A^1B^3$, $A^2B^3$, $A^3B^3$, $A^4B^3$, $A^5B^3$; $A^1B^4$, $A^2B^4$, $A^3B^4$, $A^4B^4$, $A^5B^4$; $A^1B^5$, $A^2B^5$, $A^3B^5$, $A^4B^5$, $A^5B^5$; $A^1B^6$, $A^2B^6$, $A^3B^6$, $A^4B^6$, $A^5B^6$; $A^1B^7$, $A^2B^7$, $A^3B^7$, $A^4B^7$, $A^5B^7$; $A^1B^8$, $A^2B^8$, $A^3B^8$, $A^4B^8$, $A^5B^8$; $A^1C^1$, $A^1C^1$, $A^3C^1$, $A^4C^1$, $A^5C^1$; $A^1C^2$, $A^2C^2$, $A^3C^2$, $A^4C^2$, $A^5C^2$; $A^1D^1$, $A^2D^1$, $A^3D^1$, $A^4D^1$, $A^5D^1$; $A^1D^2$, $A^2D^2$, $A^3D^2$, $A^4D^2$, $A^5D^2$; $A^1D^3$, $A^2D^3$, $A^3D^3$, $A^4D^3$, $A^5D^3$; $A^1D^4$, $A^2D^4$, $A^3D^4$, $A^4D^4$, $A^5D^4$; $B^1C^1$, $B^2C^1$, $B^3C^1$, $B^4C^1$, $B^5C^1$, $B^6C^1$, $B^7C^1$, $B^8C^1$; $B^1C^2$, $B^2C^2$, $B^3C^2$, $B^4C^2$, $B^5C^2$, $B^6C^2$, $B^7C^2$, $B^8C^2$; $C^1D^1$, $C^2D^1$; $C^1D^2$, $C^2D^2$; $C^1D^3$, $C^2D^3$; $C^1D^4$, or $C^2D^4$; wherein $A^1$ means D-allose, $A^2$ means D-altrose, $A^3$ means D-gulose, $A^2$ means D-idose, $A^5$ means D-talose, $B^1$ means L-allose, $B^2$ means L-altrose, $B^3$ means L-glucose, $B^4$ means L-mannose, $B^5$ means L-gulose, $B^6$ means L-idose, $B^7$ means L-galactose, $B^8$ means L-talose, $C^1$ means D-psicose, $C^2$ means D-tagatose, $D^1$ means L-psicose, $D^2$ means L-sorbose, $D^3$ means L-fructose, and $D^4$ means L-tagatose.

In preferred embodiment, the composition according to the invention comprises exactly two rare hexoses independently selected from the group consisting of the rare D-aldohexose, the rare L-aldohexose, the rare D-ketohexose, and the rare L-ketohexose, but not any third rare hexose.

The presence of the rare hexoses D-psicose, L-psicose, D-allose and/or L-allose is particularly preferred, so that the following (homologous) binary combinations are preferred: $A^1A^2$, $A^1A^3$, $A^1A^4$, $A^1A^5$, $B^1B^2$, $B^1B^3$, $B^1B^4$, $B^1B^5$, $B^1B^6$, $B^1B^7$, $B^1B^8$, $C^1C^2$, $D^1D^2$, $D^1D^3$, and $D^1D^4$; wherein $A^1$ means D-allose, $A^2$ means D-altrose, $A^3$ means D-gulose, $A^4$ means D-idose, $A^5$ means D-talose, $B^1$ means L-allose, $B^2$ means L-altrose, $B^3$ means L-glucose, $B^4$ means L-mannose, $B^5$ means L-gulose, $B^6$ means L-idose, $B^7$ means L-galactose, $B^8$ means L-talose, $C^1$ means D-psicose, $C^2$ means D-tagatose, $D^1$ means L-psicose, $D^2$ means L-sorbose, $D^3$ means L-fructose, and $D^4$ means L-tagatose.

The presence of the rare hexoses D-psicose, L-psicose, D-allose and/or L-allose is particularly preferred, so that the following (heterologous) binary combinations are preferred: $A^1B^1$, $A^2B^1$, $A^3B^1$, $A^4B^1$, $A^5B^1$, $A^1B^2$, $A^1B^3$, $A^1B^4$, $A^1B^5$, $A^1B^6$, $A^1B^7$, $A^1B^8$, $A^1C^1$, $A^2C^1$, $A^3C^1$, $A^4C^1$, $A^5C^1$, $A^1C^2$, $A^1D^1$, $A^2D^1$, $A^3D^1$, $A^4D^1$, $A^5D^1$, $A^1D^2$, $A^1D^3$, $A^1D^4$, $B^1C^1$, $B^2C^1$, $B^3C^1$, $B^4C^1$, $B^5C^1$, $B^6C^1$, $B^7C^1$, $B^8C^1$, $B^1C^2$, $C^1D^1$, $C^2D^1$, $C^1D^2$, $C^1D^3$, and $C^1D^4$; wherein $A^1$ means D-allose, $A^2$ means D-altrose, $A^3$ means D-gulose, $A^4$ means D-idose, $A^5$ means D-talose, $B^1$ means L-allose, $B^2$ means L-altrose,

$B^3$ means L-glucose, $B^4$ means L-mannose, $B^5$ means L-gulose, $B^6$ means L-idose, $B^7$ means L-galactose, $B^8$ means L-talose, $C^1$ means D-psicose, $C^2$ means D-tagatose, $D^1$ means L-psicose, $D^2$ means L-sorbose, $D^3$ means L-fructose, and $D^4$ means L-tagatose.

The composition according to the invention preferably comprises a binary combination of two rare hexoses independently selected from the rare D-aldohexoses, the rare L-aldohexoses, the rare D-ketohexoses, and the rare L-ketohexoses; wherein the overall content of the binary combination of the two rare hexoses is at least 0.2 wt.-%, relative to the total content of all carbohydrates in the composition;

preferably wherein said binary combination is selected from the group consisting of $A^1A^2$, $A^1A^3$, $A^1A^4$, $A^1A^5$, $A^2A^3$, $A^2A^4$, $A^2A^5$, $A^3A^4$, $A^3A^5$, $A^4A^5$, $B^1B^2$, $B^1B^3$, $B^1B^4$, $B^1B^5$, $B^1B^6$, $B^1B^7$, $B^1B^8$, $B^2B^3$, $B^2B^4$, $B^2B^5$, $B^2B^6$, $B^2B^7$, $B^2B^8$, $B^3B^4$, $B^3B^5$, $B^3B^6$, $B^3B^7$, $B^3B^8$, $B^4B^5$, $B^4B^6$, $B^4B^7$, $B^4B^8$, $B^5B^6$, $B^5B^7$, $B^5B^8$, $B^6B^7$, $B^6B^5$, $B^7B^8$, $C^1C^2$, $D^1D^2$, $D^1D^3$, $D^1D^4$, $D^2D^3$, $D^2D^4$, $D^3D^4$, $A^1B^1$, $A^2B^1$, $A^3B^1$, $A^4B^1$, $A^5B^1$, $A^1B^2$, $A^2B^2$, $A^3B^2$, $A^4B^2$, $A^5B^2$, $A^1B^3$, $A^2B^3$, $A^3B^3$, $A^4B^3$, $A^5B^3$, $A^1B^4$, $A^2B^4$, $A^3B^4$, $A^4B^4$, $A^5B^4$, $A^1B^5$, $A^2B^5$, $A^3B^5$, $A^4B^5$, $A^5B^5$, $A^1B^6$, $A^2B^6$, $A^3B^6$, $A^4B^6$, $A^5B^6$, $A^1B^7$, $A^2B^7$, $A^3B^7$, $A^4B^7$, $A^5B^7$, $A^1B^8$, $A^2B^8$, $A^3B^8$, $A^4B^8$, $A^5B^8$, $A^1C^1$, $A^2C^1$, $A^3C^1$, $A^4C^1$, $A^5C^1$, $A^1C^2$, $A^2C^2$, $A^3C^2$, $A^4C^2$, $A^5C^2$, $A^1D^1$, $A^2D^1$, $A^3D^1$, $A^4D^1$, $A^5D^1$, $A^1D^2$, $A^2D^2$, $A^3D^2$, $A^4D^2$, $A^5D^2$, $A^1D^3$, $A^2D^3$, $A^3D^3$, $A^4D^3$, $A^4D^3$, $A^1D^4$, $A^2D^4$, $A^3D^4$, $A^4D^4$, $A^5D^4$, $B^1C^1$, $B^2C^1$, $B^3C^1$, $B^4C^1$, $B^5C^1$, $B^6C^1$, $B^7C^1$, $B^8C^1$, $B^1C^2$, $B^2C^2$, $B^3C^2$, $B^4C^2$, $B^5C^2$, $B^6C^2$, $B^7C^2$, $B^8C^2$, $C^1D^1$, $C^2D^1$, $C^1D^2$, $C^2D^2$, $C^1D^3$, $C^2D^3$, $C^1D^4$, and $C^2D^4$; wherein $A^1$ means D-allose. $A^2$ means D-altrose, $A^3$ means D-gulose, $A^4$ means D-idose, $A^5$ means D-talose, $B^1$ means L-allose, $B^2$ means L-altrose, $B^3$ means L-glucose, $B^4$ means L-mannose, $B^5$ means L-gulose, $B^6$ means L-idose, $B^7$ means L-galactose, $B^8$ means L-talose, $C^1$ means D-psicose, $C^2$ means D-tagatose, $D^1$ means L-psicose, $D^2$ means L-sorbose, $D^3$ means L-fructose, and $D^4$ means L-tagatose; and wherein the content of each rare hexose within said binary combination is at least 0.1 wt.-%, relative to the total content of all carbohydrates in the composition.

In another preferred embodiment, the composition according to the invention comprises at least three rare hexoses (= ternary combination of at least three rare hexoses not excluding the presence of further rare hexoses) independently selected from the group consisting of the rare D-aldohexoses, the rare L-aldohexoses, the rare D-ketohexoses, and the rare L-ketohexoses.

When said at least three rare hexoses are selected from the same group, i.e. all three from the rare D-aldohexoses, or all three from the rare L-aldohexoses, or all three from the rare D-ketohexoses, or all three from the rare L-ketohexoses, the following (homologous) ternary combinations are preferred: $A^1A^2A^3$, $A^1A^2A^4$, $A^1A^2A^5$, $A^1A^3A^4$, $A^1A^3A^5$, $A^1A^4A^5$, $A^2A^3A^4$, $A^2A^3A^5$, $A^2A^4A^5$, $A^3A^4A^5$; $B^1B^2B^3$, $B^1B^2B^4$, $B^1B^2B^5$, $B^1B^2B^6$, $B^1B^2B^7$, $B^1B^2B^8$, $B^1B^3B^4$, $B^1B^3B^5$, $B^1B^3B^6$, $B^1B^3B^7$, $B^1B^3B^8$, $B^1B^4B^5$, $B^1B^4B^6$, $B^1B^4B^7$, $B^1B^4B^8$, $B^1B^5B^6$, $B^1B^5B^7$, $B^1B^5B^8$, $B^1B^6B^7$, $B^1B^6B^8$, $B^1B^7B^8$, $B^2B^3B^4$, $B^2B^3B^5$, $B^2B^3B^6$, $B^2B^3B^7$, $B^2B^3B^8$, $B^2B^4B^5$, $B^2B^4B^6$, $B^2B^4B^7$, $B^2B^4B^8$, $B^2B^5B^6$, $B^2B^5B^7$, $B^2B^5B^8$, $B^2B^6B^7$, $B^2B^6B^8$, $B^2B^7B^8$, $B^3B^4B^5$, $B^3B^4B^6$, $B^3B^4B^7$, $B^3B^4B^8$, $B^3B^5B^6$, $B^3B^5B^7$, $B^3B^5B^8$, $B^3B^6B^7$, $B^3B^6B^8$, $B^3B^7B^8$, $B^4B^5B^6$, $B^4B^5B^7$, $B^4B^5B^8$, $B^4B^6B^7$, $B^4B^6B^8$, $B^4B^7B^8$, $B^5B^6B^7$, $B^5B^6B^8$, $B^5B^7B^8$, $B^6B^7B^8$; $D^1D^2D^3$, $D^1D^2D^4$, $D^1D^3D^4$, or $D^2D^3D^4$; wherein $A^1$ means D-allose, $A^2$ means D-altrose, $A^3$ means D-gulose, $A^4$ means D-idose, $A^5$ means D-talose, $B^1$ means L-allose, $B^2$ means L-altrose, $B^3$ means L-glucose, $B^4$ means L-mannose, $B^5$ means L-gulose, $B^6$ means L-idose, $B^7$ means L-galactose, $B^8$ means L-talose, $C^1$ means D-psicose, $C^2$ means D-tagatose, $D^1$ means L-psicose, $D^2$ means L-sorbose, $D^3$ means L-fmctose, and $D^4$ means L-tagatose.

The presence of the rare hexoses D-psicose, L-psicose, D-allose and/or L-allose is particularly preferred, so that the following (homologous) ternary combinations are preferred: $A^1A^2A^3$, $A^1A^2A^4$, $A^1A^2A^5$, $A^1A^3A^4$, $A^1A^3A^5$, $A^1A^4A^5$, $B^1B^2B^3$, $B^1B^2B^4$, $B^1B^2B^5$, $B^1B^2B^6$, $B^1B^2B^7$, $B^1B^2B^8$, $B^1B^3B^4$, $B^1B^3B^5$, $B^1B^3B^6$, $B^1B^3B^7$, $B^1B^3B^8$, $B^1B^4B^5$, $B^1B^4B^6$, $B^1B^4B^7$, $B^1B^4B^8$, $B^1B^5B^6$, $B^1B^5B^7$, $B^1B^5B^8$, $B^1B^6B^7$, $B^1B^6B^8$, $B^1B^7B^8$, $D^1D^2D^3$, $D^1D^2D^4$, and $D^1D^3D^4$; wherein $A^1$ means D-allose, $A^2$ means D-altrose, $A^3$ means D-gulose, $A^4$ means D-idose, $A^5$ means D-talose, $B^1$ means L-allose, $B^2$ means L-altrose, $B^3$ means L-glucose, $B^4$ means L-mannose, $B^5$ means L-gulose, $B^6$ means L-idose, $B^7$ means L-galactose, $B^8$ means L-talose, $C^1$ means D-psicose, $C^2$ means D-tagatose, $D^1$ means L-psicose, $D^2$ means L-sorbose, $D^3$ means L-fructose, and $D^4$ means L-tagatose.

When said at least three rare hexoses are selected from different groups, the following (heterologous) ternary combinations are preferred: $A^1B^1C^1$, $A^2B^1C^1$, $A^3B^1C^1$, $A^4B^1C^1$, $A^5B^1C^1$; $A^1B^2C^1$, $A^2B^2C^1$, $A^3B^2C^1$, $A^4B^2C^1$, $A^5B^2C^1$; $A^1B^3C^1$, $A^2B^3C^1$, $A^3B^3C^1$, $A^4B^3C^1$, $A^5B^3C^1$; $A^1B^4C^1$, $A^2B^4C^1$, $A^3B^4C^1$, $A^4B^4C^1$, $A^5B^4C^1$; $A^1B^5C^1$, $A^2B^5C^1$, $A^3B^5C^1$, $A^4B^5C^1$, $A^5B^5C^1$; $A^1B^6C^1$, $A^2B^6C^1$, $A^3B^6C^1$, $A^4B^6C^1$, $A^5B^6C^1$; $A^1B^7C^1$, $A^2B^7C^1$, $A^3B^7C^1$, $A^4B^7C^1$, $A^5B^7C^1$; $A^1B^8C^1$, $A^2B^8C^1$, $A^3B^8C^1$, $A^4B^8C^1$, $A^5B^8C^1$; $A^1B^1C^2$, $A^2B^1C^2$, $A^3B^1C^2$, $A^4B^1C^2$, $A^5B^1C^2$; $A^1B^2C^2$, $A^2B^2C^2$, $A^3B^2C^2$, $A^4B^2C^2$, $A^5B^2C^2$; $A^1B^3C^2$, $A^2B^3C^2$, $A^3B^3C^2$, $A^4B^3C^2$, $A^5B^3C^2$; $A^1B^4C^2$, $A^2B^4C^2$, $A^3B^4C^2$, $A^4B^4C^2$, $A^5B^4C^2$; $A^1B^5C^2$, $A^2B^5C^2$, $A^3B^5C^2$, $A^4B^5C^2$, $A^5B^5C^2$; $A^1B^6C^2$, $A^2B^6C^2$, $A^3B^6C^2$, $A^4B^6C^2$, $A^5B^6C^2$; $A^1B^7C^2$, $A^2B^7C^2$, $A^3B^7C^2$, $A^4B^7C^2$, $A^5B^7C^2$; $A^1B^8C^2$, $A^2B^8C^2$, $A^3B^8C^2$, $A^4B^8C^2$, $A^5B^8C^2$; $A^1B^1D^1$, $A^2B^1D^1$, $A^3B^1D^1$, $A^4B^1D^1$, $A^5B^1D^1$; $A^1B^2D^1$, $A^2B^2D^1$, $A^3B^2D^1$, $A^4B^2D^1$, $A^5B^2D^1$; $A^1B^3D^1$, $A^2B^3D^1$, $A^3B^3D^1$, $A^4B^3D^1$, $A^5B^3D^1$; $A^1B^4D^1$, $A^2B^4D^1$, $A^3B^4D^1$, $A^4B^4D^1$, $A^5B^4D^1$; $A^1B^5D^1$, $A^2B^5D^1$, $A^3B^5D^1$, $A^4B^5D^1$, $A^5B^5D^1$; $A^1B^6D^1$, $A^2B^6D^1$, $A^3B^6D^1$, $A^4B^6D^1$, $A^5B^6D^1$; $A^1B^7D^1$, $A^2B^7D^1$, $A^3B^7D^1$, $A^4B^7D^1$, $A^5B^7D^1$; $A^1B^8D^1$, $A^2B^8D^1$, $A^3B^8D^1$, $A^4B^8D^1$, $A^5B^8D^1$; $A^1B^1D^2$, $A^2B^1D^2$, $A^3B^1D^2$, $A^4B^1D^2$, $A^5B^1D^2$; $A^1B^2D^2$, $A^2B^2D^2$, $A^3B^2D^2$, $A^4B^2D^2$, $A^5B^2D^2$; $A^1B^3D^2$, $A^2B^3D^2$, $A^3B^3D^2$, $A^4B^3D^2$, $A^5B^3D^2$; $A^1B^4D^2$, $A^2B^4D^2$, $A^3B^4D^2$, $A^4B^4D^2$, $A^5B^4D^2$; $A^1B^5D^2$, $A^2B^5D^2$, $A^3B^5D^2$, $A^4B^5D^2$, $A^5B^5D^2$; $A^1B^6D^2$, $A^2B^6D^2$, $A^3B^6D^2$, $A^4B^6D^2$, $A^5B^6D^2$; $A^1B^7D^2$, $A^2B^7D^2$, $A^3B^7D^2$, $A^4B^7D^2$, $A^5B^7D^2$; $A^1B^8D^2$, $A^2B^8D^2$, $A^3B^8D^2$, $A^4B^8D^2$, $A^5B^8D^2$; $A^1B^1D^3$, $A^2B^1D^3$, $A^3B^1D^3$, $A^4B^1D^3$, $A^5B^1D^3$; $A^1B^2D^3$,

$A^2B^2D^3$, $A^3B^2D^3$, $A^4B^2D^3$, $A^5B^2D^3$; $A^1B^3D^3$, $A^2B^3D^3$, $A^3B^3D^3$, $A^4B^3D^3$, $A^5B^3D^3$; $A^1B^4D^3$, $A^2B^4D^3$, $A^3B^4D^3$, $A^4B^4D^3$, $A^5B^4D^3$; $A^1B^5D^3$, $A^2B^5D^3$, $A^3B^5D^3$, $A^4B^5D^3$, $A^5B^5D^3$; $A^1B^6D^3$, $A^2B^6D^3$, $A^3B^6D^3$, $A^4B^6D^3$, $A^5B^6D^3$; $A^1B^7D^3$, $A^2B^7D^3$, $A^3B^7D^3$, $A^4B^7D^3$, $A^5B^7D^3$; $A^1B^8D^3$, $A^2B^8D^3$, $A^3B^8D^3$, $A^4B^8D^3$, $A^5B^8D^3$; $A^1B^1D^4$, $A^2B^1D^4$, $A^3B^1D^4$, $A^4B^1D^4$, $A^5B^1D^4$; $A^1B^2D^4$, $A^2B^2D^4$, $A^3B^2D^4$, $A^4B^2D^4$, $A^5B^2D^4$; $A^1B^3D^4$, $A^2B^3D^4$, $A^3B^3D^4$, $A^4B^3D^4$, $A^5B^3D^4$; $A^1B^4D^4$, $A^2B^4D^4$, $A^3B^4D^4$, $A^4B^4D^4$, $A^5B^4D^4$; $A^1B^5D^4$, $A^2B^5D^4$, $A^3B^5D^4$, $A^4B^5D^4$, $A^5B^5D^4$; $A^1B^6D^4$, $A^2B^6D^4$, $A^3B^6D^4$, $A^4B^6D^4$, $A^5B^6D^4$; $A^1B^7D^4$, $A^2B^7D^4$, $A^3B^7D^4$, $A^4B^7D^4$, $A^5B^7D^4$; $A^1B^8D^4$, $A^2B^8D^4$, $A^3B^8D^4$, $A^4B^8D^4$, $A^5B^8D^4$; $A^1C^1D^1$, $A^2C^1D^1$, $A^3C^1D^1$, $A^4C^1D^1$, $A^5C^1D^1$; $A^1C^2D^1$, $A^2C^2D^1$, $A^3C^2D^1$, $A^4C^2D^1$, $A^5C^2D^1$; $A^1C^1D^2$, $A^2C^1D^2$, $A^3C^1D^2$, $A^4C^1D^2$, $A^5C^1D^2$; $A^1C^2D^2$, $A^2C^2D^2$, $A^3C^2D^2$, $A^4C^2D^2$, $A^5C^2D^2$; $A^1C^1D^3$, $A^2C^1D^3$, $A^3C^1D^3$, $A^4C^1D^3$, $A^5C^1D^3$; $A^1C^2D^3$, $A^2C^2D^3$, $A^3C^2D^3$, $A^4C^2D^3$, $A^5C^2D^3$; $A^1C^1D^4$, $A^2C^1D^4$, $A^3C^1D^4$, $A^4C^1D^4$, $A^5C^1D^4$; $A^1C^2D^4$, $A^2C^2D^4$, $A^3C^2D^4$, $A^4C^2D^4$, $A^5C^2D^4$; $B^1C^1D^1$, $B^2C^1D^1$, $B^3C^1D^1$, $B^4C^1D^1$, $B^5C^1D^1$, $B^6C^1D^1$, $B^7C^1D^1$, $B^8C^1D^1$; $B^1C^2D^1$, $B^2C^2D^1$, $B^3C^2D^1$, $B^4C^2D^1$, $B^5C^2D^1$, $B^6C^2D^1$, $B^7C^2D^1$, $B^8C^2D^1$; $B^1C^1D^2$, $B^2C^1D^2$, $B^3C^1D^2$, $B^4C^1D^2$, $B^5C^1D^2$, $B^6C^1D^2$, $B^7C^1D^2$, $B^8C^1D^2$; $B^1C^2D^2$, $B^2C^2D^2$, $B^3C^2D^2$, $B^4C^2D^2$, $B^5C^2D^2$, $B^6C^2D^2$, $B^7C^2D^2$, $B^8C^2D^2$; $B^1C^1D^3$, $B^2C^1D^3$, $B^3C^1D^3$, $B^4C^1D^3$, $B^5C^1D^3$, $B^6C^1D^3$, $B^7C^1D^3$, $B^8C^1D^3$; $B^1C^2D^3$, $B^2C^2D^3$, $B^3C^2D^3$, $B^4C^2D^3$, $B^5C^2D^3$, $B^6C^2D^3$, $B^7C^2D^3$, $B^8C^2D^3$; $B^1C^1D^4$, $B^2C^1D^4$, $B^3C^1D^4$, $B^4C^1D^4$, $B^5C^1D^4$, $B^6C^1D^4$, $B^7C^1D^4$, $B^8C^1D^4$; $B^1C^2D^4$, $B^2C^2D^4$, $B^3C^2D^4$, $B^4C^2D^4$, $B^5C^2D^4$, $B^6C^2D^4$, $B^7C^2D^4$, or $B^8C^2D^4$; wherein $A^1$ means D-allose, $A^2$ means D-altrose, $A^3$ means D-gulose, $A^4$ means D-idose, $A^5$ means D-talose, $B^1$ means L-allose, $B^2$ means L-altrose, $B^3$ means L-glucose, $B^4$ means L-mannose, $B^5$ means L-gulose, $B^6$ means L-idose, $B^7$ means L-galactose, $B^8$ means L-talose, $C^1$ means D-psicose, $C^2$ means D-tagatose, $D^1$ means L-psicose, $D^2$ means L-sorbose, $D^3$ means L-fructose, and $D^4$ means L-tagatose.

The presence of the rare hexoses D-psicose, L-psicose, D-allose and/or L-allose is particularly preferred, so that the following (homologous) ternary combinations are preferred: $A^1B^1C^1$, $A^2B^1C^1$, $A^3B^1C^1$, $A^4B^1C^1$, $A^5B^1C^1$; $A^1B^2C^1$, $A^2B^2C^1$, $A^3B^2C^1$, $A^4B^2C^1$, $A^5B^2C^1$; $A^1B^3C^1$, $A^2B^3C^1$, $A^3B^3C^1$, $A^4B^3C^1$, $A^5B^3C^1$; $A^1B^4C^1$, $A^2B^4C^1$, $A^3B^4C^1$, $A^4B^4C^1$, $A^5B^4C^1$; $A^1B^5C^1$, $A^2B^5C^1$, $A^3B^5C^1$, $A^4B^5C^1$, $A^5B^5C^1$; $A^1B^6C^1$, $A^2B^6C^1$, $A^3B^6C^1$, $A^4B^6C^1$, $A^5B^6C^1$; $A^1B^7C^1$, $A^2B^7C^1$, $A^3B^7C^1$, $A^4B^7C^1$, $A^5B^7C^1$; $A^1B^8C^1$, $A^2B^8C^1$, $A^3B^8C^1$, $A^4B^8C^1$, $A^5B^8C^1$; $A^1B^1C^2$, $A^2B^1C^2$, $A^3B^1C^2$, $A^4B^1C^2$, $A^5B^1C^2$; $A^1B^2C^2$, $A^1B^3C^2$, $A^1B^4C^2$, $A^1B^5C^2$, $A^1B^6C^2$, $A^1B^7C^2$, $A^1B^8C^2$, $A^1B^1D^1$, $A^2B^1D^1$, $A^3B^1D^1$, $A^4B^1D^1$, $A^5B^1D^1$; $A^1B^2D^1$, $A^2B^2D^1$, $A^3B^2D^1$, $A^4B^2D^1$, $A^5B^2D^1$; $A^1B^3D^1$, $A^2B^3D^1$, $A^3B^3D^1$, $A^4B^3D^1$, $A^5B^3D^1$; $A^1B^4D^1$, $A^2B^4D^1$, $A^3B^4D^1$, $A^4B^4D^1$, $A^5B^4D^1$; $A^1B^5D^1$, $A^2B^5D^1$, $A^3B^5D^1$, $A^4B^5D^1$, $A^5B^5D^1$; $A^1B^6D^1$, $A^2B^6D^1$, $A^3B^6D^1$, $A^4B^6D^1$, $A^5B^6D^1$; $A^1B^7D^1$, $A^2B^7D^1$, $A^3B^7D^1$, $A^4B^7D^1$, $A^5B^7D^1$; $A^1B^8D^1$, $A^2B^8D^1$, $A^3B^8D^1$, $A^4B^8D^1$, $A^5B^8D^1$; $A^1B^1D^2$, $A^2B^1D^2$, $A^3B^1D^2$, $A^4B^1D^2$, $A^5B^1D^2$; $A^1B^2D^2$, $A^1B^3D^2$, $A^1B^4D^2$, $A^1B^5D^2$, $A^1B^6D^2$, $A^1B^7D^2$, $A^1B^8D^2$, $A^1B^1D^3$, $A^2B^1D^3$, $A^3B^1D^3$, $A^4B^1D^3$, $A^5B^1D^3$; $A^1B^2D^3$, $A^1B^3D^3$, $A^1B^4D^3$, $A^1B^5D^3$, $A^1B^6D^3$, $A^1B^7D^3$, $A^1B^8D^3$, $A^1B^1D^4$, $A^2B^1D^4$, $A^3B^1D^4$, $A^4B^1D^4$, $A^5B^1D^4$; $A^1B^2D^4$, $A^1B^3D^4$, $A^1B^4D^4$, $A^1B^5D^4$, $A^1B^6D^4$, $A^1B^7D^4$, $A^1B^8D^4$, $A^1C^1D^1$, $A^2C^1D^1$, $A^3C^1D^1$, $A^4C^1D^1$, $A^5C^1D^1$; $A^1C^2D^1$, $A^2C^2D^1$, $A^3C^2D^1$, $A^4C^2D^1$, $A^5C^2D^1$; $A^1C^1D^2$, $A^2C^1D^2$, $A^3C^1D^2$, $A^4C^1D^2$, $A^5C^1D^2$; $A^1C^2D^2$, $A^1C^1D^3$, $A^2C^1D^3$, $A^3C^1D^3$, $A^4C^1D^3$, $A^5C^1D^3$; $A^1C^2D^3$, $A^1C^1D^4$, $A^2C^1D^4$, $A^3C^1D^4$, $A^4C^1D^4$, $A^5C^1D^4$; $A^1C^2D^4$, $B^1C^1D^1$, $B^2C^1D^1$, $B^3C^1D^1$, $B^4C^1D^1$, $B^5C^1D^1$, $B^6C^1D^1$, $B^7C^1D^1$, $B^8C^1D^1$; $B^1C^2D^1$, $B^2C^2D^1$, $B^3C^2D^1$, $B^4C^2D^1$, $B^5C^2D^1$, $B^6C^2D^1$, $B^7C^2D^1$, $B^8C^2D^1$; $B^1C^1D^2$, $B^2C^1D^2$, $B^3C^1D^2$, $B^4C^1D^2$, $B^5C^1D^2$, $B^6C^1D^2$, $B^7C^1D^2$, $B^8C^1D^2$; $B^1C^2D^2$, $B^1C^1D^3$, $B^2C^1D^3$, $B^3C^1D^3$, $B^4C^1D^3$, $B^5C^1D^3$, $B^6C^1D^3$, $B^7C^1D^3$, $B^8C^1D^3$; $B^1C^2D^3$, $B^1C^1D^4$, $B^2C^1D^4$, $B^3C^1D^4$, $B^4C^1D^4$, $B^5C^1D^4$, $B^6C^1D^4$, $B^7C^1D^4$, $B^8C^1D^4$; and $B^1C^2D^4$; wherein $A^1$ means D-allose, $A^2$ means D-altrose, $A^3$ means D-gulose, $A^4$ means D-idose, $A^5$ means D-talose, $B^1$ means L-allose, $B^2$ means L-altrose, $B^3$ means L-glucose, $B^4$ means L-mannose, $B^5$ means L-gulose, $B^6$ means L-idose, $B^7$ means L-galactose, $B^8$ means L-talose, $C^1$ means D-psicose, $C^2$ means D-tagatose, $D^1$ means L-psicose, $D^2$ means L-sorbose, $D^3$ means L-fructose, and $D^4$ means L-tagatose.

When said at least three rare hexoses are selected from same and different groups, the following (mixed) ternary combinations are preferred: $A^1A^2B^1$, $A^1A^2B^2$, $A^1A^2B^3$, $A^1A^2B^4$, $A^1A^2B^5$, $A^1A^2B^6$, $A^1A^2B^7$, $A^1A^2B^8$; $A^1A^2C^1$, $A^1A^2C^2$; $A^1A^2D^1$, $A^1A^2D^2$, $A^1A^2D^3$, $A^1A^2D^4$; $A^1A^3B^1$, $A^1A^3B^2$, $A^1A^3B^3$, $A^1A^3B^4$, $A^1A^3B^5$, $A^1A^3B^6$, $A^1A^3B^7$, $A^1A^3B^8$; $A^1A^3C^1$, $A^1A^3C^2$; $A^1A^3D^1$, $A^1A^3D^2$, $A^1A^3D^3$, $A^1A^3D^4$; $A^1A^4B^1$, $A^1A^4B^2$, $A^1A^4B^3$, $A^1A^4B^4$, $A^1A^4B^5$, $A^1A^4B^6$, $A^1A^4B^7$, $A^1A^4B^8$; $A^1A^4C^1$, $A^1A^4C^2$; $A^1A^4D^1$, $A^1A^4D^2$, $A^1A^4D^3$, $A^1A^4D^4$; $A^1A^5B^1$, $A^1A^5B^2$, $A^1A^5B^3$, $A^1A^5B^4$, $A^1A^5B^5$, $A^1A^5B^6$, $A^1A^5B^7$, $A^1A^5B^8$; $A^1A^5C^1$, $A^1A^5C^2$; $A^1A^5D^1$, $A^1A^5D^2$, $A^1A^5D^3$, $A^1A^5D^4$; $A^2A^3B^1$, $A^2A^3B^2$, $A^2A^3B^3$, $A^2A^3B^4$, $A^2A^3B^5$, $A^2A^3B^6$, $A^2A^3B^7$, $A^2A^3B^8$; $A^2A^3C^1$, $A^2A^3C^2$; $A^2A^3D^1$, $A^2A^3D^2$, $A^2A^3D^3$, $A^2A^3D^4$; $A^2A^4B^1$, $A^2A^4B^2$, $A^2A^4B^3$, $A^2A^4B^4$, $A^2A^4B^5$, $A^2A^4B^6$, $A^2A^4B^7$, $A^2A^4B^8$; $A^2A^4C^1$, $A^2A^4C^2$; $A^2A^4D^1$, $A^2A^4D^2$, $A^2A^4D^3$, $A^2A^4D^4$; $A^2A^5B^1$, $A^2A^5B^2$, $A^2A^5B^3$, $A^2A^5B^4$, $A^2A^5B^5$, $A^2A^5B^6$, $A^2A^5B^7$, $A^2A^5B^8$; $A^2A^5C^1$, $A^2A^5C^2$; $A^2A^5D^1$, $A^2A^5D^2$, $A^2A^5D^3$, $A^2A^5D^4$; $A^3A^4B^1$, $A^3A^4B^2$, $A^3A^4B^3$, $A^3A^4B^4$, $A^3A^4B^5$, $A^3A^4B^6$, $A^3A^4B^7$, $A^3A^4B^8$; $A^3A^4C^1$, $A^3A^4C^2$; $A^3A^4D^1$, $A^3A^4D^2$, $A^3A^4D^3$, $A^3A^4D^4$; $A^3A^5B^1$, $A^3A^5B^2$, $A^3A^5B^3$, $A^3A^5B^4$, $A^3A^5B^5$, $A^3A^5B^6$, $A^3A^5B^7$, $A^3A^5B^8$; $A^3A^5C^1$, $A^3A^5C^2$; $A^3A^5D^1$, $A^3A^5D^2$, $A^3A^5D^3$, $A^3A^5D^4$; $A^4A^5B^1$, $A^4A^5B^2$, $A^4A^5B^3$, $A^4A^5B^4$, $A^4A^5B^5$, $A^4A^5B^6$, $A^4A^5B^7$, $A^4A^5B^8$; $A^4A^5C^1$, $A^4A^5C^2$; $A^4A^5D^1$, $A^4A^5D^2$, $A^4A^5D^3$, $A^4A^5D^4$; $B^1B^2C^1$, $B^1B^2C^2$, $B^1B^2D^1$, $B^1B^2D^2$, $B^1B^2D^3$, $B^1B^2D^4$, $B^1B^3C^1$, $B^1B^3C^2$, $B^1B^3D^1$, $B^1B^3D^2$, $B^1B^3D^3$, $B^1B^3D^4$, $B^1B^4C^1$, $B^1B^4C^2$, $B^1B^4D^1$, $B^1B^4D^2$, $B^1B^4D^3$, $B^1B^4D^4$, $B^1B^5C^1$, $B^1B^5C^2$, $B^1B^5D^1$, $B^1B^5D^2$, $B^1B^5D^3$, $B^1B^5D^4$, $B^1B^6C^1$, $B^1B^6C^2$, $B^1B^6D^1$, $B^1B^6D^2$, $B^1B^6D^3$, $B^1B^6D^4$, $B^1B^7C^1$, $B^1B^7C^2$, $B^1B^7D^1$, $B^1B^7D^2$, $B^1B^7D^3$, $B^1B^7D^4$, $B^1B^8C^1$, $B^1B^8C^2$, $B^1B^8D^1$, $B^1B^8D^2$, $B^1B^8D^3$, $B^1B^8D^4$, $B^2B^3C^1$, $B^2B^3C^2$, $B^2B^3D^1$, $B^2B^3D^2$, $B^2B^3D^3$, $B^2B^3D^4$, $B^2B^4C^1$, $B^2B^4C^2$, $B^2B^4D^1$, $B^2B^4D^2$, $B^2B^4D^3$, $B^2B^4D^4$, $B^2B^5C^1$, $B^2B^5C^2$, $B^2B^5D^1$, $B^2B^5D^2$, $B^2B^5D^3$, $B^2B^5D^4$, $B^2B^6C^1$, $B^2B^6C^2$, $B^2B^6D^1$, $B^2B^6D^2$, $B^2B^6D^3$, $B^2B^6D^4$, $B^2B^7C^1$, $B^2B^7C^2$, $B^2B^7D^1$, $B^2B^7D^2$, $B^2B^7D^3$, $B^2B^7D^4$, $B^2B^8C^1$, $B^2B^8C^2$, $B^2B^8D^1$, $B^2B^8D^2$, $B^2B^8D^3$, $B^2B^8D^4$, $B^3B^4C^1$, $B^3B^4C^2$, $B^3B^4D^1$, $B^3B^4D^2$, $B^3B^4D^3$, $B^3B^4D^4$, $B^3B^5C^1$, $B^3B^5C^2$, $B^3B^5D^1$, $B^3B^5D^2$, $B^3B^5D^3$, $B^3B^5D^4$,

$B^3B^6C^1$, $B^3B^6C^2$, $B^3B^6D^1$, $B^3B^6D^2$, $B^3B^6D^3$, $B^3B^6D^4$, $B^3B^7C^1$, $B^3B^7C^2$, $B^3B^7D^1$, $B^3B^7D^2$, $B^3B^7D^3$, $B^3B^7D^4$, $B^3B^8C^1$, $B^3B^8C^2$, $B^3B^8D^1$, $B^3B^8D^2$, $B^3B^8D^3$, $B^3B^8D^4$, $B^4B^5C^1$, $B^4B^5C^2$, $B^4B^5D^1$, $B^4B^5D^2$, $B^4B^5D^3$, $B^4B^5D^4$, $B^4B^6C^1$, $B^4B^6C^2$, $B^4B^6D^1$, $B^4B^6D^2$, $B^4B^6D^3$, $B^4B^6D^4$, $B^4B^7C^1$, $B^4B^7C^2$, $B^4B^7D^1$, $B^4B^7D^2$, $B^4B^7D^3$, $B^4B^7D^4$, $B^4B^8C^1$, $B^4B^8C^2$, $B^4B^8D^1$, $B^4B^8D^2$, $B^4B^8D^3$, $B^4B^8D^4$, $B^5B^6C^1$, $B^5B^6C^2$, $B^5B^6D^1$, $B^5B^6D^2$, $B^5B^6D^3$, $B^5B^6D^4$, $B^5B^7C^1$, $B^5B^7C^2$, $B^5B^7D^1$, $B^5B^7D^2$, $B^5B^7D^3$, $B^5B^7D^4$, $B^5B^5C^1$, $B^5B^8C^2$, $B^5B^8D^1$, $B^5B^8D^2$, $B^5B^8D^3$, $B^5B^8D^4$, $B^6B^7C^1$, $B^6B^7C^2$, $B^6B^7D^1$, $B^6B^7D^2$, $B^6B^7D^3$, $B^6B^7D^4$, $B^6B^8C^1$, $B^6B^8C^2$, $B^6B^8D^1$, $B^6B^8D^2$, $B^6B^8D^3$, $B^6B^8D^4$, $B^7B^8C^1$, $B^7B^8C^2$, $B^7B^8D^1$, $B^7B^8D^2$, $B^7B^8D^3$, $B^7B^8D^4$; $C^1C^2D^1$, $C^1C^2D^2$, $C^1C^2D^3$, $C^1C^2D^4$; $A^1B^1B^2$, $A^1B^1B^3$, $A^1B^1B^4$, $A^1B^1B^5$, $A^1B^1B^6$, $A^1B^1B^7$, $A^1B^1B^8$, $A^1B^1C^1$, $A^1B^1C^2$, $A^1B^1D^1$, $A^1B^1D^2$, $A^1B^1D^3$, $A^1B^1D^4$; $A^2B^1B^2$, $A^2B^1B^3$, $A^2B^1B^4$, $A^2B^1B^5$, $A^2B^1B^6$, $A^2B^1B^7$, $A^2B^1B^8$, $A^2B^1C^1$, $A^2B^1C^2$, $A^2B^1D^1$, $A^2B^1D^2$, $A^2B^1D^3$, $A^2B^1D^4$; $A^3B^1B^2$, $A^3B^1B^3$, $A^3B^1B^4$, $A^3B^1B^5$, $A^3B^1B^6$, $A^3B^1B^7$, $A^3B^1B^8$, $A^3B^1C^1$, $A^3B^1C^2$, $A^3B^1D^1$, $A^3B^1D^2$, $A^3B^1D^3$, $A^3B^1D^4$; $A^4B^1B^2$, $A^4B^1B^3$, $A^4B^1B^4$, $A^4B^1B^5$, $A^4B^1B^6$, $A^4B^1B^7$, $A^4B^1B^8$, $A^4B^1C^1$, $A^4B^1C^2$, $A^4B^1D^1$, $A^4B^1D^2$, $A^4B^1D^3$, $A^4B^1D^4$; $A^5B^1B^2$, $A^5B^1B^3$, $A^5B^1B^4$, $A^5B^1B^5$, $A^5B^1B^6$, $A^5B^1B^7$, $A^5B^1B^8$, $A^5B^1C^1$, $A^5B^1C^2$, $A^5B^1D^1$, $A^5B^1D^2$, $A^5B^1D^3$, $A^5B^1D^4$; $A^1B^2B^3$, $A^1B^2B^4$, $A^1B^2B^5$, $A^1B^2B^6$, $A^1B^2B^7$, $A^1B^2B^8$, $A^1B^2C^1$, $A^1B^2C^2$, $A^1B^2D^1$, $A^1B^2D^2$, $A^1B^2D^3$, $A^1B^2D^4$; $A^2B^2B^3$, $A^2B^2B^4$, $A^2B^2B^5$, $A^2B^2B^6$, $A^2B^2B^7$, $A^2B^2B^8$, $A^2B^2C^1$, $A^2B^2C^2$, $A^2B^2D^1$, $A^2B^2D^2$, $A^2B^2D^3$, $A^2B^2D^4$; $A^3B^2B^3$, $A^3B^2B^4$, $A^3B^2B^5$, $A^3B^2B^6$, $A^3B^2B^7$, $A^3B^2B^8$, $A^3B^2C^1$, $A^3B^2C^2$, $A^3B^2D^1$, $A^3B^2D^2$, $A^3B^2D^3$, $A^3B^2D^4$; $A^4B^2B^3$, $A^4B^2B^4$, $A^4B^2B^5$, $A^4B^2B^6$, $A^4B^2B^7$, $A^4B^2B^8$, $A^4B^2C^1$, $A^4B^2C^2$, $A^4B^2D^1$, $A^4B^2D^2$, $A^4B^2D^3$, $A^4B^2D^4$; $A^5B^2B^3$, $A^5B^2B^4$, $A^5B^2B^5$, $A^5B^2B^6$, $A^5B^2B^7$, $A^5B^2B^8$, $A^5B^2C^1$, $A^5B^2C^2$, $A^5B^2D^1$, $A^5B^2D^2$, $A^5B^2D^3$, $A^5B^2D^4$; $A^1B^3B^4$, $A^1B^3B^5$, $A^1B^3B^6$, $A^1B^3B^7$, $A^1B^3B^8$, $A^1B^3C^1$, $A^1B^3C^2$, $A^1B^3D^1$, $A^1B^3D^2$, $A^1B^3D^3$, $A^1B^3D^4$; $A^2B^3B^4$, $A^2B^3B^5$, $A^2B^3B^6$, $A^2B^3B^7$, $A^2B^3B^8$, $A^2B^3C^1$, $A^2B^3C^2$, $A^2B^3D^1$, $A^2B^3D^2$, $A^2B^3D^3$, $A^2B^3D^4$; $A^3B^3B^4$, $A^3B^3B^5$, $A^3B^3B^6$, $A^3B^3B^7$, $A^3B^3B^8$, $A^3B^3C^1$, $A^3B^3C^2$, $A^3B^3D^1$, $A^3B^3D^2$, $A^3B^3D^3$, $A^3B^3D^4$; $A^4B^3B^4$, $A^4B^3B^5$, $A^4B^3B^6$, $A^4B^3B^7$, $A^4B^3B^8$, $A^4B^3C^1$, $A^4B^3C^2$, $A^4B^3D^1$, $A^4B^3D^2$, $A^4B^3D^3$, $A^4B^3D^4$; $A^5B^3B^4$, $A^5B^3B^5$, $A^5B^3B^6$, $A^5B^3B^7$, $A^5B^3B^8$, $A^5B^3C^1$, $A^5B^3C^2$, $A^5B^3D^1$, $A^5B^3D^2$, $A^5B^3D^3$, $A^5B^3D^4$; $A^1B^4B^5$, $A^1B^4B^6$, $A^1B^4B^7$, $A^1B^4B^8$, $A^1B^4C^1$, $A^1B^4C^2$, $A^1B^4D^1$, $A^1B^4D^2$, $A^1B^4D^3$, $A^1B^4D^4$; $A^2B^4B^5$, $A^2B^4B^6$, $A^2B^4B^7$, $A^2B^4B^8$, $A^2B^4C^1$, $A^2B^4C^2$, $A^2B^4D^1$, $A^2B^4D^2$, $A^2B^4D^3$, $A^2B^4D^4$; $A^3B^4B^5$, $A^3B^4B^6$, $A^3B^4B^7$, $A^3B^4B^8$, $A^3B^4C^1$, $A^3B^4C^2$, $A^3B^4D^1$, $A^3B^4D^2$, $A^3B^4D^3$, $A^3B^4D^4$; $A^4B^4B^5$, $A^4B^4B^6$, $A^4B^4B^7$, $A^4B^4B^8$, $A^4B^4C^1$, $A^4B^4C^2$, $A^4B^4D^1$, $A^4B^4D^2$, $A^4B^4D^3$, $A^4B^4D^4$; $A^5B^4B^5$, $A^5B^4B^6$, $A^5B^4B^7$, $A^5B^4B^8$, $A^5B^4C^1$, $A^5B^4C^2$, $A^5B^4D^1$, $A^5B^4D^2$, $A^5B^4D^3$, $A^5B^4D^4$; $A^1B^5B^6$, $A^1B^5B^7$, $A^1B^5B^8$, $A^1B^5C^1$, $A^1B^5C^2$, $A^1B^5D^1$, $A^1B^5D^2$, $A^1B^5D^3$, $A^1B^5D^4$; $A^2B^5B^6$, $A^2B^5B^7$, $A^2B^5B^8$, $A^2B^5C^1$, $A^2B^5C^2$, $A^2B^5D^1$, $A^2B^5D^2$, $A^2B^5D^3$, $A^2B^5D^4$; $A^3B^5B^6$, $A^3B^5B^7$, $A^3B^5B^8$, $A^3B^5C^1$, $A^3B^5C^2$, $A^3B^5D^1$, $A^3B^5D^2$, $A^3B^5D^3$, $A^3B^5D^4$; $A^4B^5B^6$, $A^4B^5B^7$, $A^4B^5B^8$, $A^4B^5C^1$, $A^4B^5C^2$, $A^4B^5D^1$, $A^4B^5D^2$, $A^4B^5D^3$, $A^4B^5D^4$; $A^5B^5B^6$, $A^5B^5B^7$, $A^5B^5B^8$, $A^5B^5C^1$, $A^5B^5C^2$, $A^5B^5D^1$, $A^5B^5D^2$, $A^5B^5D^3$, $A^5B^5D^4$; $A^1B^6B^7$, $A^1B^6B^5$, $A^1B^6C^1$, $A^1B^6C^2$, $A^1B^6D^1$, $A^1B^6D^2$, $A^1B^6D^3$, $A^1B^6D^4$; $A^2B^6B^7$, $A^2B^6B^8$, $A^2B^6C^1$, $A^2B^6C^2$, $A^2B^6D^1$, $A^2B^6D^2$, $A^2B^6D^3$, $A^2B^6D^4$; $A^3B^6B^7$, $A^3B^6B^8$, $A^3B^6C^1$, $A^3B^6C^2$, $A^3B^6D^1$, $A^3B^6D^2$, $A^3B^6D^3$, $A^3B^6D^4$; $A^4B^6B^7$, $A^4B^6B^8$, $A^4B^6C^1$, $A^4B^6C^2$, $A^4B^6D^1$, $A^4B^6D^2$, $A^4B^6D^3$, $A^4B^6D^4$; $A^5B^6B^7$, $A^5B^6B^8$, $A^1B^6C^1$, $A^1B^6C^2$, $A^1B^6D^1$, $A^1B^6D^2$, $A^1B^6D^3$, $A^1B^6D^4$; $A^1B^7B^8$, $A^1B^7C^1$, $A^1B^7C^2$, $A^1B^7D^1$, $A^1B^7D^2$, $A^1B^7D^3$, $A^1B^7D^4$; $A^2B^7B^8$, $A^2B^7C^1$, $A^2B^7C^2$, $A^2B^7D^1$, $A^2B^7D^2$, $A^2B^7D^3$, $A^2B^7D^4$; $A^3B^7B^8$, $A^3B^7C^1$, $A^3B^7C^2$, $A^3B^7D^1$, $A^3B^7D^2$, $A^3B^7D^3$, $A^3B^7D^4$; $A^4B^7B^8$, $A^4B^7C^1$, $A^4B^7C^2$, $A^4B^7D^1$, $A^4B^7D^2$, $A^4B^7D^3$, $A^4B^7D^4$; $A^5B^7B^8$, $A^5B^7C^1$, $A^5B^7C^2$, $A^5B^7D^1$, $A^5B^7D^2$, $A^5B^7D^3$, $A^5B^7D^4$; $A^1C^1C^2$, $A^1C^1D^1$, $A^1C^1D^2$, $A^1C^1D^3$, $A^1C^1D^4$; $A^2C^1C^2$, $A^2C^1D^1$, $A^2C^1D^2$, $A^2C^1D^3$, $A^2C^1D^4$; $A^3C^1C^2$, $A^3C^1D^1$, $A^3C^1D^2$, $A^3C^1D^3$, $A^3C^1D^4$; $A^4C^1C^2$, $A^4C^1D^1$, $A^4C^1D^2$, $A^4C^1D^3$, $A^4C^1D^4$; $A^5C^1C^2$, $A^5C^1D^1$, $A^5C^1D^2$, $A^5C^1D^3$, $A^5C^1D^4$; $A^1C^2D^1$, $A^1C^2D^2$, $A^1C^2D^3$, $A^1C^2D^4$; $A^2C^2D^1$, $A^2C^2D^2$, $A^2C^2D^3$, $A^2C^2D^4$; $A^3C^2D^1$, $A^3C^2D^2$, $A^3C^2D^3$, $A^3C^2D^4$; $A^4C^2D^1$, $A^4C^2D^2$, $A^4C^2D^3$, $A^4C^2D^4$; $A^5C^2D^1$, $A^5C^2D^2$ $A^5C^2D^3$, $A^5C^2D^4$; $A^1D^1D^2$, $A^1D^1D^3$, $A^1D^1D^4$; $A^2D^1D^2$, $A^2D^1D^3$, $A^2D^1D^4$; $A^3D^1D^2$, $A^3D^1D^3$, $A^3D^1D^4$; $A^4D^1D^2$, $A^4D^1D^3$, $A^4D^1D^4$; $A^5D^1D^2$, $A^5D^1D^3$, $A^5D^1D^4$; $A^1D^2D^3$, $A^1D^2D^4$; $A^2D^2D^3$, $A^2D^2D^4$; $A^3D^2D^3$, $A^3D^2D^4$; $A^4D^2D^3$, $A^4D^2D^4$; $A^5D^2D^3$, $A^5D^2D^4$; $A^1D^3D^4$; $A^2D^3D^4$; $A^3D^3D^4$; $A^4D^3D^4$; $A^5D^3D^4$; $B^1C^1C^2$, $B^1C^1D^1$, $B^1C^1D^2$, $B^1C^1D^3$, $B^1C^1D^4$; $B^2C^1C^2$, $B^2C^1D^1$, $B^2C^1D^2$, $B^2C^1D^3$, $B^2C^1D^4$; $B^3C^1C^2$, $B^3C^1D^1$, $B^3C^1D^2$, $B^3C^1D^3$, $B^3C^1D^4$; $B^4C^1C^2$, $B^4C^1D^1$, $B^4C^1D^2$, $B^4C^1D^3$, $B^4C^1D^4$; $B^5C^1C^2$, $B^5C^1D^1$, $B^5C^1D^2$, $B^5C^1D^3$, $B^5C^1D^4$; $B^6C^1C^2$, $B^6C^1D^1$, $B^6C^1D^2$, $B^6C^1D^3$, $B^6C^1D^4$; $B^7C^1C^2$, $B^7C^1D^1$, $B^7C^1D^2$, $B^7C^1D^3$, $B^7C^1D^4$; $B^8C^1C^2$; $B^8C^1D^1$; $B^8C^1D^2$; $B^8C^1D^3$; $B^8C^1D^4$; $B^1C^2D^1$, $B^1C^2D^2$, $B^1C^2D^3$, $B^1C^2D^4$; $B^2C^2D^1$, $B^2C^2D^2$, $B^2C^2D^3$, $B^2C^2D^4$; $B^3C^2D^1$, $B^3C^2D^2$, $B^3C^2D^3$, $B^3C^2D^4$; $B^4C^2D^1$, $B^4C^2D^2$, $B^4C^2D^3$, $B^4C^2D^4$; $B^5C^2D^1$, $B^5C^2D^2$, $B^5C^2D^3$, $B^5C^2D^4$; $B^6C^2D^1$, $B^6C^2D^2$, $B^6C^2D^3$, $B^6C^2D^4$; $B^7C^2D^1$, $B^7C^2D^2$, $B^7C^2D^3$, $B^7C^2D^4$; $B^8C^2D^1$; $B^8C^2D^2$; $B^8C^2D^3$; $B^8C^2D^4$; $C^1D^1D^2$, $C^1D^1D^3$, $C^1D^1D^4$; $C^2D^1D^2$, $C^2D^1D^3$, $C^2D^1D$; $C^1D^2D^3$, $C^1D^2D^4$; $C^2D^2D^3$, $C^2D^2D^4$; $C^1D^3D^4$; or $C^2D^3D^4$; wherein $A^1$ means D-allose, $A^2$ means D-altrose, $A^3$ means D-gulose, $A^4$ means D-idose, $A^5$ means D-talose, $B^1$ means L-allose, $B^2$ means L-altrose, $B^3$ means L-glucose, $B^4$ means L-mannose, $B^5$ means L-gulose, $B^6$ means L-idose, $B^7$ means L-galactose, $B^8$ means L-talose, $C^1$ means D-psicose, $C^2$ means D-tagatose, $D^1$ means L-psicose, $D^2$ means L-sorbose, $D^3$ means L-fructose, and $D^4$ means L-tagatose.

The presence of the rare hexoses D-psicose, L-psicose, D-allose and/or L-allose is particularly preferred, so that the following (mixed) ternary combinations are preferred: $A^1A^2B^1$, $A^1A^2B^2$, $A^1A^2B^3$, $A^1A^2B^4$, $A^1A^2B^5$, $A^1A^2B^6$, $A^1A^2B^7$, $A^1A^2B^8$; $A^1A^2C^1$, $A^1A^2C^2$; $A^1A^2D^1$, $A^1A^2D^2$, $A^1A^2D^3$, $A^1A^2D^4$; $A^1A^3B^1$, $A^1A^3B^2$, $A^1A^3B^3$, $A^1A^3B^4$, $A^1A^3B^5$, $A^1A^3B^6$, $A^1A^3B^7$, $A^1A^3B^8$; $A^1A^3C^1$, $A^1A^3C^2$; $A^1A^3D^1$, $A^1A^3D^2$, $A^1A^3D^3$, $A^1A^3D^4$; $A^1A^4B^1$, $A^1A^4B^2$, $A^1A^4B^3$, $A^1A^4B^4$, $A^1A^4B^5$, $A^1A^4B^6$, $A^1A^4B^7$, $A^1A^4B^8$; $A^1A^4C^1$, $A^1A^4C^2$; $A^1A^4D^1$, $A^1A^4D^2$, $A^1A^4D^3$, $A^1A^4D^4$; $A^1A^5B^1$, $A^1A^5B^2$, $A^1A^5B^3$, $A^1A^5B^4$, $A^1A^5B^5$, $A^1A^5B^6$, $A^1A^5B^7$, $A^1A^5B^8$; $A^1A^5C^1$, $A^1A^5C^2$; $A^1A^5D^1$, $A^1A^5D^2$, $A^1A^5D^3$, $A^1A^5D^4$; $A^2A^3B^1$, $A^2A^3C^1$, $A^2A^3D^1$, $A^2A^4B^1$, $A^2A^4C^1$, $A^2A^4D^1$, $A^2A^5B^1$, $A^2A^5C^1$, $A^2A^5D^1$, $A^3A^4B^1$, $A^3A^4C^1$, $A^3A^4D^1$, $A^3A^5B^1$, $A^3A^5C^1$, $A^3A^5D^1$, $A^4A^5B^1$, $A^4A^5C^1$, $A^4A^5D^1$, $B^1B^2C^1$, $B^1B^2C^2$, $B^1B^2D^1$, $B^1B^2D^2$, $B^1B^2D^3$, $B^1B^2D^4$, $B^1B^3C^1$, $B^1B^3C^2$, $B^1B^3D^1$, $B^1B^3D^2$,

$B^1B^3D^3$, $B^1B^3D^4$, $B^1B^4C^1$, $B^1B^4C^2$, $B^1B^4D^1$, $B^1B^4D^2$, $B^1B^4D^3$, $B^1B^4D^4$, $B^1B^5C^1$, $B^1B^5C^2$, $B^1B^5D^1$, $B^1B^5D^2$, $B^1B^5D^3$, $B^1B^5D^4$, $B^1B^6C^1$, $B^1B^6C^2$, $B^1B^6D^1$, $B^1B^6D^2$, $B^1B^6D^3$, $B^1B^6D^4$, $B^1B^7C^1$, $B^1B^7C^2$, $B^1B^7D^1$, $B^1B^7D^2$, $B^1B^7D^3$, $B^1B^7D^4$, $B^1B^8C^1$, $B^1B^8C^2$, $B^1B^8D^1$, $B^1B^8D^2$, $B^1B^8D^3$, $B^1B^8D^4$, $B^2B^3C^1$, $B^2B^3D^1$, $B^1B^4C^1$, $B^2B^4D^1$, $B^2B^5C^1$, $B^2B^5D^1$, $B^2B^6C^1$, $B^2B^6C^1$, $B^2B^7C^1$, $B^2B^7D^1$, $B^2B^8C^1$, $B^2B^8D^1$, $B^3B^4C^1$, $B^3B^4D^1$, $B^3B^5C^1$, $B^3B^5D^1$, $B^3B^6C^1$, $B^3B^6C^1$, $B^3B^7C^1$, $B^3B^7D^1$, $B^3B^8C^1$, $B^3B^8D^1$, $B^4B^5C^1$, $B^4B^5D^1$, $B^4B^6C^1$, $B^4B^6D^1$, $B^4B^7C^1$, $B^4B^7D^1$, $B^4B^6D^1$, $B^4B^6D^1$, $B^5B^6C^1$, $B^5B^6C^1$, $B^5B^7C^1$, $B^5B^7D^1$, $B^5B^8C^1$, $B^5B^5D^1$, $B^6B^7C^1$, $B^6B^7D^1$, $B^6B^8C^1$, $B^6B^8D^1$, $B^7B^8C^1$, $B^7B^8C^1$, $C^1C^2D^1$, $C^1C^2D^2$, $C^1C^2D^3$, $C^1C^2D^4$; $A^1B^1B^2$, $A^1B^1B^3$, $A^1B^1B^4$, $A^1B^1B^5$, $A^1B^1B^6$, $A^1B^1B^7$, $A^1B^1B^8$, $A^1B^1C^1$, $A^1B^1C^2$, $A^1B^1D^1$, $A^1B^1D^2$, $A^1B^1D^3$, $A^1B^1D^4$; $A^2B^1B^2$, $A^2B^1B^3$, $A^2B^1B^4$, $A^2B^1B^5$, $A^2B^1B^6$, $A^2B^1B^7$, $A^2B^1B^8$, $A^2B^1C^1$, $A^2B^1C^2$, $A^2B^1D^1$, $A^2B^1D^2$, $A^2B^1D^3$, $A^2B^1D^4$; $A^3B^1B^2$, $A^3B^1B^3$, $A^3B^1B^4$, $A^3B^1B^5$, $A^3B^1B^6$, $A^3B^1B^7$, $A^3B^1B^8$, $A^3B^1C^1$, $A^3B^1C^2$, $A^3B^1D^1$, $A^3B^1D^2$, $A^3B^1D^3$, $A^3B^1D^4$; $A^4B^1B^2$, $A^4B^1B^3$, $A^4B^1B^4$, $A^4B^1B^5$, $A^4B^1B^6$, $A^4B^1B^7$, $A^4B^1B^8$, $A^4B^1C^1$, $A^4B^1C^2$, $A^4B^1D^1$, $A^4B^1D^2$, $A^4B^1D^3$, $A^4B^1D^4$; $A^5B^1B^2$, $A^5B^1B^3$, $A^5B^1B^4$, $A^5B^1B^5$, $A^5B^1B^6$, $A^5B^1B^7$, $A^5B^1B^8$, $A^5B^1C^1$, $A^5B^1C^2$, $A^5B^1D^1$, $A^5B^1D^2$, $A^5B^1D^3$, $A^5B^1D^4$; $A^1B^2B^3$, $A^1B^2B^4$, $A^1B^2B^5$, $A^1B^2B^6$, $A^1B^2B^7$, $A^1B^2B^8$, $A^1B^2C^1$, $A^1B^2C^2$, $A^1B^2D^1$, $A^1B^2D^2$, $A^1B^2D^3$, $A^1B^2D^4$; $A^2B^2C^1$, $A^2B^2D^1$, $A^3B^2C^1$, $A^3B^2D^1$, $A^3B^2D^2$, $A^4B^2C^1$, $A^4B^2D^1$, $A^5B^2C^1$, $A^5B^2D^1$, $A^1B^3B^4$, $A^1B^3B^5$, $A^1B^3B^6$, $A^1B^3B^7$, $A^1B^3B^8$, $A^1B^3C^1$, $A^1B^3C^2$, $A^1B^3D^1$, $A^1B^3D^2$, $A^1B^3D^3$, $A^1B^3D^4$; $A^2B^3C^1$, $A^2B^3D^1$, $A^3B^3C^1$, $A^3B^3D^1$, $A^4B^3C^1$, $A^4B^3D^1$, $A^5B^3C^1$, $A^1B^4B^5$, $A^1B^4B^6$, $A^1B^4B^7$, $A^1B^4B^8$, $A^1B^4C^1$, $A^1B^4C^2$, $A^1B^4D^1$, $A^1B^4D^2$, $A^1B^4D^3$, $A^1B^4D^4$; $A^2B^4C^1$, $A^3B^4C^1$, $A^3B^4D^1$, $A^4B^4C^1$, $A^4B^4D^1$, $A^5B^4C^1$, $A^5B^4D^1$, $A^1B^5B^6$, $A^1B^5B^7$, $A^1B^5B^8$, $A^1B^5C^1$, $A^1B^5C^2$, $A^1B^5D^1$, $A^1B^5D^2$, $A^1B^5D^3$, $A^1B^5D^4$; $A^2B^5C^1$, $A^2B^5D^1$, $A^3B^5C^1$, $A^3B^5D^1$, $A^4B^5C^1$, $A^4B^5D^1$, $A^5B^5C^1$, $A^5B^5D^1$, $A^1B^6B^7$, $A^1B^6B^8$, $A^1B^6C^1$, $A^1B^6C^2$, $A^1B^6D^1$, $A^1B^6D^2$, $A^1B^6D^3$, $A^1B^6D^4$; $A^2B^6C^1$, $A^2B^6D^1$, $A^3B^6C^1$, $A^3B^6D^1$, $A^4B^6C^1$, $A^4B^6D^1$, $A^1B^6C^1$, $A^1B^6C^2$, $A^1B^6D^1$, $A^1B^6D^2$, $A^1B^6D^3$, $A^1B^6D^4$; $A^1B^7B^8$, $A^1B^7C^1$, $A^1B^7C^2$, $A^1B^7D^1$, $A^1B^7D^2$, $A^1B^7D^3$, $A^1B^7D^4$; $A^2B^7C^1$, $A^2B^7D^1$, $A^3B^7C^1$, $A^3B^7D^1$, $A^4B^7C^1$, $A^4B^7D^1$, $A^5B^7C^1$, $A^5B^7D^1$, $A^1C^1C^2$, $A^1C^1D^1$, $A^1C^1D^2$, $A^1C^1D^3$, $A^1C^1D^4$; $A^2C^1C^2$, $A^2C^1D^1$, $A^2C^1D^2$, $A^2C^1D^3$, $A^2C^1D^4$; $A^3C^1C^2$, $A^3C^1D^1$, $A^3C^1D^2$, $A^3C^1D^3$, $A^3C^1D^4$; $A^4C^1C^2$, $A^4C^1D^1$, $A^4C^1D^2$, $A^4C^1D^3$, $A^4C^1D^4$; $A^5C^1C^2$, $A^5C^1D^1$, $A^5C^1D^2$, $A^5C^1D^3$, $A^5C^1D^4$; $A^1C^2D^1$, $A^1C^2D^2$, $A^1C^2D^3$, $A^1C^2D^4$; $A^2C^2D^1$, $A^4C^2D^1$, $A^5C^2D^1$, $A^1D^1D^2$, $A^1D^1D^3$, $A^1D^1D^4$; $A^2D^1D^2$, $A^2D^1D^3$, $A^2D^1D^4$; $A^3D^1D^2$, $A^3D^1D^3$, $A^3D^1D^4$; $A^4D^1D^2$, $A^4D^1D^3$, $A^4D^1D^4$; $A^5D^1D^2$, $A^5D^1D^3$, $A^5D^1D^4$; $A^1D^2D^3$, $A^1D^2D^4$; $A^1D^3D^4$; $B^1C^1C^2$, $B^1C^1D^1$, $B^1C^1D^2$, $B^1C^1D^3$, $B^1C^1D^4$; $B^2C^1C^2$, $B^2C^1D^1$, $B^2C^1D^2$, $B^2C^1D^3$, $B^2C^1D^4$; $B^3C^1C^2$, $B^3C^1D^1$, $B^3C^1D^2$, $B^3C^1D^3$, $B^3C^1D^4$; $B^4C^1C^2$, $B^4C^1D^1$, $B^4C^1D^2$, $B^4C^1D^3$, $B^4C^1D^4$; $B^5C^1C^2$, $B^5C^1D^1$, $B^5C^1D^2$, $B^5C^1D^3$, $B^5C^1D^4$; $B^6C^1C^2$, $B^6C^1D^1$, $B^6C^1D^2$, $B^6C^1D^3$, $B^6C^1D^4$; $B^7C^1C^2$, $B^7C^1D^1$, $B^7C^1D^2$, $B^7C^1D^3$, $B^7C^1D^4$; $B^8C^1C^2$; $B^8C^1D^1$; $B^8C^1D^2$; $B^8C^1D^3$; $B^8C^1D^4$; $B^1C^2D^1$, $B^1C^2D^2$, $B^1C^2D^3$, $B^1C^2D^4$; $B^2C^2D^1$, $B^3C^2D^1$, $B^4C^2D^1$, $B^5C^2D^1$, $B^6C^2D^1$, $B^7C^2D^1$, $B^8C^2D^1$; $C^1D^1D^2$, $C^1D^1D^3$, $C^1D^1D^4$; $C^2D^1D^2$, $C^2D^1D^3$, $C^2D^1D$; $C^1D^2D^3$, $C^1D^2D^4$; or $C^1D^3D^4$; wherein $A^1$ means D-allose, $A^2$ means D-altrose, $A^3$ means D-gulose, $A^4$ means D-idose, $A^5$ means D-talose, $B^1$ means L-allose, $B^2$ means L-altrose, $B^3$ means L-glucose, $B^4$ means L-mannose, $B^5$ means L-gulose, $B^6$ means L-idose, $B^7$ means L-galactose, $B^8$ means L-talose, $C^1$ means D-psicose, $C^2$ means D-tagatose, $D^1$ means L-psicose, $D^2$ means L-sorbose, $D^3$ means L-fmctose, and $D^4$ means L-tagatose.

Preferably, the composition according to the invention comprises a ternary combination of three rare hexoses independently selected from the rare D-aldohexoses, the rare L-aldohexoses, the rare D-ketohexoses, and the rare L-ketohexoses; wherein the overall content of the ternary combination of three rare hexoses is within the range of from 0.3 to 99.8 wt.-%, relative to the total content of all carbohydrates in the composition; preferably wherein said ternary combination is selected from the group consisting of $A^1A^2A^3$, $A^1A^2A^4$, $A^1A^2A^5$, $A^1A^3A^4$, $A^1A^3A^5$, $A^1A^4A^5$, $A^2A^3A^4$, $A^2A^3A^5$, $A^2A^4A^5$, $A^3A^4A^5$, $B^1B^2B^3$, $B^1B^2B^4$, $B^1B^2B^5$, $B^1B^2B^6$, $B^1B^2B^7$, $B^1B^2B^8$, $B^1B^3B^4$, $B^1B^3B^5$, $B^1B^3B^6$, $B^1B^3B^7$, $B^1B^3B^8$, $B^1B^4B^5$, $B^1B^4B^6$, $B^1B^4B^7$, $B^1B^4B^8$, $B^1B^5B^6$, $B^1B^5B^7$, $B^1B^5B^8$, $B^1B^6B^7$, $B^1B^6B^8$, $B^1B^7B^8$, $B^2B^3B^4$, $B^2B^3B^5$, $B^2B^3B^6$, $B^2B^3B^7$, $B^2B^3B^8$, $B^2B^4B^5$, $B^2B^4B^6$, $B^2B^4B^7$, $B^2B^4B^8$, $B^2B^5B^6$, $B^2B^5B^7$, $B^2B^5B^8$, $B^2B^6B^7$, $B^2B^6B^8$, $B^2B^7B^8$, $B^3B^4B^5$, $B^3B^4B^6$, $B^3B^4B^7$, $B^3B^4B^8$, $B^3B^5B^6$, $B^3B^5B^7$, $B^3B^5B^8$, $B^3B^6B^7$, $B^3B^6B^8$, $B^3B^7B^8$, $B^4B^5B^6$, $B^4B^5B^7$, $B^4B^5B^8$, $B^4B^6B^7$, $B^4B^6B^8$, $B^4B^7B^8$, $B^5B^6B^7$, $B^5B^6B^8B^5B^7B^8$, $B^6B^7B^8$, $D^1D^2D^3$, $D^1D^2D^4$, $D^1D^3D^4$, $D^2D^3D^4$, $A^1B^1C^1$, $A^2B^1C^1$, $A^3B^1C^1$, $A^4B^1C^1$, $A^5B^1C^1$, $A^1B^2C^1$, $A^2B^2C^1$, $A^3B^2C^1$, $A^4B^2C^1$, $A^5B^2C^1$, $A^1B^3C^1$, $A^2B^3C^1$, $A^3B^3C^1$, $A^4B^3C^1$, $A^5B^3C^1$, $A^1B^4C^1$, $A^2B^4C^1$, $A^3B^4C^1$, $A^4B^4C^1$, $A^5B^4C^1$, $A^1B^5C^1$, $A^2B^5C^1$, $A^3B^5C^1$, $A^4B^5C^1$, $A^5B^5C^1$, $A^1B^6C^1$, $A^2B^6C^1$, $A^3B^6C^1$, $A^4B^6C^1$, $A^5B^6C^1$, $A^1B^7C^1$, $A^2B^7C^1$, $A^3B^7C^1$, $A^4B^7C^1$, $A^5B^7C^1$, $A^1B^8C^1$, $A^2B^8C^1$, $A^3B^8C^1$, $A^4B^8C^1$, $A^5B^8C^1$, $A^1B^1C^2$, $A^2B^1C^2$, $A^3B^1C^2$, $A^4B^1C^2$, $A^5B^1C^2$, $A^1B^2C^2$, $A^2B^2C^2$, $A^3B^2C^2$, $A^4B^2C^2$, $A^5B^2C^2$, $A^1B^3C^2$, $A^2B^3C^2$, $A^3B^3C^2$, $A^4B^3C^2$, $A^5B^3C^2$, $A^1B^4C^2$, $A^2B^4C^2$, $A^3B^4C^2$, $A^4B^4C^2$, $A^5B^4C^2$, $A^1B^5C^2$, $A^2B^5C^2$, $A^3B^5C^2$. $A^4B^5C^2$, $A^5B^5C^2$, $A^1B^6C^2$, $A^2B^6C^2$, $A^3B^6C^2$, $A^4B^6C^2$, $A^5B^6C^2$, $A^1B^7C^2$, $A^2B^7C^2$, $A^3B^7C^2$, $A^4B^7C^2$, $A^5B^7C^2$, $A^1B^8C^2$, $A^2B^8C^2$, $A^3B^8C^2$, $A^4B^8C^2$, $A^5B^8C^2$, $A^1B^1D^1$, $A^2B^1D^1$, $A^3B^1D^1$, $A^4B^1D^1$, $A^5B^1D^1$, $A^1B^2D^1$, $A^2B^2D^1$, $A^3B^2D^1$, $A^4B^2D^1$, $A^5B^2D^1$, $A^1B^3D^1$, $A^2B^3D^1$, $A^3B^3D^1$, $A^4B^3D^1$, $A^5B^3D^1$, $A^1B^4D^1$, $A^2B^4D^1$, $A^3B^4D^1$, $A^4B^4D^1$, $A^5B^4D^1$, $A^1B^5D^1$, $A^2B^5D^1$, $A^3B^5D^1$, $A^4B^5D^1$, $A^5B^5D^1$, $A^1B^6D^1$, $A^2B^6D^1$, $A^3B^6D^1$, $A^4B^6D^1$, $A^5B^6D^1$, $A^1B^7D^1$, $A^2B^7D^1$, $A^3B^7D^1$, $A^4B^7D^1$, $A^5B^7D^1$, $A^1B^8D^1$, $A^2B^8D^1$, $A^3B^8D^1$, $A^4B^8D^1$, $A^5B^8D^1$, $A^1B^1D^2$, $A^2B^1D^2$, $A^3B^1D^2$, $A^4B^1D^2$, $A^5B^1D^2$, $A^1B^2D^2$, $A^2B^2D^2$, $A^3B^2D^2$, $A^4B^2D^2$, $A^5B^2D^2$, $A^1B^3D^2$, $A^2B^3D^2$, $A^3B^3D^2$, $A^4B^3D^2$, $A^5B^3D^2$, $A^1B^4D^2$, $A^2B^4D^2$, $A^3B^4D^2$, $A^4B^4D^2$, $A^5B^4D^2$, $A^1B^5D^2$, $A^2B^5D^2$, $A^3B^5D^2$, $A^4B^5D^2$, $A^5B^5D^2$, $A^1B^6D^2$, $A^2B^6D^2$, $A^3B^6D^2$, $A^4B^6D^2$, $A^5B^6D^2$, $A^1B^7D^2$, $A^2B^7D^2$, $A^3B^7D^2$, $A^4B^7D^2$, $A^5B^7D^2$, $A^1B^8D^2$, $A^2B^8D^2$, $A^3B^8D^2$, $A^4B^8D^2$, $A^5B^8D^2$, $A^1B^1D^3$, $A^2B^1D^3$, $A^3B^1D^3$, $A^4B^1D^3$, $A^5B^1D^3$, $A^1B^2D^3$, $A^2B^2D^3$, $A^3B^2D^3$, $A^4B^2D^3$, $A^5B^2D^3$, $A^1B^3D^3$, $A^2B^3D^3$, $A^3B^3D^3$, $A^4B^3D^3$, $A^5B^3D^3$, $A^1B^4D^3$, $A^2B^4D^3$, $A^3B^4D^3$, $A^4B^4D^3$, $A^5B^4D^3$, $A^1B^5D^3$, $A^2B^5D^3$, $A^3B^5D^3$, $A^4B^5D^3$, $A^5B^5D^3$, $A^1B^6D^3$, $A^2B^6D^3$, $A^3B^6D^3$, $A^4B^6D^3$, $A^5B^6D^3$, $A^1B^7D^3$, $A^2B^7D^3$, $A^3B^7D^3$, $A^4B^7D^3$, $A^5B^7D^3$, $A^1B^8D^3$, $A^2B^8D^3$, $A^3B^8D^3$, $A^4B^8D^3$, $A^5B^8D^3$, $A^1B^1D^4$, $A^2B^1D^4$, $A^3B^1D^4$, $A^4B^1D^4$, $A^5B^1D^4$, $A^1B^2D^4$, $A^2B^2D^4$, $A^3B^2D^4$, $A^4B^2D^4$, $A^5B^2D^4$, $A^1B^3D^4$, $A^2B^3D^4$, $A^3B^3D^4$, $A^4B^3D^4$,

$A^5B^3D^4$, $A^1B^4D^4$, $A^2B^4D^4$, $A^3B^4D^4$, $A^4B^4D^4$, $A^5B^4D^4$, $A^1B^5D^4$, $A^2B^5D^4$, $A^3B^5D^4$, $A^4B^5D^4$, $A^5B^5D^4$, $A^1B^6D^4$, $A^2B^6D^4$,
$A^3B^6D^4$, $A^4B^6D^4$, $A^5B^6D^4$, $A^1B^7D^4$, $A^2B^7D^4$, $A^3B^7D^4$, $A^4B^7D^4$, $A^5B^7D^4$, $A^1B^8D^4$, $A^2B^8D^4$, $A^3B^8D^4$, $A^4B^8D^4$, $A^5B^8D^4$,
$A^1C^1D^1$, $A^2C^1D^1$, $A^3C^1D^1$, $A^4C^1D^1$, $A^5C^1D^1$, $A^1C^2D^1$, $A^2C^2D^1$, $A^3C^2D^1$, $A^4C^2D^1$, $A^5C^2D^1$, $A^1C^1D^2$, $A^2C^1D^2$, $A^3C^1D^2$,
$A^4C^1D^2$, $A^5C^1D^2$, $A^1C^2D^2$, $A^2C^2D^2$, $A^3C^2D^2$, $A^4C^2D^2$, $A^5C^2D^2$, $A^1C^1D^3$, $A^2C^1D^3$, $A^3C^1D^3$, $A^4C^1D^3$, $A^5C^1D^3$, $A^1C^2D^3$,
$A^2C^2D^3$, $A^3C^2D^3$, $A^4C^2D^3$, $A^5C^2D^3$, $A^1C^1D^4$, $A^2C^1D^4$, $A^4C^1D^4$, $A^5C^1D^4$, $A^1C^2D^4$, $A^2C^2D^4$, $A^3C^2D^4$, $A^4C^2D^4$, $A^5C^2D^4$,
$B^1C^1D^1$, $B^2C^1D^1$, $B^3C^1D^1$, $B^4C^1D^1$, $B^5C^1D^1$, $B^6C^1D^1$, $B^7C^1D^1$, $B^8C^1D^1$, $B^1C^2D^1$, $B^2C^2D^1$, $B^3C^2D^1$, $B^4C^2D^1$, $B^5C^2D^1$,
$B^6C^2D^1$, $B^7C^2D^1$, $B^8C^2D^1$, $B^1C^1D^2$, $B^2C^1D^2$, $B^3C^1D^2$, $B^4C^1D^2$, $B^5C^1D^2$, $B^6C^1D^2$, $B^7C^1D^2$, $B^8C^1D^2$, $B^1C^2D^2$, $B^2C^2D^2$,
$B^3C^2D^2$, $B^4C^2D^2$, $B^5C^2D^2$, $B^6C^2D^2$, $B^7C^2D^2$, $B^8C^2D^2$, $B^1C^1D^3$, $B^2C^1D^3$, $B^3C^1D^3$, $B^4C^1D^3$, $B^5C^1D^3$, $B^6C^1D^3$, $B^7C^1D^3$,
$B^8C^1D^3$, $B^1C^2D^3$, $B^2C^2D^3$, $B^3C^2D^3$, $B^4C^2D^3$, $B^5C^2D^3$, $B^6C^2D^3$, $B^7C^2D^3$, $B^8C^2D^3$, $B^1C^1D^4$, $B^2C^1D^4$, $B^3C^1D^4$, $B^4C^1D^4$,
$B^5C^1D^4$, $B^6C^1D^4$, $B^7C^1D^4$, $B^8C^1D^4$, $B^1C^2D^4$, $B^2C^2D^4$, $B^3C^2D^4$, $B^4C^2D^4$, $B^5C^2D^4$, $B^6C^2D^4$, $B^7C^2D^4$, $B^8C^2D^4$, $A^1A^2B^1$,
$A^1A^2B^2$, $A^1A^2B^3$, $A^1A^2B^4$, $A^1A^2B^5$, $A^1A^2B^6$, $A^1A^2B^7$, $A^1A^2B^8$, $A^1A^2C^1$, $A^1A^2C^2$, $A^1A^2D^1$, $A^1A^2D^2$, $A^1A^2D^3$, $A^1A^2D^4$,
$A^1A^3B^1$, $A^1A^3B^2$, $A^1A^3B^3$, $A^1A^3B^4$, $A^1A^3B^5$, $A^1A^3B^6$, $A^1A^3B^7$, $A^1A^3B^8$, $A^1A^3C^1$, $A^1A^3C^2$, $A^1A^3D^1$, $A^1A^3D^2$, $A^1A^3D^3$,
$A^1A^3D^4$, $A^1A^4B^1$, $A^1A^4B^2$, $A^1A^4B^3$, $A^1A^4B^4$, $A^1A^4B^5$, $A^1A^4B^6$, $A^1A^4B^7$, $A^1A^4B^8$, $A^1A^4C^1$, $A^1A^4C^2$, $A^1A^4D^1$, $A^1A^4D^2$,
$A^1A^4D^3$, $A^1A^4D^4$, $A^1A^5B^1$, $A^1A^5B^2$, $A^1A^5B^3$, $A^1A^5B^4$, $A^1A^5B^5$, $A^1A^5B^6$, $A^1A^5B^7$, $A^1A^5B^8$, $A^1A^5C^1$, $A^1A^5C^2$, $A^1A^5D^1$,
$A^1A^5D^2$, $A^1A^5D^3$, $A^1A^5D^4$, $A^2A^3B^1$, $A^2A^3B^2$, $A^2A^3B^3$, $A^2A^3B^4$, $A^2A^3B^5$, $A^2A^3B^6$, $A^2A^3B^7$, $A^2A^3B^8$, $A^2A^3C^1$, $A^2A^3C^2$,
$A^2A^3D^1$, $A^2A^3D^2$, $A^2A^3D^3$, $A^2A^3D^4$, $A^2A^4B^1$, $A^2A^4B^2$, $A^2A^4B^3$, $A^2A^4B^4$, $A^2A^4B^5$, $A^2A^4B^6$, $A^2A^4B^7$, $A^2A^4B^8$, $A^2A^4C^1$,
$A^2A^4C^2$, $A^2A^4D^1$, $A^2A^4D^2$, $A^2A^4D^3$, $A^2A^4D^4$, $A^2A^5B^1$, $A^2A^5B^2$, $A^2A^5B^3$, $A^2A^5B^4$, $A^2A^5B^5$, $A^2A^5B^6$, $A^2A^5B^7$, $A^2A^5B^8$,
$A^2A^5C^1$, $A^2A^5C^2$, $A^2A^5D^1$, $A^2A^5D^2$, $A^2A^5D^3$, $A^2A^5D^4$, $A^3A^4B^1$, $A^3A^4B^2$, $A^3A^4B^3$, $A^3A^4B^4$, $A^3A^4B^5$, $A^3A^4B^6$, $A^3A^4B^7$,
$A^3A^4B^8$, $A^3A^4C^1$, $A^3A^4C^2$, $A^3A^4D^1$, $A^3A^4D^2$, $A^3A^4D^3$, $A^3A^4D^4$, $A^3A^5B^1$, $A^3A^5B^2$, $A^3A^5B^3$, $A^3A^5B^4$, $A^3A^5B^5$, $A^3A^5B^6$,
$A^3A^5B^7$, $A^3A^5B^8$, $A^3A^5C^1$, $A^3A^5C^2$, $A^3A^5D^1$, $A^3A^5D^2$, $A^3A^5D^3$, $A^3A^5D^4$, $A^4A^5B^1$, $A^4A^5B^2$, $A^4A^5B^3$, $A^4A^5B^4$, $A^4A^5B^5$,
$A^4A^5B^6$, $A^4A^5B^7$, $A^4A^5B^8$, $A^4A^5C^1$, $A^4A^5C^2$, $A^4A^5D^1$, $A^4A^5D^2$, $A^4A^5D^3$, $A^4A^5D^4$, $B^1B^2C^1$, $B^1B^2C^2$, $B^1B^2D^1$, $B^1B^2D^2$,
$B^1B^2D^3$, $B^1B^2D^4$, $B^1B^3C^1$, $B^1B^3C^2$, $B^1B^3D^1$, $B^1B^3D^2$, $B^1B^3D^3$, $B^1B^3D^4$, $B^1B^4C^1$, $B^1B^4C^2$, $B^1B^4D^1$, $B^1B^4D^2$, $B^1B^4D^3$,
$B^1B^4D^4$, $B^1B^5C^1$, $B^1B^5C^2$, $B^1B^5D^1$, $B^1B^5D^2$, $B^1B^5D^3$, $B^1B^5D^4$, $B^1B^6C^1$, $B^1B^6C^2$, $B^1B^6C^1$, $B^1B^6D^2$, $B^1B^6D^3$, $B^1B^6D^4$,
$B^1B^7C^1$, $B^1B^7C^2$, $B^1B^7D^1$, $B^1B^7D^2$, $B^1B^7D^3$, $B^1B^7D^4$, $B^1B^8C^1$, $B^1B^8C^2$, $B^1B^8C^1$, $B^1B^8D^2$, $B^1B^8D^3$, $B^1B^8D^4$, $B^2B^3C^1$,
$B^2B^3C^2$, $B^2B^3D^1$, $B^2B^3D^2$, $B^2B^3D^3$, $B^2B^3D^4$, $B^2B^4C^1$, $B^2B^4C^2$, $B^2B^4D^1$, $B^2B^4D^2$, $B^2B^4D^3$, $B^2B^4D^4$, $B^2B^5C^1$, $B^2B^5C^2$,
$B^2B^5D^1$, $B^2B^5D^2$, $B^2B^5D^3$, $B^2B^5D^4$, $B^2B^6C^1$, $B^2B^6C^2$, $B^2B^6D^1$, $B^2B^6D^2$, $B^2B^6D^3$, $B^2B^6D^4$, $B^2B^7C^1$, $B^2B^7C^2$, $B^2B^7D^1$,
$B^2B^7D^2$, $B^2B^7D^3$, $B^2B^7D^4$, $B^2B^8C^1$, $B^2B^8C^2$, $B^2B^8D^1$, $B^2B^8D^2$, $B^2B^8D^3$, $B^2B^8D^4$, $B^3B^4C^2$, $B^3B^4D^1$, $B^3B^4D^2$, $B^3B^4D^3$,
$B^3B^4D^4$, $B^3B^5C^1$, $B^3B^5C^2$, $B^3B^5D^1$, $B^3B^5D^2$, $B^3B^5D^3$, $B^3B^5D^4$, $B^3B^6C^1$, $B^3B^6C^2$, $B^3B^6D^1$, $B^3B^6D^2$, $B^3B^6D^3$, $B^3B^6D^4$,
$B^3B^7C^1$, $B^3B^7C^2$, $B^3B^7D^1$, $B^3B^7D^2$, $B^3B^7D^3$, $B^3B^7D^4$, $B^3B^8C^1$, $B^3B^8C^2$, $b^3B^8D^1$, $B^3B^8D^2$, $B^3B^8D^3$, $B^3B^8D^4$, $B^4B^5C^1$,
$B^4B^5C^2$, $B^4B^5D^1$, $B^4B^5D^2$, $B^4B^5D^3$, $B^4B^5D^4$, $B^4B^6C^1$, $B^4B^6C^2$, $B^4B^6D^1$, $B^4B^6D^2$, $B^4B^6D^3$, $B^4B^6D^4$, $B^4B^7C^1$, $B^4B^7C^2$,
$B^4B^7D^1$, $B^4B^7D^2$, $B^4B^7D^3$, $B^4B^7D^4$, $B^4B^8C^1$, $B^4B^8C^2$, $B^4B^8D^1$, $B^4B^8D^2$, $B^4B^8D^3$, $B^4B^8D^4$, $B^4B^6C^1$, $B^5B^6C^2$, $B^5B^6D^1$,
$B^5B^6D^2$, $B^5B^6D^3$, $B^5B^6D^4$, $B^5B^7C^1$, $B^5B^7C^2$, $B^5B^7D^1$, $B^5B^7D^2$, $B^5B^7D^3$, $B^5B^7D^4$, $B^5B^8C^1$, $B^5B^8C^2$, $B^5B^8D^1$, $B^5B^8D^2$,
$B^5B^8D^3$, $B^5B^8D^4$, $B^6B^7C^1$, $B^6B^7C^2$, $B^6B^7D^1$, $B^6B^7D^2$, $B^6B^7D^3$, $B^6B^7D^4$, $B^6B^8C^1$, $B^6B^8C^2$, $B^6B^8D^1$, $B^6B^8D^2$, $B^6B^8D^3$,
$B^6B^8D^4$, $B^7B^8C^1$, $B^7B^8C^2$, $B^7B^8D^1$, $B^7B^8D^2$, $B^7B^8D^3$, $B^7B^8D^4$, $C^1C^2D^1$, $C^1C^2D^2$, $C^1C^2D^3$, $C^1C^2D^4$, $A^1B^1B^2$, $A^1B^1B^3$,
$A^1B^1B^4$, $A^1B^1B^5$, $A^1B^1B^6$, $A^1B^1B^7$, $A^1B^1B^8$, $A^1B^1C^1$, $A^1B^1C^2$, $A^1B^1D^1$, $A^1B^1D^2$, $A^1B^1D^3$, $A^1B^1D^4$, $A^2B^1B^2$, $A^2B^1B^3$,
$A^2B^1B^4$, $A^2B^1B^5$, $A^2B^1B^6$, $A^2B^1B^7$, $A^2B^1B^8$, $A^2B^1C^1$, $A^2B^1C^2$, $A^2B^1D^1$, $A^2B^1D^2$, $A^2B^1D^3$, $A^2B^1D^4$, $A^3B^1B^2$, $A^3B^1B^3$,
$A^3B^1B^4$, $A^3B^1B^4$, $A^3B^1B^6$, $A^3B^1B^7$, $A^3B^1B^8$, $A^3B^1C^1$, $A^3B^1C^2$, $A^3B^1D^1$, $A^3B^1D^2$, $A^3B^1D^3$, $A^3B^1D^4$, $A^4B^1B^2$, $A^4B^1B^3$,
$A^4B^1B^4$, $A^4B^1B^5$, $A^4B^1B^6$, $A^4B^1B^7$, $A^4B^1B^8$, $A^4B^1C^1$, $A^4B^1C^2$, $A^4B^1D^1$, $A^4B^1D^2$, $A^4B^1D^3$, $A^4B^1D^4$, $A^5B^1B^2$, $A^5B^1B^3$,
$A^5B^1B^4$, $A^5B^1B^5$, $A^5B^1B^6$, $A^5B^1B^7$, $A^5B^1B^8$, $A^5B^1C^1$, $A^5B^1C^2$, $A^5B^1D^1$, $A^5B^1D^2$, $A^5B^1D^3$, $A^5B^1D^4$, $A^1B^2B^3$, $A^1B^2B^4$,
$A^1B^2B^5$, $A^1B^2B^6$, $A^1B^2B^7$, $A^1B^2B^8$, $A^1B^2C^1$, $A^1B^2C^2$, $A^1B^2D^1$, $A^1B^2D^2$, $A^1B^2D^3$, $A^1B^2D^4$, $A^2B^2B^3$, $A^2B^2B^4$, $A^2B^2B^5$,
$A^2B^2B^6$, $A^2B^2B^7$, $A^2B^2B^8$, $A^2B^2C^1$, $A^2B^2C^2$, $A^2B^2D^1$, $A^2B^2D^2$, $A^2B^2D^3$, $A^2B^2D^4$, $A^3B^2B^3$, $A^3B^2B^4$, $A^3B^2B^5$, $A^3B^2B^6$,
$A^3B^2B^7$, $A^3B^2B^8$, $A^3B^2C^1$, $A^3B^2C^2$, $A^3B^2D^1$, $A^3B^2D^2$, $A^3B^2D^3$, $A^3B^2D^4$, $A^4B^2B^3$, $A^4B^2B^4$, $A^4B^2B^5$, $A^4B^2B^6$, $A^4B^2B^7$,
$A^4B^2B^8$, $A^4B^2C^1$, $A^4B^2C^2$, $A^4B^2D^1$, $A^4B^2D^2$, $A^4B^2D^3$, $A^4B^2D^4$, $A^5B^2B^3$, $A^5B^2B^4$, $A^5B^2B^5$, $A^5B^2B^6$, $A^5B^2B^7$, $A^5B^2B^8$,
$A^5B^2C^1$, $A^5B^2C^2$, $A^5B^2D^1$, $A^5B^2D^2$, $A^5B^2D^3$, $A^5B^2D^4$, $A^1B^3B^4$, $A^1B^3B^6$, $A^1B^3B^7$, $A^1B^3B^8$, $A^1B^3C^1$, $A^1B^3C^1$, $A^1B^3C^2$,
$A^1B^3D^1$, $A^1B^3D^2$, $A^1B^3D^3$, $A^1B^3D^4$, $A^2B^3B^4$, $A^2B^3B^5$, $A^2B^3B^6$, $A^2B^3B^7$, $A^2B^3B^8$, $A^2B^3C^1$, $A^2B^3C^2$, $A^2B^3D^1$, $A^2B^3D^2$,
$A^2B^3D^3$, $A^2B^3D^4$, $A^3B^3B^4$, $A^3B^3B^5$, $A^3B^3B^6$, $A^3B^3B^7$, $A^3B^3B^8$, $A^3B^3C^1$, $A^3B^3C^2$, $A^3B^3D^1$, $A^3B^3D^2$, $A^3B^3D^3$, $A^3B^3D^4$,
$A^4B^3B^4$, $A^4B^3B^5$, $A^4B^3B^6$, $A^4B^3B^7$, $A^4B^3B^8$, $A^4B^3C^1$, $A^4B^3C^2$, $A^4B^3D^1$, $A^4B^3D^2$, $A^4B^3D^3$, $A^4B^3D^4$, $A^5B^3B^4$, $A^5B^3B^5$,
$A^5B^3B^6$, $A^5B^3B^7$, $A^5B^3B^8$, $A^5B^3C^1$, $A^5B^3C^2$, $A^5B^3D^1$, $A^5B^3D^2$, $A^5B^3D^3$, $A^5B^3D^4$, $A^1B^4B^5$, $A^1B^4B^6$, $A^1B^4B^7$, $A^1B^4B^8$,
$A^1B^4C^1$, $A^1B^4C^2$, $A^1B^4D^1$, $A^1B^4D^2$, $A^1B^4D^3$, $A^1B^4D^4$, $A^2B^4B^5$, $A^2B^4B^6$, $A^2B^4B^7$, $A^2B^4B^8$, $A^2B^4C^1$, $A^2B^4C^2$, $A^2B^4D^1$,
$A^2B^4D^2$, $A^2B^4D^3$, $A^2B^4D^4$, $A^3B^4B^5$, $A^3B^4B^6$, $A^3B^4B^7$, $A^3B^4B^8$, $A^3B^4C^1$, $A^3B^4C^2$, $A^3B^4D^1$, $A^3B^4D^2$, $A^3B^4D^3$, $A^3B^4D^4$,
$A^4B^4B^5$, $A^4B^4B^6$, $A^4B^4B^7$, $A^4B^4B^8$, $A^4B^4C^1$, $A^4B\ ^4C^2$, $A^4B^4D^1$, $A^4B^4D^2$, $A^4B^4D^3$, $A^4B^4D^4$, $A^4B^4B^5$, $A^5B^4B^6$, $A^5B^4B^7$,
$A^5B^4B^8$, $A^5B^4C^1$, $A^5B^4C^2$, $A^5B^4D^1$, $A^5B^4D^2$, $A^5B^4D^3$, $A^5B^4D^4$, $A^1B^5B^6$, $A^1B^5B^7$, $A^1B^5B^8$, $A^1B^5CI$, $A^1B^5C^2$, $A^1B^5D^1$,
$A^1B^5D^2$, $A^1B^5D^3$, $A^1B^5D^4$, $A^2B^5B^6$, $A^2B^5B^7$, $A^2B^5B^8$, $A^2B^5C^1$, $A^2B^5C^2$, $A^2B^5D^1$, $A^2B^5D^2$, $A^2B^5D^3$, $A^2B^5D^4$, $A^3B^5B^6$,
$A^3B^5B^7$, $A^3B^5B^8$, $A^3B^5C^1$, $A^3B^5C^2$, $A^3B^5D^1$, $A^3B^5D^2$, $A^3B^5D^3$, $A^3B^5D^4$, $A^4B^5B^6$, $A^4B^5B^7$, $A^4B^5B^8$, $A^4B^5C^1$, $A^4B^5C^2$,
$A^4B^5D^1$, $A^4B^5D^2$, $A^4B^5D^3$, $A^4B^5D^4$, $A^5B^5B^6$, $A^5B^5B^7$, $A^5B^5B^8$, $A^5B^5C^1$, $A^5B^5C^2$, $A^5B^5D^1$, $A^5B^5D^2$, $A^5B^5D^3$, $A^5B^5D^4$,
$A^1B^6B^7$, $A^1B^6B^8$, $A^1B^6C^1$, $A^1B^6C^2$, $A^1B^6D^1$, $A^1B^6D^2$, $A^1B^6D^3$, $A^1B^6D^4$, $A^2B^6B^7$, $A^2B^6B^8$, $A^2B^6C^1$, $A^2B^6C^2$, $A^2B^6D^1$,
$A^2B^6D^2$, $A^2B^6D^3$, $A^2B^6D^4$, $A^3B^6B^7$, $A^3B^6B^8$, $A^3B^6C^1$, $A^3B^6C^2$, $A^3B^6D^1$, $A^3B^6D^2$, $A^3B^6D^3$, $A^3B^6D^4$, $A^4B^6B^7$, $A^4B^6B^8$,
$A^4B^6C^1$, $A^4B^6C^2$, $A^4B^6D^1$, $A^4B^6D^2$, $A^4B^6D^3$, $A^4B^6D^4$, $A^4B^6B^7$, $A^5B^6B^8$, $A^1B^6C^1$, $A^1B^6C^2$, $A^1B^6D^1$, $A^1B^6D^2$, $A^1B^6D^3$,

$A^1B^6D^4$, $A^1B^7B^8$, $A^1B^7C^1$, $A^1B^7C^2$, $A^1B^7D^1$, $A^1B^7D^2$, $A^1B^7D^3$, $A^1B^7D^4$, $A^2B^7B^8$, $A^2B^7C^1$, $A^2B^7C^2$. $A^2B^7D^1$, $A^2B^7D^2$, $A^2B^7D^3$, $A^2B^7D^4$, $A^3B^7B^8$, $A^3B^7C^1$, $A^3B^7C^2$, $A^3B^7D^1$, $A^3B^7D^2$, $A^3B^7D^3$, $A^3B^7D^4$, $A^4B^7B^8$, $A^4B^7C^1$, $A^4B^7C^2$, $A^4B^7D^1$, $A^4B^7D^2$, $A^4B^7D^3$, $A^4B^7D^4$, $A^5B^7B^8$, $A^5B^7C^1$, $A^5B^7C^2$, $A^5B^7D^1$, $A^5B^7D^2$, $A^5B^7D^3$. $A^5B^7D^4$, $A^1C^1C^2$, $A^1C^1D^1$, $A^1C^1D^2$, $A^1C^1D^3$, $A^1C^1D^4$, $A^2C^1C^2$, $A^2C^1D^1$, $A^2C^1D^2$, $A^2C^1D^3$, $A^2C^1D^4$, $A^3C^1C^2$, $A^3C^1D^1$, $A^3C^1D^2$, $A^3C^1D^3$, $A^3C^1D^4$, $A^4C^1C^2$, $A^4C^1D^1$, $A^4C^1D^2$, $A^4C^1D^3$, $A^4C^1D^4$, $A^5C^1C^2$ $A^5C^1D^1$, $A^5C^1D^2$, $A^5C^1D^3$, $A^5C^1D^4$, $A^1C^2D^1$, $A^1C^2D^2$, $A^1C^2D^3$, $A^1C^2D^4$, $A^2C^2D^1$, $A^2C^2D^2$, $A^2C^2D^3$, $A^2C^2D^4$, $A^3C^2D^1$, $A^3C^2D^3$, $A^3C^2D^4$, $A^4C^2D^1$, $A^4C^2D^2$, $A^4C^2D^3$, $A^4C^2D^4$, $A^5C^2D^1$, $A^5C^2D^2$, $A^5C^2D^3$, $A^5C^2D^4$, $A^1D^1D^2$, $A^1D^1D^3$, $A^1D^1D^4$, $A^2D^1D^2$, $A^2D^1D^3$, $A^2D^1D^4$, $A^3D^1D^2$, $A^3D^1D^3$, $A^3D^1D^4$, $A^4D^1D^2$, $A^4D^1D^3$, $A^4D^1D^4$, $A^5D^1D^2$, $A^5D^1D^3$, $A^5D^1D^3$, $A^5D^1D^3$, $A^5D^1D^3$, $A^2D^2D^3$, $A^5D^1D^3$, $A^3D^2D^3$, $A^5D^1D^3$, $A^4D^2D^3$, $A^4D^2D^4$, $A^5D^2D^3$, $A^5D^2D^4$, $A^5D^1D^3$, $A^2D^3D^4$, $A^3D^3D^4$, $A^4D^3D^4$, $A^4D^3D^4$, $B^1C^1C^2$, $B^1C^1D^1$, $B^1C^1D^2$, $B^1C^1D^3$, $B^1C^1D^4$, $B^2C^1C^2$, $B^2C^1D^1$, $B^2C^1D^2$, $B^2C^1D^3$, $B^2C^1D^4$, $B^3C^1C^2$, $B^3C^1D^1$, $B^3C^1D^2$, $B^3C^1D^3$, $B^3C^1D^4$, $B^4C^1C^2$, $B^4C^1D^1$, $B^4C^1D^2$, $B^4C^1D^3$, $B^4C^1D^4$, $B^5C^1C^2$, $B^5C^1D^1$, $B^5C^1D^2$, $B^5C^1D^3$, $B^5C^1D^4$, $B^6C^1C^2$, $B^6C^1D^1$, $B^6C^1D^2$, $B^6C^1D^3$, $B^6C^1D^4$, $B^7C^1C^2$, $B^7C^1D^1$, $B^7C^1D^2$, $B^7C^1D^3$, $B^7C^1D^4$, $B^8C^1C^2$, $B^8C^1D^1$, $B^8C^1D^2$, $B^8C^1D^3$, $B^8C^1D^4$, $B^1C^2D^1$, $B^1C^2D^2$, $B^1C^2D^3$, $B^1C^2D^4$, $B^2C^2D^1$, $B^2C^2D^2$, $B^2C^2D^3$, $B^2C^2D^4$, $B^3C^2D^1$, $B^3C^2D^2$, $B^3C^2D^3$, $B^3C^2D^4$, $B^4C^2D^1$, $B^4C^2D^2$, $B^4C^2D^3$, $B^4C^2D^4$, $B^5C^2D^1$, $B^5C^2D^2$, $B^5C^2D^3$, $B^5C^2D^4$, $B^6C^2D^1$, $B^6C^2D^2$, $B^6C^2D^3$, $B^6C^2D^4$, $B^7C^2D^1$, $B^7C^2D^2$, $B^7C^2D^3$, $B^7C^2D^4$, $B^8C^2D^1$, $B^8C^2D^2$, $B^8C^2D^3$, $B^8C^2D^4$, $C^1D^1D^2$, $C^1D^1D^3$, $C^1D^1D^4$, $C^2D^1D^2$, $C^2D^1D^3$, $C^2D^1D$, $C^1D^2D^3$, $C^1D^2D^4$, $C^2D^2D^3$, $C^2D^2D^4$, $C^1D^3D^4$, and $C^2D^3D^4$; wherein $A^1$ means D-allose, $A^2$ means D-altrose, $A^3$ means D-gulose, $A^4$ means D-idose, $A^5$ means D-talose, $B^1$ means L-allose, $B^2$ means L-altrose, $B^3$ means L-glucose, $B^4$ means L-mannose, $B^5$ means L-gulose, $B^6$ means L-idose, $B^7$ means L-galactose, $B^8$ means L-talose, $C^1$ means D-psicose, $C^2$ means D-tagatose, $D^1$ means L-psicose, $D^2$ means L-sorbose, $D^3$ means L-fructose, and $D^4$ means L-tagatose; and wherein the content of each rare hexose within said ternary combination is at least 0.1 wt.-%, relative to the total content of all carbohydrates in the composition.

The content of said at least one rare hexose is at least 0.1 wt.-%, relative to the total content of all carbohydrates in the composition. This content only refers to a single one of said rare hexoses. Thus, if the composition according to the invention comprises two or three of said rare hexoses, the requirement is satisfied when the content of any one of said rare hexoses is within the defined range.

Preferably, the content of said at least one rare hexose is at least 0.2 wt.-%, or at least 0.3 wt.-%, or at least 0.4 wt.-%, or at least 0.5 wt.-%, or at least 0.6 wt.-%, or at least 0.7 wt.-%, or at least 0.8 wt.-%, or at least 0.9 wt.-%, or at least 1.0 wt.-%, or at least 1.1 wt.-%, or at least 1.2 wt.-%, or at least 1.3 wt.-%, or at least 1.4 wt.-%, or at least 1.5 wt.-%, or at least 1.6 wt.-%, or at least 1.7 wt.-%, or at least 1.8 wt.-%, or at least 1.9 wt.-%, or at least 2.0 wt.-%, or at least 2.1 wt.-%, or at least 2.2 wt.-%, or at least 2.3 wt.-%, or at least 2.4 wt.-%, or at least 2.5 wt.-%, or at least 2.6 wt.-%, or at least 2.7 wt.-%, or at least 2.8 wt.-%, or at least 2.9 wt.-%, or at least 3.0 wt.-%, or at least 3.1 wt.-%, or at least 3.2 wt.-%, or at least 3.3 wt.-%, or at least 3.44 wt.-%, or at least 3.5 wt.-%, or at least 3.6 wt.-%, or at least 3.7 wt.-%, or at least 3.8 wt.-%, or at least 3.9 wt.-%, or at least 4.0 wt.-%, or at least 4.1 wt.-%, or at least 4.2 wt.-%, or at least 4.3 wt.-%, or at least 4.4 wt.-%, or at least 4.5 wt.-%, or at least 4.6 wt.-%, or at least 4.7 wt.-%, or at least 4.8 wt.-%, or at least 4.9 wt.-%, relative to the total content of all carbohydrates in the composition.

Preferably, the content of said at least one rare hexose is at least 5.0 wt.-%, more preferably at least 5.0 wt.-%, still more preferably at least 7.5 wt.-%, yet more preferably at least 10 wt.-%, even more preferably at least 12.5 wt.-%, most preferably at least 15 wt.-%, and in particular at least 20 wt.-%, relative to the total content of all carbohydrates in the composition.

Preferably, the content of said at least one rare hexose is at most 65 wt.-%, at most 60 wt.-%, or at most 55 wt.-%, more preferably at most 50 wt.-%, still more preferably at most 45 wt.-%, yet more preferably at most 40 wt.-%, most preferably at most 35 wt.-%, and in particular at most 30 wt.-%, relative to the total content of all carbohydrates in the composition.

In preferred embodiments, the content of said at least one rare hexose is within the range of $5\pm2.5$ wt.-%, $10\pm7.5$ wt.-%, $10\pm5$ wt.-%, $15\pm12.5$ wt.-%, $15\pm10$ wt.-%, $15\pm7.5$ wt.-%, $15\pm5$ wt.-%, $20\pm17.5$ wt.-%, $20\pm15$ wt.-%, $20\pm12.5$ wt.-%, $20\pm10$ wt.-%, $20\pm7.5$ wt.-%, $20\pm5$ wt.-%, $25\pm22.5$ wt.-%, $25\pm20$ wt.-%, $25\pm17.5$ wt.-%, $25\pm15$ wt.-%, $25\pm12.5$ wt.-%, $25\pm10$ wt.-%, $25\pm7.5$ wt.-%, $25\pm5$ wt.-%, $30\pm25$ wt.-%, $30\pm22.5$ wt.-%, $30\pm20$ wt.-%, $30\pm17.5$ wt.-%, $30\pm15$ wt.-%, $30\pm12.5$ wt.-%, $30\pm10$ wt.-%, $30\pm7.5$ wt.-%, $30\pm5$ wt.-%, $35\pm20$ wt.-%, $35\pm17.5$ wt.-%, $35\pm15$ wt.-%, $35\pm12.5$ wt.-%, $35\pm10$ wt.-%, $35\pm7.5$ wt.-%, $35\pm5$ wt.-%, $40\pm15$ wt.-%, $40\pm12.5$ wt.-%, $40\pm10$ wt.-%, $40\pm7.5$ wt.-%, $40\pm5$ wt.-%, $45\pm10$ wt.-%, $45\pm7.5$ wt.-%, $45\pm5$ wt.-%, or $50\pm5$ wt.-%, relative to the total content of all carbohydrates in the composition.

In a preferred embodiment of the composition according to the invention

(I) said rare hexose is D-psicose or L-psicose, or said binary combination of two rare hexoses comprises D-psicose and/or L-psicose, or said ternary combination of three rare hexoses comprises D-psicose and/or L-psicose; preferably wherein the content of D-psicose or L-psicose is at least 1.0 wt.-%, relative to the total content of all carbohydrates in the composition; and/or

(II) said rare hexose is D-allose or L-allose, or wherein said binary combination of two rare hexoses comprises D-allose and/or L-allose, or wherein said ternary combination of three rare hexoses comprises D-allose and/or L-allose; preferably wherein the content of D-allose or L-allose is at least 1.0 wt.-%, relative to the total content of all carbohydrates in the composition.

Preferably, the composition according to the invention comprises D-psicose and the content of D-psicose is at least 0.2 wt.-%, or at least 0.3 wt.-%, or at least 0.4 wt.-%, or at least 0.5 wt.-%, or at least 0.6 wt.-%, or at least 0.7 wt.-%, or at least 0.8 wt.-%, or at least 0.9 wt.-%, or at least 1.0 wt.-%, or at least 1.1 wt.-%, or at least 1.2 wt.-%, or at least 1.3 wt.-%, or at least 1.4 wt.-%, or at least 1.5 wt.-%, or at least 1.6 wt.-%, or at least 1.7 wt.-%, or at least 1.8 wt.-%, or at least 1.9 wt.-%, or at least 2.0 wt.-%, or at least 2.1 wt.-%, or at least 2.2 wt.-%, or at least 2.3 wt.-%, or at least 2.4 wt.-%, or at least 2.5 wt.-%, or at least 2.6 wt.-%, or at least 2.7 wt.-%, or at least 2.8 wt.-%, or at least 2.9 wt.-%, or at least 3.0 wt.-%, or at least 3.1 wt.-%, or at least 3.2 wt.-%, or at least 3.3 wt.-%, or at least 3.44 wt.-%, or at least 3.5 wt.-%, or at least 3.6 wt.-%, or at least 3.7 wt.-%, or at least 3.8 wt.-%, or at least 3.9 wt.-%, or at least 4.0 wt.-%, or at least 4.1 wt.-%, or at least 4.2 wt.-%, or at least 4.3 wt.-%, or at least 4.4 wt.-%, or at least 4.5 wt.-%, or at least 4.6 wt.-%, or at least 4.7 wt.-%, or at least 4.8 wt.-%, or at least 4.9 wt.-%, relative to the total content of all carbohydrates in the composition.

Preferably, the composition according to the invention comprises D-psicose and the content of D-psicose is at least 5.0 wt.-%, more preferably at least 5.0 wt.-%, still more preferably at least 7.5 wt.-%, yet more preferably at least 10 wt.-%, even more preferably at least 12.5 wt.-%, most preferably at least 15 wt.-%, and in particular at least 20 wt.-%, relative to the total content of all carbohydrates in the composition.

Preferably, the composition according to the invention comprises D-psicose and the content of D-psicose is at most 65 wt.-%, at most 60 wt.-%, or at most 55 wt.-%, more preferably at most 50 wt.-%, still more preferably at most 45 wt.-%, yet more preferably at most 40 wt.-%, most preferably at most 35 wt.-%, and in particular at most 30 wt.-%, relative to the total content of all carbohydrates in the composition.

In preferred embodiments, the composition according to the invention comprises D-psicose and the content of D-psicose is within the range of 5±2.5 wt.-%, 10±7.5 wt.-%, 10±5 wt.-%, 15±12.5 wt.-%, 15±10 wt.-%, 15±7.5 wt.-%, 15±5 wt.-%, 20±17.5 wt.-%, 20±15 wt.-%, 20±12.5 wt.-%, 20±10 wt.-%, 20±7.5 wt.-%, 20±5 wt.-%, 25±22.5 wt.-%, 25±20 wt.-%, 25±17.5 wt.-%, 25±15 wt.-%, 25±12.5 wt.-%, 25±10 wt.-%, 25±7.5 wt.-%, 25±5 wt.-%, 30±25 wt.-%, 30±22.5 wt.-%, 30±20 wt.-%, 30±17.5 wt.-%, 30±15 wt.-%, 30±12.5 wt.-%, 30±10 wt.-%, 30±7.5 wt.-%, 30±5 wt.-%, 35±20 wt.-%, 35±17.5 wt.-%, 35±15 wt.-%, 35±12.5 wt.-%, 35±10 wt.-%, 35±7.5 wt.-%, 35±5 wt.-%, 40±15 wt.-%, 40±12.5 wt.-%, 40±10 wt.-%, 40±7.5 wt.-%, 40±5 wt.-%, 45±10 wt.-%, 45±7.5 wt.-%, 45±5 wt.-%, or 50±5 wt.-%, relative to the total content of all carbohydrates in the composition.

Preferably, the composition according to the invention comprises D-allose and the content of D-allose is at least 0.2 wt.-%, or at least 0.3 wt.-%, or at least 0.4 wt.-%, or at least 0.5 wt.-%, or at least 0.6 wt.-%, or at least 0.7 wt.-%, or at least 0.8 wt.-%, or at least 0.9 wt.-%, or at least 1.0 wt.-%, or at least 1.1 wt.-%, or at least 1.2 wt.-%, or at least 1.3 wt.-%, or at least 1.4 wt.-%, or at least 1.5 wt.-%, or at least 1.6 wt.-%, or at least 1.7 wt.-%, or at least 1.8 wt.-%, or at least 1.9 wt.-%, or at least 2.0 wt.-%, or at least 2.1 wt.-%, or at least 2.2 wt.-%, or at least 2.3 wt.-%, or at least 2.4 wt.-%, or at least 2.5 wt.-%, or at least 2.6 wt.-%, or at least 2.7 wt.-%, or at least 2.8 wt.-%, or at least 2.9 wt.-%, or at least 3.0 wt.-%, or at least 3.1 wt.-%, or at least 3.2 wt.-%, or at least 3.3 wt.-%, or at least 3.44 wt.-%, or at least 3.5 wt.-%, or at least 3.6 wt.-%, or at least 3.7 wt.-%, or at least 3.8 wt.-%, or at least 3.9 wt.-%, or at least 4.0 wt.-%, or at least 4.1 wt.-%, or at least 4.2 wt.-%, or at least 4.3 wt.-%, or at least 4.4 wt.-%, or at least 4.5 wt.-%, or at least 4.6 wt.-%, or at least 4.7 wt.-%, or at least 4.8 wt.-%, or at least 4.9 wt.-%, relative to the total content of all carbohydrates in the composition.

Preferably, the composition according to the invention comprises D-allose and the content of D-allose is at least 5.0 wt.-%, more preferably at least 5.0 wt.-%, still more preferably at least 7.5 wt.-%, yet more preferably at least 10 wt.-%, even more preferably at least 12.5 wt.-%, most preferably at least 15 wt.-%, and in particular at least 20 wt.-%, relative to the total content of all carbohydrates in the composition.

Preferably, the composition according to the invention comprises D-allose and the content of D-allose is at most 65 wt.-%, at most 60 wt.-%, or at most 55 wt.-%, more preferably at most 50 wt.-%, still more preferably at most 45 wt.-%, yet more preferably at most 40 wt.-%, most preferably at most 35 wt.-%, and in particular at most 30 wt.-%, relative to the total content of all carbohydrates in the composition.

In preferred embodiments, the composition according to the invention comprises D-allose and the content of D-allose is within the range of 5±2.5 wt.-%, 10±7.5 wt.-%, 10±5 wt.-%, 15±12.5 wt.-%, 15±10 wt.-%, 15±7.5 wt.-%, 15±5 wt.-%, 20±17.5 wt.-%, 20±15 wt.-%, 20±12.5 wt.-%, 20±10 wt.-%, 20±7.5 wt.-%, 20±5 wt.-%, 25±22.5 wt.-%, 25±20 wt.-%, 25±17.5 wt.-%, 25±15 wt.-%, 25±12.5 wt.-%, 25±10 wt.-%, 25±7.5 wt.-%, 25±5 wt.-%, 30±25 wt.-%, 30±22.5 wt.-%, 30±20 wt.-%, 30±17.5 wt.-%, 30±15 wt.-%, 30±12.5 wt.-%, 30±10 wt.-%, 30±7.5 wt.-%, 30±5 wt.-%, 35±20 wt.-%, 35±17.5 wt.-%, 35±15 wt.-%, 35±12.5 wt.-%, 35±10 wt.-%, 35±7.5 wt.-%, 35±5 wt.-%, 40±15 wt.-%, 40±12.5 wt.-%, 40±10 wt.-%, 40±7.5 wt.-%, 40±5 wt.-%, 45±10 wt.-%, 45±7.5 wt.-%, 45±5 wt.-%, or 50±5 wt.-

%, relative to the total content of all carbohydrates in the composition.

When the composition according to the invention comprises more than a single rare hexose, the overall content of all rare hexoses that are comprised in the composition preferably is at least 2.5 wt.-%, more preferably at least 5.0 wt.-%, still more preferably at least 7.5 wt.-%, yet more preferably at least 10 wt.-%, most preferably at least 15 wt.-%, and in particular at least 20 wt.-%, relative to the total content of all carbohydrates in the composition.

When the composition according to the invention comprises more than a single rare hexose, the overall content of all rare hexoses that are comprised in the composition preferably is at most 95 wt.-%, still more preferably at most 90 wt.-%, yet more preferably at most 85 wt.-%, most preferably at most 80 wt.-%, and in particular at most 75 wt.-%, relative to the total content of all carbohydrates in the composition.

When the composition according to the invention comprises more than a single rare hexose, the overall content of all rare hexoses that are comprised in the composition preferably is within the range of 5±2.5 wt.-%, 10±7.5 wt.-%, 10±5 wt.-%, 15±12.5 wt.-%, 15±10 wt.-%, 15±7.5 wt.-%, 15±5 wt.-%, 20±17.5 wt.-%, 20±15 wt.-%, 20±12.5 wt.-%, 20±10 wt.-%, 20±7.5 wt.-%, 20±5 wt.-%, 25±22.5 wt.-%, 25±20 wt.-%, 25±17.5 wt.-%, 25±15 wt.-%, 25±12.5 wt.-%, 25±10 wt.-%, 25±7.5 wt.-%, 25±5 wt.-%, 30±27.5 wt.-%, 30±25 wt.-%, 30±22.5 wt.-%, 30±20 wt.-%, 30±17.5 wt.-%, 30±15 wt.-%, 30±12.5 wt.-%, 30±10 wt.-%, 30±7.5 wt.-%, 30±5 wt.-%, 35±32.5 wt.-%, 35±30 wt.-%, 35±27.5 wt.-%, 35±25 wt.-%, 35±22.5 wt.-%, 35±20 wt.-%, 35±17.5 wt.-%, 35±15 wt.-%, 35±12.5 wt.-%, 35±10 wt.-%, 35±7.5 wt.-%, 35±5 wt.-%, 40±37.5 wt.-%, 40±35 wt.-%, 40±32.5 wt.-%, 40±30 wt.-%, 40±27.5 wt.-%, 40±25 wt.-%, 40±22.5 wt.-%, 40±20 wt.-%, 40±17.5 wt.-%, 40±15 wt.-%, 40±12.5 wt.-%, 40±10 wt.-%, 40±7.5 wt.-%, 40±5 wt.-%, 45±42.5 wt.-%, 45±40 wt.-%, 45±37.5 wt.-%, 45±35 wt.-%, 45±32.5 wt.-%, 45±30 wt.-%, 45±27.5 wt.-%, 45±25 wt.-%, 45±22.5 wt.-%, 45±20 wt.-%, 45±17.5 wt.-%, 45±15 wt.-%, 45±12.5 wt.-%, 45±10 wt.-%, 45±7.5 wt.-%, 45±5 wt.-%, 50±47.5 wt.-%, 50±45 wt.-%, 50±42.5 wt.-%, 50±40 wt.-%, 50±37.5 wt.-%, 50±35 wt.-%, 50±32.5 wt.-%, 50±30 wt.-%, 50±27.5 wt.-%, 50±25 wt.-%, 50±22.5 wt.-%, 50±20 wt.-%, 50±17.5 wt.-%, 50±15 wt.-%, 50±12.5 wt.-%, 50±10 wt.-%, 50±7.5 wt.-%, 50±5 wt.-%, 55±42.5 wt.-%, 55±40 wt.-%, 55±37.5 wt.-%, 55±35 wt.-%, 55±32.5 wt.-%, 55±30 wt.-%, 55±27.5 wt.-%, 55±25 wt.-%, 55±22.5 wt.-%, 55±20 wt.-%, 55±17.5 wt.-%, 55±15 wt.-%, 55±12.5 wt.-%, 55±10 wt.-%, 55±7.5 wt.-%, 55±5 wt.-%, 60±37.5 wt.-%, 60±35 wt.-%, 60±32.5 wt.-%, 60±30 wt.-%, 60±27.5 wt.-%, 60±25 wt.-%, 60±22.5 wt.-%, 60±20 wt.-%, 60±17.5 wt.-%, 60±15 wt.-%, 60±12.5 wt.-%, 60±10 wt.-%, 60±7.5 wt.-%, 60±5 wt.-%, 65±32.5 wt.-%, 65±30 wt.-%, 65±27.5 wt.-%, 65±25 wt.-%, 65±22.5 wt.-%, 65±20 wt.-%, 65±17.5 wt.-%, 65±15 wt.-%, 65±12.5 wt.-%, 65±10 wt.-%, 65±7.5 wt.-%, 65±5 wt.-%, 70±27.5 wt.-%, 70±25 wt.-%, 70±22.5 wt.-%, 70±20 wt.-%, 70±17.5 wt.-%, 70±15 wt.-%, 70±12.5 wt.-%, 70±10 wt.-%, 70±7.5 wt.-%, 70±5 wt.-%, 75±22.5 wt.-%, 75±20 wt.-%, 75±17.5 wt.-%, 75±15 wt.-%, 75±12.5 wt.-%, 75±10 wt.-%, 75±7.5 wt.-%, 75±5 wt.-%, 80±17.5 wt.-%, 80±15 wt.-%, 80±12.5 wt.-%, 80±10 wt.-%, 80±7.5 wt.-%, 80±5 wt.-%, 85±12.5 wt.-%, 85±10 wt.-%, 85±7.5 wt.-%, 85±5 wt.-%, 90±7.5 wt.-%, or 90±5 wt.-%, relative to the total content of all carbohydrates in the composition.

Preferably, the composition according to the invention comprises (i) the common D-aldohexoses D-glucose in combination with (ii) the common D-ketohexose D-fructose and in combination with (iii) the rare D-ketohexose D-psicose. According to this embodiment, the composition according to the invention preferably contains essentially no D-galactose and/or essentially no D-sorbose.

Preferably, the relative content of D-glucose, D-psicose and D-fructose follows one of the following orders: D-glucose > D-psicose > D-fructose; D-glucose > D-fructose > D-psicose; D-psicose > D-glucose > D-fructose; D-psicose > D-fructose > D-glucose; D-fructose > D-psicose > D-glucose; or D-fructose > D-glucose > D-psicose. The two embodiments D-glucose > D-fructose > D-psicose; and D-fructose > D-glucose > D-psicose are particularly preferred.

Preferred ranges for the contents of D-glucose, D-fructose and D-psicose in the composition according to the invention are summarized as embodiments $W^1$ to $W^{12}$ in the table here below, wherein all percentages are relative to the total content of all carbohydrates in the composition:

| [wt.-%] | $W^1$ | $W^2$ | $W^3$ | $W^4$ | $W^5$ | $W^6$ |
|---|---|---|---|---|---|---|
| D-glucose | 0.1-55 | 0.5-55 | 1.0-55 | 5.0-55 | 7.5-55 | 10-55 |
| D-fructose | 0.1-97.5 | 0.5-95 | 0.5-92.5 | 0.5-90 | 0.5-87.5 | 0.5-85 |
| D-psicose | 0.1-30 | 0.5-25 | 0.5-22.5 | 0.5-20 | 0.5-17.5 | 0.5-15 |
|  | $W^7$ | $W^8$ | $W^9$ | $W^{10}$ | $W^{11}$ | $W^{12}$ |
| D-glucose | 12.5-52.5 | 15-50 | 17.5-47.5 | 20-45 | 22.5-42.5 | 20-40 |
| D-fructose | 1.0-80 | 2.5-77.5 | 5.0-75 | 7.5-72.5 | 10-70 | 12.5-67.5 |
| D-psicose | 1.0-15 | 2.0-15 | 3.0-15 | 4.0-15 | 5.0-15 | 6.0-15 |

Preferably, the composition according to the invention comprises (i) the two common D-aldohexoses D-glucose and D-mannose in combination with (ii) the common D-ketohexose D-fructose and in combination with (iii) the rare D-ketohexose D-psicose. According to this embodiment, the composition according to the invention preferably contains essentially no D-galactose and/or essentially no D-sorbose.

Preferably, the relative content of D-glucose, D-mannose, D-fructose and D-psicose follows one of the following orders: D-glucose > D-mannose > D-fructose > D-psicose; D-glucose > D-mannose > D-psicose > D-fructose; D-glucose > D-fructose > D-mannose > D-psicose; D-glucose > D-fructose > D-psicose > D-mannose; D-glucose > D-psicose > D-mannose > D-fructose; D-glucose > D-psicose > D-fructose > D-mannose; D-mannose > D-glucose > D-fructose > D-psicose; D-mannose > D-glucose > D-psicose > D-fructose; D-mannose > D-fructose > D-glucose > D-psicose; D-mannose > D-fructose > D-psicose > D-glucose; D-mannose > D-psicose > D-glucose > D-fructose; D-mannose > D-psicose > D-fructose > D-glucose; D-fructose > D-glucose > D-mannose > D-psicose; D-fructose > D-glucose > D-psicose > D-mannose; D-fructose > D-psicose > D-glucose > D-mannose; D-fructose > D-psicose > D-mannose > D-glucose; D-fructose > D-mannose > D-glucose > D-psicose; D-fructose > D-mannose > D-psicose > D-glucose; D-psicose > D-glucose > D-mannose > D-fructose; D-psicose > D-glucose > D-fructose > D-mannose; D-psicose > D-mannose > D-glucose > D-fructose; D-psicose > D-mannose > D-fructose > D-glucose; D-psicose > D-fructose > D-glucose > D-mannose; or D-psicose > D-fructose > D-mannose > D-glucose. The four embodiments D-glucose > D-fructose > D-mannose > D-psicose; D-glucose > D-fructose > D-psicose > D-mannose; D-fructose > D-glucose > D-mannose > D-psicose; or D-fructose > D-glucose > D-psicose > D-mannose are particularly preferred.

Preferred ranges for the contents of D-glucose, D-mannose, D-fructose and D-psicose in the composition according to the invention are summarized as embodiments $X^1$ to $X^{12}$ in the table here below, wherein all percentages are relative to the total content of all carbohydrates in the composition:

| [wt.-%] | $X^1$ | $X^2$ | $X^3$ | $X^4$ | $X^3$ | $X^6$ |
|---|---|---|---|---|---|---|
| D-glucose | 0.1-55 | 0.5-55 | 1.0-55 | 5.0-55 | 7.5-55 | 10-55 |
| D-mannose | 0.1-40 | 0.5-37.5 | 0.5-35 | 0.5-32.5 | 0.5-30 | 0.5-27.5 |
| D-fructose | 0.1-97.5 | 0.5-95 | 0.5-92.5 | 0.5-90 | 0.5-87.5 | 0.5-85 |
| D-psicose | 0.1-30 | 0.5-25 | 0.5-22.5 | 0.5-20 | 0.5-17.5 | 0.5-15 |
| | $X^7$ | $X^8$ | $X^9$ | $X^{10}$ | $X^{11}$ | $X^{12}$ |
| D-glucose | 12.5-52.5 | 15-50 | 17.5-47.5 | 20-45 | 22.5-42.5 | 20-40 |
| D-mannose | 1.0-25 | 1.5-22.5 | 2.0-20 | 2.5-17.5 | 3.0-15 | 3.5-12.5 |
| D-fructose | 1.0-80 | 2.5-77.5 | 5.0-75 | 7.5-72.5 | 10-70 | 12.5-67.5 |
| D-psicose | 1.0-15 | 2.0-15 | 3.0-15 | 4.0-15 | 5.0-15 | 6.0-15 |

Preferably, the composition according to the invention comprises (i) the two common D-aldohexoses D-glucose and D-mannose in combination with (ii) the common D-ketohexose D-fructose and in combination with (iii) the two rare hexoses D-psicose and D-allose. According to this embodiment, the composition according to the invention preferably contains essentially no D-galactose and/or essentially no D-sorbose.

Preferably, the relative content of D-glucose, D-mannose, D-fructose, D-psicose and D-allose follows one of the following orders: D-glucose > D-mannose > D-fructose > D-psicose > D-allose; D-glucose > D-mannose > D-psicose > D-fructose > D-allose; D-glucose > D-fructose > D-mannose > D-psicose > D-allose; D-glucose > D-fructose > D-psicose > D-mannose > D-allose; D-glucose > D-psicose > D-mannose > D-fructose > D-allose; D-glucose > D-psicose > D-fructose > D-mannose > D-allose; D-mannose > D-glucose > D-fructose > D-psicose > D-allose; D-mannose > D-glucose > D-psicose > D-fructose > D-allose; D-mannose > D-fructose > D-glucose > D-psicose > D-allose; D-mannose > D-fructose > D-psicose > D-glucose > D-allose; D-mannose > D-psicose > D-glucose > D-fructose > D-allose; D-mannose > D-psicose > D-fructose > D-glucose > D-allose; D-fructose > D-glucose > D-mannose > D-psicose > D-allose; D-fructose > D-glucose > D-psicose > D-mannose > D-allose; D-fructose > D-psicose > D-glucose > D-mannose > D-allose; D-fructose > D-psicose > D-mannose > D-glucose > D-allose; D-fructose > D-mannose > D-psicose > D-glucose > D-allose; D-psicose > D-glucose > D-mannose > D-fructose > D-allose; D-psicose > D-glucose > D-fructose > D-mannose > D-allose; D-psicose > D-mannose > D-glucose > D-fructose > D-allose; D-psicose > D-mannose > D-fructose > D-glucose > D-allose; D-psicose > D-fructose > D-glucose > D-mannose > D-allose; D-psicose > D-fructose > D-mannose > D-glucose > D-allose; D-glucose > D-mannose > D-fructose > D-allose > D-psicose; D-glucose > D-mannose > D-psicose > D-allose > D-fructose; D-glucose > D-fructose > D-mannose > D-allose > D-psicose; D-glucose > D-fructose > D-psicose > D-allose > D-mannose; D-glucose > D-psicose > D-mannose > D-allose > D-fructose; D-glucose > D-psicose > D-fructose > D-allose > D-mannose;

D-mannose > D-glucose > D-fructose > D-allose > D-psicose; D-mannose > D-glucose > D-psicose > D-allose > D-fructose; D-mannose > D-fructose > D-glucose > D-allose > D-psicose; D-mannose > D-fructose > D-psicose > D-allose > D-glucose; D-mannose > D-psicose > D-glucose > D-allose > D-fructose; D-mannose > D-psicose > D-fructose > D-allose > D-glucose; D-fructose > D-glucose > D-mannose > D-allose > D-psicose; D-fructose > D-glucose > D-psicose > D-allose > D-mannose; D-fructose > D-psicose > D-glucose > D-allose > D-mannose; D-fructose > D-psicose > D-mannose > D-allose > D-glucose; D-fructose > D-mannose > D-glucose > D-allose > D-psicose; D-fructose > D-mannose > D-psicose > D-allose > D-glucose; D-psicose > D-glucose > D-mannose > D-allose > D-fructose; D-psicose > D-glucose > D-fructose > D-allose > D-mannose; D-psicose > D-mannose > D-glucose > D-allose > D-fructose; D-psicose > D-mannose > D-fructose > D-allose > D-glucose; D-psicose > D-fructose > D-glucose > D-allose > D-mannose; or D-psicose > D-fructose > D-mannose > D-allose > D-glucose.

Preferred ranges for the contents of D-glucose, D-mannose, D-fructose and D-psicose in the composition according to the invention are summarized as embodiments $Y^1$ to $Y^{12}$ in the table here below, wherein all percentages are relative to the total content of all carbohydrates in the composition:

| [wt.-%] | $Y^1$ | $Y^2$ | $Y^3$ | $Y^4$ | $Y^5$ | $Y^6$ |
|---|---|---|---|---|---|---|
| D-glucose | 0.1-55 | 0.5-55 | 1.0-55 | 5.0-55 | 7.5-55 | 10-55 |
| D-mannose | 0.1-40 | 0.5-37.5 | 0.5-35 | 0.5-32.5 | 0.5-30 | 0.5-27.5 |
| D-fructose | 0.1-97.5 | 0.5-95 | 0.5-92.5 | 0.5-90 | 0.5-87.5 | 0.5-85 |
| D-psicose | 0.1-30 | 0.5-25 | 0.5-22.5 | 0.5-20 | 0.5-17.5 | 0.5-15 |
| D-allose | 0.1-30 | 0.1-25 | 0.1-22.5 | 0.1-20 | 0.1-17.5 | 0.1-15 |
| | $Y^7$ | $Y^8$ | $Y^9$ | $Y^{10}$ | $Y^{11}$ | $Y^{12}$ |
| D-glucose | 12.5-52.5 | 15-50 | 17.5-47.5 | 20-45 | 22.5-42.5 | 20-40 |
| D-mannose | 1.0-25 | 1.5-22.5 | 2.0-20 | 2.5-17.5 | 3.0-15 | 3.5-12.5 |
| D-fructose | 1.0-80 | 2.5-77.5 | 5.0-75 | 7.5-72.5 | 10-70 | 12.5-67.5 |
| D-psicose | 1.0-15 | 2.0-15 | 3.0-15 | 4.0-15 | 5.0-15 | 6.0-15 |
| D-allose | 0.2-15 | 0.3-15 | 0.4-15 | 0.5-15 | 0.6-15 | 0.7-15 |

Preferably, the composition according to the invention comprises (i) the two common D-aldohexoses D-glucose and D-mannose in combination with (ii) the common D-ketohexose D-fructose and in combination with (iii) one or more rare hexoses. According to this embodiment, the composition according to the invention preferably contains essentially no D-galactose and/or essentially no D-sorbose.

Preferably, the relative content of D-glucose, D-mannose, D-fructose and overall content of all rare hexoses follows one of the following orders: D-glucose > D-mannose > D-fructose > overall content of all rare hexoses; D-glucose > D-mannose > overall content of all rare hexoses > D-fructose; D-glucose > D-fructose > D-mannose > overall content of all rare hexoses; D-glucose > D-fructose > overall content of all rare hexoses > D-mannose; D-glucose > overall content of all rare hexoses > D-mannose > D-fructose; D-glucose > overall content of all rare hexoses > D-fructose > D-mannose; D-mannose > D-glucose > D-fructose > overall content of all rare hexoses; D-mannose > D-glucose > overall content of all rare hexoses > D-fructose; D-mannose > D-fructose > D-glucose > overall content of all rare hexoses; D-mannose > D-fructose > overall content of all rare hexoses > D-glucose; D-mannose > overall content of all rare hexoses > D-glucose > D-fructose; D-mannose > overall content of all rare hexoses > D-fructose > D-glucose; D-fructose > D-glucose > D-mannose > overall content of all rare hexoses; D-fructose > D-glucose > overall content of all rare hexoses > D-mannose; D-fructose > overall content of all rare hexoses > D-glucose > D-mannose; D-fructose > overall content of all rare hexoses > D-mannose > D-glucose; D-fructose > D-mannose > D-glucose > overall content of all rare hexoses; D-fructose > D-mannose > overall content of all rare hexoses > D-glucose; overall content of all rare hexoses > D-glucose > D-mannose > D-fructose; overall content of all rare hexoses > D-glucose > D-fructose > D-mannose; overall content of all rare hexoses > D-mannose > D-glucose > D-fructose; overall content of all rare hexoses > D-mannose > D-fructose > D-glucose; overall content of all rare hexoses > D-fructose > D-glucose > D-mannose; or overall content of all rare hexoses > D-fructose > D-mannose > D-glucose. The four embodiments D-glucose > D-fructose > D-mannose > overall content of all rare hexoses; D-glucose > D-fructose > overall content of all rare hexoses > D-mannose; D-fructose > D-glucose > D-mannose > overall content of all rare hexoses; or D-fructose > D-glucose > overall content of all rare hexoses > D-mannose are particularly preferred.

Preferred ranges for the contents of D-glucose, D-mannose, D-fructose and the overall content of all rare hexoses in the composition according to the invention are summarized as embodiments $Z^1$ to $Z^{12}$ in the table here below, wherein all percentages are relative to the total content of all carbohydrates in the composition:

| [wt.-%] | $Z^1$ | $Z^2$ | $Z^3$ | $Z^4$ | $Z^5$ | $Z^6$ |
|---|---|---|---|---|---|---|
| D-glucose | 0.1-55 | 0.5-55 | 1.0-55 | 5.0-55 | 7.5-55 | 10-55 |
| D-mannose | 0.1-40 | 0.5-37.5 | 0.5-35 | 0.5-32.5 | 0.5-30 | 0.5-27.5 |
| D-fructose | 0.1-97.5 | 0.5-95 | 0.5-92.5 | 0.5-90 | 0.5-87.5 | 0.5-85 |
| rare hexoses | 0.1-40 | 0.5-37.5 | 0.5-35 | 0.5-32.5 | 0.5-30 | 0.5-27.5 |
|  | $Z^7$ | $Z^8$ | $Z^9$ | $Z^{10}$ | $Z^{11}$ | $Z^{12}$ |
| D-glucose | 12.5-52.5 | 15-50 | 17.5-47.5 | 20-45 | 22.5-42.5 | 20-40 |
| D-mannose | 1.0-25 | 1.5-22.5 | 2.0-20 | 2.5-17.5 | 3.0-15 | 3.5-12.5 |
| D-fructose | 1.0-80 | 2.5-77.5 | 5.0-75 | 7.5-72.5 | 10-70 | 12.5-67.5 |
| rare hexoses | 1.0-25 | 2.0-25 | 3.0-25 | 4.0-25 | 5.0-25 | 6.0-25 |

As component (iv), the composition according to the invention comprises at least one carboxylic acid.

Preferably, the carboxylic acid is non-volatile under ambient conditions. Preferably, under ambient air pressure, the carboxylic acid has a boiling point of more than 120°C, more preferably more than 150°C.

The carboxylic acid may comprise a monocarboxylic acid, such as formic acid, acetic acid or propionic acid; a dicarboxylic acid, such as oxalic acid, malonic acid, succinic acid, fumaric acid, maleic acid, tartaric acid, glutaric acid, or adipic acid; and/or a multicarboxylic acid such as citric acid, isocitric acid, aconitic acid or propane-1,2,3-tricarboxylic acid. Preferably, the carboxylic acid comprises a multicarboxylic acid, more preferably citric acid.

The carboxylic acid may comprise a hydroxycarboxylic acid such as lactic acid, tartaric acid, isocitric acid, or citric acid. Preferably, the carboxylic acid comprises a hydroxycarboxylic acid, more preferably citric acid.

Preferably, the content of the carboxylic acid is at least 0.1 wt.-%, relative to the total weight of the composition.

Preferably, the content of said at least one carboxylic acid is at least 0.1 wt.-%, more preferably at least 0.2 wt.-%, still more preferably at least 0.3 wt.-%, yet more preferably at least 0.4 wt.-%, even more preferably at least 0.5 wt.-%, most preferably at least 0.75 wt.-%, and in particular at least 1.0 wt.-%, relative to the total weight the composition.

Preferably, the content of said at least one carboxylic acid is at most 9.0 wt.-%, still more preferably at most 8.0 wt.-%, yet more preferably at most 7.0 wt.-%, most preferably at most 6.0 wt.-%, and in particular at most 5.0 wt.-%, relative to the total weight the composition.

In preferred embodiments, the content of said at least one carboxylic acid is within the range of 0.05±0.025 wt.-%, 0.10±0.075 wt.-%, 0.10±0.05 wt.-%, 0.15±0.125 wt.-%, 0.15±0.10 wt.-%, 0.15±0.075 wt.-%, 0.15±0.05 wt.-%, 0.20±0.175 wt.-%, 0.20±0.15 wt.-%, 0.20±0.125 wt.-%, 0.20±0.10 wt.-%, 0.20±0.075 wt.-%, 0.20±0.05 wt.-%, 0.25±0.225 wt.-%, 0.25±0.20 wt.-%, 0.25±0.175 wt.-%, 0.25±0.15 wt.-%, 0.25±0.125 wt.-%, 0.25±0.10 wt.-%, 0.25±0.075 wt.-%, 0.25±0.05 wt.-%, 0.30±0.275 wt.-%, 0.30±0.25 wt.-%, 0.30±0.225 wt.-%, 0.30±0.20 wt.-%, 0.30±0.175 wt.-%, 0.30±0.15 wt.-%, 0.30±0.125 wt.-%, 0.30±0.10 wt.-%, 0.30±0.075 wt.-%, 0.30±0.05 wt.-%, 0.35±0.325 wt.-%, 0.35±0.30 wt.-%, 0.35±0.275 wt.-%, 0.35±0.25 wt.-%, 0.35±0.225 wt.-%, 0.35±0.20 wt.-%, 0.35±0.175 wt.-%, 0.35±0.15 wt.-%, 0.35±0.125 wt.-%, 0.35±0.10 wt.-%, 0.35±0.075 wt.-%, 0.35±0.05 wt.-%, 0.40±0.375 wt.-%, 0.40±0.35 wt.-%, 0.40±0.325 wt.-%, 0.40±0.30 wt.-%, 0.40±0.275 wt.-%, 0.40±0.25 wt.-%, 0.40±0.225 wt.-%, 0.40±0.20 wt.-%, 0.40±0.175 wt.-%, 0.40±0.15 wt.-%, 0.40±0.125 wt.-%, 0.40±0.10 wt.-%, 0.40±0.075 wt.-%, 0.40±0.05 wt.-%, 0.45±0.425 wt.-%, 0.45±0.40 wt.-%, 0.45±0.375 wt.-%, 0.45±0.35 wt.-%, 0.45±0.325 wt.-%, 0.45±0.30 wt.-%, 0.45±0.275 wt.-%, 0.45±0.25 wt.-%, 0.45±0.225 wt.-%, 0.45±0.20 wt.-%, 0.45±0.175 wt.-%, 0.45±0.15 wt.-%, 0.45±0.125 wt.-%, 0.45±0.10 wt.-%, 0.45±0.075 wt.-%, 0.45±0.05 wt.-%, 0.50±0.475 wt.-%, 0.50±0.45 wt.-%, 0.50±0.425 wt.-%, 0.50±0.40 wt.-%, 0.50±0.375 wt.-%, 0.50±0.35 wt.-%, 0.50±0.325 wt.-%, 0.50±0.30 wt.-%, 0.50±0.275 wt.-%, 0.50±0.25 wt.-%, 0.50±0.225 wt.-%, 0.50±0.20 wt.-%, 0.50±0.175 wt.-%, 0.50±0.15 wt.-%, 0.50±0.125 wt.-%, 0.50±0.10 wt.-%, 0.50±0.075 wt.-%, 0.50±0.05 wt.-%, 0.55±0.425 wt.-%, 0.55±0.40 wt.-%, 0.55±0.375 wt.-%, 0.55±0.35 wt.-%, 0.55±0.325 wt.-%, 0.55±0.30 wt.-%, 0.55±0.275 wt.-%, 0.55±0.25 wt.-%, 0.55±0.225 wt.-%, 0.55±0.20 wt.-%, 0.55±0.175 wt.-%, 0.55±0.15 wt.-%, 0.55±0.125 wt.-%, 0.55±0.10 wt.-%, 0.55±0.075 wt.-%, 0.55±0.05 wt.-%, 0.60±0.375 wt.-%, 0.60±0.35 wt.-%, 0.60±0.325 wt.-%, 0.60±0.30 wt.-%, 0.60±0.275 wt.-%, 0.60±0.25 wt.-%, 0.60±0.225 wt.-%, 0.60±0.20 wt.-%, 0.60±0.175 wt.-%, 0.60±0.15 wt.-%, 0.60±0.125 wt.-%, 0.60±0.10 wt.-%, 0.60±0.075 wt.-%, 0.60±0.05 wt.-%, 0.65±0.325 wt.-%, 0.65±0.30 wt.-%, 0.65±0.275 wt.-%, 0.65±0.25 wt.-%, 0.65±0.225 wt.-%, 0.65±0.20 wt.-%, 0.65±0.175 wt.-%, 0.65±0.15 wt.-%, 0.65±0.125 wt.-%, 0.65±0.10 wt.-%, 0.65±0.075 wt.-%, 0.65±0.05 wt.-%,

0.70±0.275 wt.-%, 0.70±0.25 wt.-%, 0.70±0.225 wt.-%, 0.70±0.20 wt.-%, 0.70±0.175 wt.-%, 0.70±0.15 wt.-%, 0.70±0.125 wt.-%, 0.70±0.10 wt.-%, 0.70±0.075 wt.-%, 0.70±0.05 wt.-%, 0.75±0.225 wt.-%, 0.75±0.20 wt.-%, 0.75±0.175 wt.-%, 0.75±0.15 wt.-%, 0.75±0.125 wt.-%, 0.75±0.10 wt.-%, 0.75±0.075 wt.-%, 0.75±0.05 wt.-%, 0.80±0.175 wt.-%, 0.80±0.15 wt.-%, 0.80±0.125 wt.-%, 0.80±0.10 wt.-%, 0.80±0.075 wt.-%, 0.80±0.05 wt.-%, 0.85±0.125 wt.-%, 0.85±0.10 wt.-%, 0.85±0.075 wt.-%, 0.85±0.05 wt.-%, 0.90±0.075 wt.-%, or 90±0.05 wt.-%, relative to the total weight the composition.

The carboxylic acid may be contained in the composition according to the invention in free form or in form of a salt thereof. Preferably, the carboxylic acid is present as the carboxylate salt, preferably with a counter ion selected from alkaline metals and alkaline earth metals, preferably sodium or potassium. Sodium citrate and potassium citrate are particularly preferred.

While the chemical nature of the carboxylic acid is principally not particularly limited, it has been found that citric acid has certain advantages, particularly when the composition according to the invention is devoted for use in foodstuffs as such, i.e. without purification. Furthermore, it has been found that carboxylic acids have advantages compared to inorganic acids such as hydrochloric acid.

Besides carbohydrates, carboxylic acid(s), caramelization products and water, the composition according to the invention preferably comprises only minor amounts of other ingredients, if any. Preferably, the overall content of all carbohydrates amounts to at least 90 wt.-%, more preferably at least 92.5 wt.-%, still more preferably at least 95 wt.-%, yet more preferably at least 97.5 wt.-%, most preferably at least 98 wt.-%, and in particular at least 99 wt.-%, of the total dry matter content of the carbohydrate composition.

Preferably, the composition according to the invention comprises no proteinaceous material such as enzymes.

Preferably, the composition according to the invention comprises no liquid constituents other than water, especially no pyridine.

Preferably, the composition according to the invention has a pH value within the range of from 5.0 to 9.0. When the composition as such is not liquid enough so that the pH value cannot be directly measured, the composition according to the invention preferably provides a pH value within the range of from 5.0 to 9.0 when being provided in aqueous solution at a concentration of 1.0 wt.-%.

Another aspect of the invention relates to a process for the preparation of an aqueous caramelized carbohydrate composition according to any of the preceding claims comprising the step of

(A) providing an aqueous starting material comprising

- at least one common D-aldohexose selected from the group consisting of D-glucose, D-mannose, and D-galactose; and/or

- at least one common D-ketohexose selected from the group consisting of D-fructose and D-sorbose; and/or

- at least one disaccharide comprising at least one common D-aldohexose selected from the group consisting of D-glucose, D-mannose, and D-galactose; and/or at least one common D-ketohexose selected from the group consisting of D-fructose and D-sorbose;

(B) decreasing the pH value of the aqueous starting material by means of a carboxylic acid;

(C) heating the mixture to a caramelization temperature at which caramelization occurs;

(D) increasing the pH value of the caramelized mixture obtained in step (C) by means of at least one base; and

(E) heating the mixture to an isomerization temperature at which carbohydrate isomerization occurs.

All preferred embodiments of the aqueous caramelized carbohydrate composition according to the invention that have been described above also analogously apply to the process according to the invention.

In step (A) of the process according to the invention, an aqueous starting material is provided that comprises

- at least one common D-aldohexose selected from the group consisting of D-glucose, D-mannose, and D-galactose; and/or

- at least one common D-ketohexose selected from the group consisting of D-fructose and D-sorbose; and/or

- at least one disaccharide comprising

- at least one common D-aldohexose selected from the group consisting of D-glucose, D-mannose, and D-galactose; and/or
- at least one common D-ketohexose selected from the group consisting of D-fructose and D-sorbose; preferably sucrose.

In this context, *"comprising"* means that the glycosidic bond of the disaccharide is between two monosaccharides whereas at least one of said two monosaccharides, preferably both, is a common D-aldohexose and/or a common D-ketohexose.

In a preferred embodiment, the aqueous starting material comprises D-fructose, but essentially neither any common D-aldohexose nor D-sorbose. According to this embodiment, the D-fructose is preferably the major carbohydrate constituent of the aqueous starting material. The D-fructose may be employed e.g. in form of a D-fructose syrup. Preferably, the content of D-fructose in the aqueous starting material is at least 90 wt.-%, more preferably at least 92.5 wt.-%, still more preferably at least 95 wt.-%, yet more preferably at least 97.5 wt.-%, most preferably at least 98 wt.-%, and in particular at least 99 wt.-%, relative to the total content of all carbohydrates in the starting material.

In another preferred embodiment, the aqueous starting material comprises a combination of D-glucose and D-fructose, but preferably essentially neither D-mannose nor D-galactose, nor D-sorbose. According to this embodiment, the D-glucose and the D-fructose are preferably the major carbohydrate constituents of the aqueous starting material. The mixture of D-glucose and D-fructose may be employed e.g. in form of an inverted sugar syrup which can be provided e.g. by acidic treatment of sucrose. Preferably, the overall content of D-glucose and D-fructose in the aqueous starting material is at least 90 wt.-%, more preferably at least 92.5 wt.-%, still more preferably at least 95 wt.-%, yet more preferably at least 97.5 wt.-%, most preferably at least 98 wt.-%, and in particular at least 99 wt.-%, relative to the total content of all carbohydrates in the starting material. Preferably, the relative weight ratio of D-glucose : D-fructose in the aqueous starting material is within the range of from 3:1 to 1:3, more preferably 2:1 to 1:2, still more preferably 1.5:1 to 1:1.5, yet more preferably 1.4:1 to 1:1.4, even more preferably 1.3:1 to 1:1.3, most preferably 1.2:1 to 1:1.2, and in particular 1.1:1 to 1:1.1.

In still another preferred embodiment, the aqueous starting material comprises sucrose, but preferably essentially neither D-glucose, nor D-fructose, nor D-mannose, nor D-galactose, nor D-sorbose; more preferably essentially no monosaccharide. According to this embodiment, the sucrose is preferably the major carbohydrate constituent of the aqueous starting material. Preferably, the overall content of sucrose in the aqueous starting material is at least 90 wt.-%, more preferably at least 92.5 wt.-%, still more preferably at least 95 wt.-%, yet more preferably at least 97.5 wt.-%, most preferably at least 98 wt.-%, and in particular at least 99 wt.-%, relative to the total content of all carbohydrates in the starting material.

When the aqueous starting material comprises sucrose, the sucrose may be employed in form of crystalline and purified sucrose, obtained e.g. from sugar beet or sugar cane, which has been mixed with an appropriate amount of water. Alternatively and preferably, however, the sucrose is employed in form of a crude material typically obtained as intermediate product in sucrose production, such as raw juice, sugar syrup or melasse.

In step (B) of the process according to the invention, the pH value of the aqueous starting material is decreased by means of at least one carboxylic acid. Nature and amount of the carboxylic acid are preferably as described above. Preferably, the carboxylic acid is added to the aqueous starting material batchwise or continuously. Preferably, the pH value is decreased to a pH value within the range of from 3 to 6.5, more preferably within the range of $3.5\pm0.5$, $4.0\pm0.5$, $4.5\pm0.5$, $5.0\pm0.5$, $5.5\pm0.5$, or $6.0\pm0.5$.

In step (C) of the process according to the invention, the mixture is heated to a caramelization temperature at which, under the given conditions, caramelization occurs. The caramelization temperature depends upon the chemical nature of the ingredients of the aqueous starting material and can be determined easily by routine experimentation. Preferably, the caramelization temperature is within the range of from 40 to 95°C, more preferably $50\pm20$°C, $55\pm20$°C, $60\pm20$°C, $65\pm20$°C, $70\pm20$°C, $75\pm20$°C, or $80\pm20$°C, still more preferably $40\pm10$°C. $45\pm10$°C, $50\pm10$°C, $55\pm10$°C, $60\pm10$°C, $65\pm10$°C, $70\pm10$°C, $75\pm10$°C, or $80\pm10$°C.

Preferably, the heated mixture is subjected to caramelization conditions for a period of time that is sufficient to achieve caramelization. The caramelization time depends upon the chemical nature of the ingredients of the aqueous starting material and the desired degree of caramelization and can be determined easily by routine experimentation. Typical caramelization times lie within the range of from 1 minute to 3 hours.

Steps (B) and (C) of the process according to the invention may be performed simultaneously or subsequently. Preferably, step (C) is performed after step (B).

While it is principally possible that the intermediate caramelized product obtained in step (C) is purified before it is subjected to the subsequent steps of the process according to the invention, it is preferably not purified but employed as such.

In step (D) of the process according to the invention, the pH value of the caramelized mixture obtained in step (C) is increased by means of at least one base. The base may be organic or inorganic. Preferably, the base is selected from the group consisting of sodium hydroxide, potassium hydroxide, magnesium hydroxide, calcium hydroxide, aluminium hydroxide, ammonia, and organic amines. Preferably, the base is added to the caramelized mixture batchwise or continuously. Preferably, the pH value is increased to a pH value within the range of from 7.5 to 14, more preferably within the range of $8.0\pm0.5$, $8.5\pm0.5$, $9.0\pm0.5$, $9.5\pm0.5$, $10.0\pm0.5$, $10.5\pm0.5$, $11.0\pm0.5$, $11.5\pm0.5$, $12.0\pm0.5$, $12.5\pm0.5$, $13.0\pm0.5$, or $13.5\pm0.5$.

In a preferred embodiment, the base is immobilized on a solid support. Suitable support materials are known to the skilled person and are commercially available, e.g. as strong anion exchange resins, zeolithes, immobilized Lewis bases, and the like.

In step (E) of the process according to the invention, the mixture is heated to an isomerization temperature at which, under the given conditions, carbohydrate isomerization occurs. Carbohydrate isomerization according to the invention typically involves Lobry-de-Bruyn-Alberda-van-Ekenstein-rearrangements and suitable isomerization temperatures can be determined easily by routine experimentation. Preferably, the carbohydrate isomerization temperature is within the range of from 40 to 95°C, more preferably $50\pm20$°C, $55\pm20$°C, $60\pm20$°C, $65\pm20$°C, $70\pm20$°C, $75\pm20$°C, or $80\pm20$°C, still more preferably $40\pm10$°C, $45+10$°C, $50+10$°C, $55+10$°C, $60+10$°C, $65+10$°C, $70+10$°C, $75+10$°C, or $80+10$°C.

Preferably, the heated mixture is subjected to carbohydrate isomerization conditions for a period of time that is sufficient to achieve carbohydrate isomerization. The carbohydrate isomerization time depends upon the chemical nature of the ingredients of the aqueous starting material and the desired carbohydrate isomerization and can be determined easily by routine experimentation. Typical carbohydrate isomerization times lie within the range of from 1 minute to 48 hours.

Steps (D) and (E) of the process according to the invention may be performed simultaneously or subsequently. Preferably, step (E) is performed after step (D).

The caramelization temperature may be substantially identical with the carbohydrate isomerization temperature. In a preferred embodiment, the caramelization temperature is greater than the carbohydrate isomerization temperature. In another preferred embodiment, the carbohydrate isomerization temperature is greater than the caramelization temperature.

In a preferred embodiment, the mixture is not substantially cooled between steps (C) and (D). Preferably, the mixture is maintained at elevated temperature, preferably at an elevated temperature within the range of from 40 to 95°C, more preferably $50\pm20$°C, $55\pm20$°C, $60\pm20$°C, $65\pm20$°C, $70\pm20$°C, $75\pm20$°C, or $80\pm20$°C, still more preferably $40\pm10$°C. $45\pm10$°C. $50\pm10$°C, $55\pm10$°C, $60\pm10$°C, $65\pm10$°C, $70\pm10$°C, $75\pm10$°C, or $80\pm10$°C. This embodiment is of particular advantage, as the caramelized mixture obtained in step (C) would become viscous upon cooling, thus making further processing more difficult. When the temperature is kept at an elevated level throughout process steps (C), (D) and (E), however, this can be avoided.

The caramelization time may be substantially identical with the carbohydrate isomerization times. In a preferred embodiment, the caramelization time is longer than the carbohydrate isomerization time. In another preferred embodiment, the carbohydrate isomerization time is longer than the caramelization time.

Preferably, steps (D) and (E) of the process according to the invention comprise the substeps of subjecting the caramelized mixture obtained in step (C) to a temperature within the range of from 40 to 90°C at a first pH value within the range of from 8 to 14 for a duration within the range of from 1 minute to 48 hours; adjusting the pH of the reaction mixture to a second pH value that is below the first pH value; and cooling the reaction mixture to a temperature of below 40°C during a cooling interval within the range of from 1 minute to 12 hours.

In a preferred embodiment, after step (E) of the process according to the invention the pH value of the mixture is adjusted to a pH value within the range of from 5 to 9. This can be achieved by adding the same or another carboxylic acid employed in step (B).

Preferably, all steps of the process according to the invention are performed in the same vessel.

The process according to the invention has several advantages. When sucrose is employed as starting material, invertation and caramelization take place simultaneously in the course of steps (B) and (C), respectively. Carbohydrate isomerization may follow in the course of steps (D) and (E), respectively, in a one-vessel-process without intermediate cooling, thus avoiding problems caused by increasing viscosity.

While it is principally possible that the product obtained in step (E) is purified before it is e.g. commercialized, in a preferred embodiment it is not purified but commercialized as such.

Another aspect of the invention relates to an aqueous caramelized carbohydrate composition that is obtainable by the above described process according to the invention.

Another aspect of the invention relates to a process for the preparation of a rare hexose comprising the above process for the preparation of an aqueous caramelized carbohydrate composition according to the invention and the step of

(F) separating the rare hexose from the reaction mixture.

Preferably, step (F) involves a separation technique selected from the group consisting of filtration, electrodialysis, chromatography, membrane filtration, crystallization, centrifugation, or any combination of the foregoing.

Preferably, chromatography comprises simulated moving bed chromatography.

Another aspect of the invention relates to a rare hexose isolate that is obtainable by the above described process according to the invention.

The aqueous caramelized carbohydrate composition according to the invention as well as the rare hexose isolate according to the invention are particularly useful as additive for foodstuffs, e.g. as sweeteners or low calorie sweeteners. Thus, another aspect of the invention relates to the use of the aqueous caramelized carbohydrate composition according to the invention or of the rare hexose isolate according to the invention as additive for foodstuffs, preferably as sweetener, more preferably as low calorie sweetener.

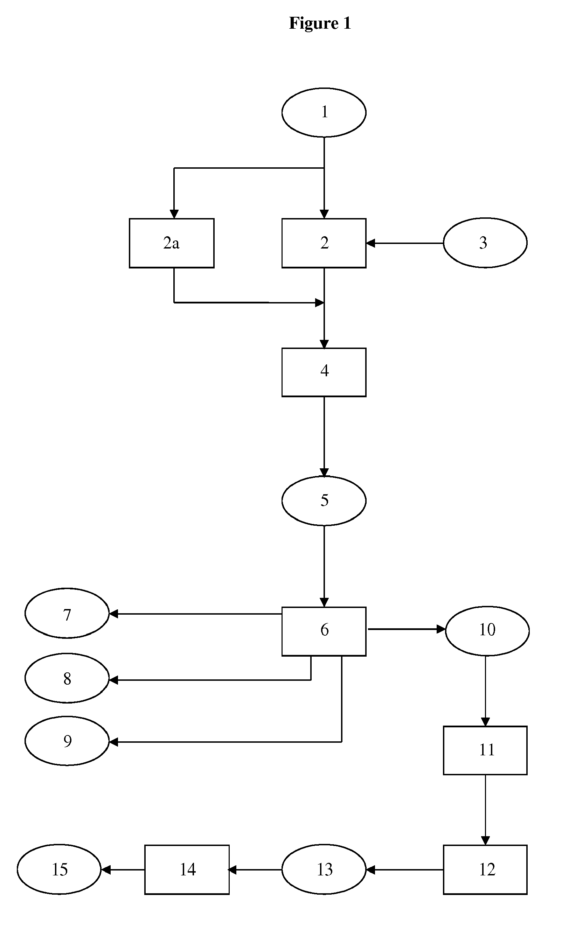

Figure 1 is a flow diagram illustrating a preferred embodiment of the processes according to the invention. Starting material (1) is supplied to reactor (2) that is fed with an aqueous composition of one or more bases (3). Alternatively, the starting material is supplied to reactor (2a) that comprises one or more bases which are immobilized on a solid support. The reaction product is supplied to treatment unit (4) where it may be discolored, e.g. by absorption of colored impurities on active carbon, and where is may be freed from ionic constituents, e.g. by electrodialysis. The resultant crude rare sugar solution (5) is supplied to separation unit (6), which may comprise one or more chromatography units and/or membrane filtration units. Starting material (7), e.g. D-fructose and/or D-glucose, byproducts (8), e.g. sucrose, and optionally, colored impurities (9) are separated. The thus purified rare sugar solution (10) is supplied to crystallization unit (11) and subsequently, to centrifugation unit and decanter unit (12). The thus obtained rare sugar typically having a purity of <98% is than dried in drying unit (14) thereby yielding the substantially pure and dry rare sugar (15).

The following prophetic examples further illustrate the invention but are not to be construed as limiting its scope.

Prophetic example 1

10 g of citric acid are added to 200 g of sucrose syrup. The mixture is heated to 100°C in order to induce caramelization. After stirring for 30 minutes at 250 rpm and 100°C, the pH value of the caramelized mixture is increased by adding 30 g of an aqueous potassium hydroxide solution (2M). The thus obtained aqueous reaction mixture is allowed to cool down to a temperature of 50°C (but not below) and is stirred for 24 hours at 250 rpm and 50°C.

Prophetic example 2

Prophetic example 1 is repeated, but after stirring stirred for 24 hours at 250 rpm and 50°C, the reaction mixture is allowed to cool down to 20°C and citric acid is added in order to neutralize the pH value of the reaction mixture (pH 7).

Prophetic example 3

In analogy to prophetic example 1, 10 g of citric acid are added to 200 g of sucrose syrup. The mixture is heated to 100°C in order to induce caramelization. After stirring for 30 minutes at 250 rpm and 100°C, the pH value of the caramelized mixture is increased by adding 30 g of an aqueous potassium hydroxide solution (2M). The thus obtained aqueous reaction mixture is allowed to cool down to a temperature of 80°C (but not below) and is stirred for 24 hours at 250 rpm and 80°C.

Prophetic example 4

Prophetic example 3 is repeated, but after stirring stirred for 24 hours at 250 rpm and 80°C, the reaction mixture is allowed to cool down to 20°C and citric acid is added in order to neutralize the pH value of the reaction mixture (pH 7).

The following non-prophetic examples further illustrate the invention but are not to be construed as limiting its scope.

The tendency of the monosaccharides D-fructose, D-psicose, and D-glucose as well as of the disaccharides sucrose, maltose and cellobiose towards formation of 5-hydroxymethylfurfural (HMF) and changes of color intensities was analytically characterized. Color intensities were quantified according to the European Brewing Convention (EBC) color method. By employing identical weights and molar quantities, the monosaccharides and the disaccharides were compared with one another with respect to HMF formation (quantified according to DIN 10751-3 (2002)) and EBC-color intensities at identical heating temperatures and heating times.

Centrifuge tubes having a volume of 10 mL were heated by means of an aluminum block in an oil bath on a magnetic stirrer with electronic temperature adjustment.

Example 1 (D-fructose at 120 °C in 0.1 M $H_2SO_4$):

D-fructose was dissolved in 0.1 M $H_2SO_4$ (65 g/L, 360 mM). In each case, 10 mL of the solution were transferred into centrifuge tubes and subsequently stirred in the aluminum heating block at 120 °C. After 0, 20, 40, 60, 80, 100, 120, 140, 160, and 180 minutes, a centrifuge tube was removed, cooled down with tap water (2.0 minutes), and further analyzed for color and HMF content.

With advancing heating time a significant increase of color of the reaction solutions was observed. Further, after 80 minutes of heating, the formation of precipitating black particles was observed, the quantitative content of which steadily increased during subsequent heating. Furthermore, a significant increase of foam formation and of the potential for foam formation after stirring, respectively, was observed.

Besides the increase of color, a significant increase in the content of HMF was observed. The content of HMF was analyzed in accordance with DIN 10751-3 (2002). After 180 minutes, an average (n=2) maximum content of HMF amounting to 13.8 g per kg reaction mixture and per kg original substance, respectively, was determined (13,800 ppm). Said average maximum content corresponded to a yield of 30.4 wt.-%, such that after 180 minutes of heating, almost one third of all D-fructose molecules that had been employed as starting material were converted into HMF-molecules.

The measured values are summarized in the table here below:

| time [min] | HMF [g/kg OS] | | |
|---|---|---|---|
| | #1 | #2 | mean |
| 0 | 0.0 | 0.0 | 0.0 |
| 20 | 1.2 | 1.2 | 1.2 |
| 40 | 5.9 | 6.8 | 6.3 |
| 60 | 6.0 | 6.9 | 6.5 |
| 80 | 7.5 | 7.1 | 7.3 |
| 100 | 9.9 | 11.2 | 10.5 |
| 120 | 11.1 | 13.3 | 12.2 |
| 140 | 11.7 | 13.2 | 12.4 |
| 160 | 12.8 | 14.7 | 13.8 |
| 180 | 12.6 | 15.1 | 13.8 |
| OS = original substance mean = arithmetic mean value | | | |

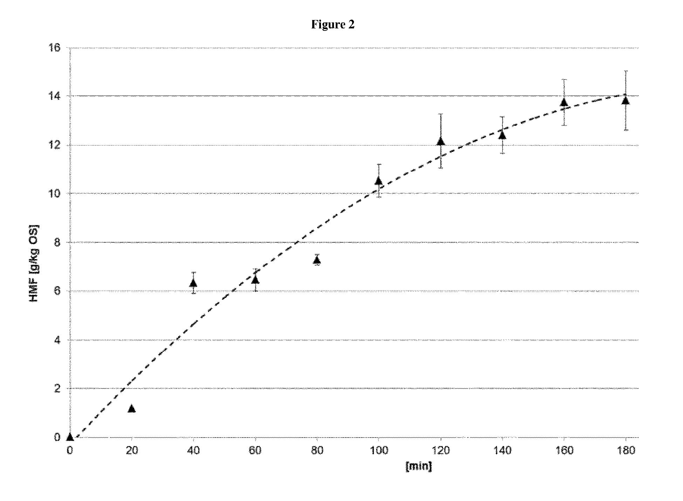

These results are further illustrated in Figure 2.

In view of the significant formation of HMF, the experimental setting turned out to be suitable for the simulation of caramelization of sugars on laboratory scale. The following examples were conducted on the basis of this finding.

Example 2 (D-fructose, D-glucose and D-psicose at 120 °C in 0.1 M $H_2SO_4$):

In analogy to Example 1, D-fructose, D-glucose and D-psicose were each dissolved in 0.1 M $H_2SO_4$ (65 g/L, 360 mM). In each case, 9.0 mL of the solution were transferred into centrifuge tubes and subsequently stirred in the aluminium heating block at 120 °C. After 0, 30, 90, and 180 minutes, a centrifuge tube was removed, cooled down with tap water (2.0 minutes), and further analyzed for color and HMF content.

All three monosaccharides showed an increase in color over time. However, among the monosaccharides significant differences were observed with respect to EBC color intensities. While during heating under the reaction conditions only a slight color formation could be detected for the samples containing D-glucose, a significant color formation occurred in the samples containing D-fructose and D-psicose; at 120 °C only minor relative differences in EBC-color intensities could be detected for D-fructose and D-psicose in comparison to one another.

The measured values are summarized in the table here below:

| time [min] | EBC color intensity | | |
|---|---|---|---|
| | D-fructose | D-glucose | D-psicose |
| 0 | 0 | 0 | 0 |
| 30 | 30 | 2 | 67 |
| 90 | 173 | 3 | 238 |
| 180 | 267 | 8 | 270 |

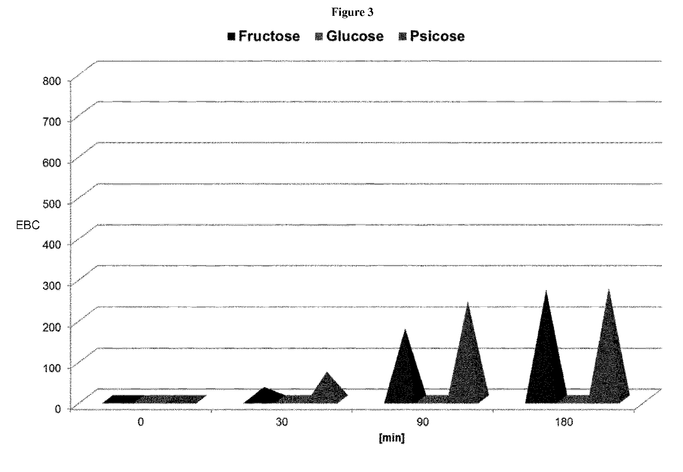

These results are further illustrated in Figure 3.

Furthermore, all three monosaccharides showed an increase of HMF content under acidic conditions at 120 °C over time. Under these conditions, D-glucose showed the least pronounced potential for HMF formation (0.4 g per kg reaction mixture after 180 minutes, corresponding to a yield of 0.4 wt.-%). D-fructose and D-psicose yielded at the end of the experiments a maximum content of 13.2 g/kg and 17.5 g/kg, corresponding to a yield of 29.1 wt.-% and 38.5 wt.-%, respectively. At all points in time, D-psicose reached significantly higher contents of HMF than D-fructose. With respect to HMF formation, D-psicose is thus clearly superior over D-fructose.

The measured values are summarized in the table here below:

| time [min] | HMF [g/kg OS] | | | | | | | | |
|---|---|---|---|---|---|---|---|---|---|
| | D-fructose | | | D-glucose | | | D-psicose | | |
| | #1 | #2 | mean | #1 | #2 | mean | #1 | #2 | mean |
| 0 | 0.0 | 0.0 | 0.0 | 0.0 | 0.0 | 0.0 | 0.0 | 0.0 | 0.0 |
| 30 | 3.6 | 3.6 | 3.6 | 0.0 | 0.0 | 0.0 | 7.2 | 7.2 | 7.2 |
| 90 | 9.3 | 9.3 | 9.3 | 0.1 | 0.1 | 0.1 | 16.2 | 16.5 | 16.4 |
| 180 | 13.0 | 13.3 | 13.2 | 0.2 | 0.2 | 0.2 | 17.2 | 17.8 | 17.5 |

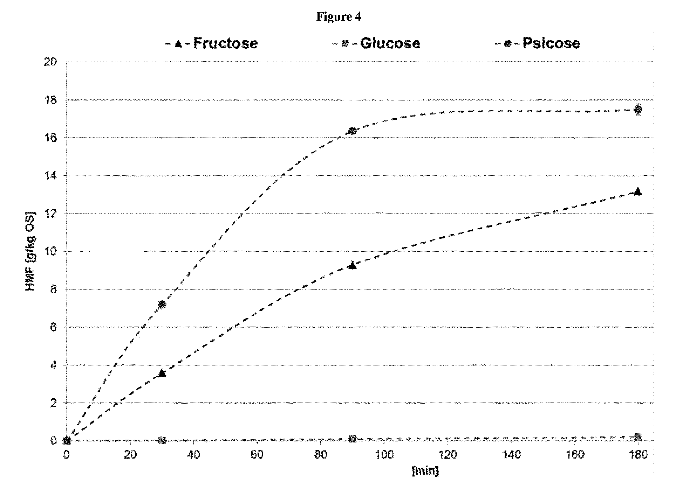

These results are further illustrated in Figure 4.

The following conclusions can be drawn from the above experimental results:

The monosaccharides D-glucose, D-fructose and D-psicose showed different tendency towards HMF formation and color formation when employed as starting materials in caramelization experiments on a laboratory scale. The following ranking was unexpectedly found:

$$D\text{-psicose} > D\text{-fructose} > D\text{-glucose}.$$

D-psicose as starting material in the formation of caramel provided yields of up to 41 wt.-%. Compared to D-fructose and D-glucose, in all experiments D-psicose provided the highest contents of HMF and EBC color intensities.

Thus, in the manufacture of caramels and caramel sirups, employing D-psicose as a starting material instead of conventional sugars such as D-fructose may lower the required reaction temperature and/or reduce the required reaction times. Caramelized products having conventional HMF contents and desired EBC color intensities may thus be obtained from D-psicose at reduced energy consumption and after shorter reaction times.

While a high content of HMF in a final caramel product may not be desirable, in the above examples it is essentially used as an indicator of the progress of the caramelization reaction. It is known that certain typical caramel ingredients are formed through HMF as an intermediate, especially caramel ingredients that have a coloring effect. When further treating the thus obtained caramels, the HMF level may be reduced again to a desired value without decoloring.

**Claims**

1. An aqueous caramelized carbohydrate composition comprising

    (i) at least one common D-aldohexose selected from the group consisting of D-glucose, D-mannose, and D-galactose, wherein the content of said at least one common D-aldohexose is at least 0.1 wt.-%, relative to the total content of all carbohydrates in the composition;

(ii) at least one common D-ketohexose selected from the group consisting of D-fructose and D-sorbose, wherein the content of said at least one common D-ketohexose is at least 0.1 wt.-%, relative to the total content of all carbohydrates in the composition; and

(iii) at least one rare hexose being

(a) a rare D-aldohexose selected from the group consisting of D-allose, D-altrose, D-gulose, D-idose, and D-talose; or

(b) a rare L-aldohexose selected from the group consisting of L-allose, L-altrose, L-glucose, L-mannose, L-gulose, L-idose, L-galactose, and L-talose; or

(c) a rare D-ketohexose selected from the group consisting of D-psicose and D-tagatose; or

(d) a rare L-ketohexose selected from the group consisting of L-psicose, L-sorbose, L-fructose. and L-tagatose;

wherein the content of said at least one rare hexose is at least 0.1 wt.-%, relative to the total content of all carbohydrates in the composition; and

(iv) at least one carboxylic acid;

wherein the aqueous caramelized carbohydrate composition has a water content of at least 0.1 wt.-%, relative to the total weight of the composition.

2. The composition according to claim 1, which comprises

- D-glucose, wherein the content of D-glucose is within the range of from 0.1 to 99.0 wt.-%, relative to the total content of all carbohydrates in the composition;
- D-mannose, wherein the content of D-mannose is within the range of from 0.1 to 99.0 wt.-%, relative to the total content of all carbohydrates in the composition; and
- D-fructose, wherein the content of D-fructose is at least 0.1 wt.-%, relative to the total content of all carbohydrates in the composition.

3. The composition according to claim 1 or 2, which comprises a binary combination of two rare hexoses independently selected from the rare D-aldohexoses, the rare L-aldohexoses, the rare D-ketohexoses, and the rare L-ketohexoses; wherein the overall content of the binary combination of the two rare hexoses is at least 0.2 wt.-%, relative to the total content of all carbohydrates in the composition; preferably wherein said binary combination is selected from the group consisting of $A^1A^2$, $A^1A^3$, $A^1A^4$, $A^1A^5$, $A^2A^3$, $A^2A^4$, $A^2A^5$, $A^3A^4$, $A^3A^5$, $A^4A^5$, $B^1B^2$, $B^1B^3$, $B^1B^4$, $B^1B^5$, $B^1B^6$, $B^1B^7$, $B^1B^8$, $B^2B^3$, $B^2B^4$, $B^2B^5$, $B^2B^6$, $B^2B^7$, $B^2B^8$, $B^3B^4$, $B^3B^5$, $B^3B^6$, $B^3B^7$, $B^3B^8$, $B^4B^5$, $B^4B^6$, $B^4B^7$, $B^4B^8$, $B^5B^6$, $B^5B^7$, $B^5B^8$, $B^6B^7$, $B^6B^5$, $B^7B^8$, $C^1C^2$, $D^1D^2$, $D^1D^3$, $D^1D^4$, $D^2D^3$, $D^2D^4$, $D^3D^4$, $A^1B^1$, $A^2B^1$, $A^3B^1$, $A^4B^1$, $A^5B^1$, $A^1B^2$, $A^2B^2$, $A^3B^2$, $A^4B^2$, $A^5B^2$, $A^1B^3$, $A^2B^3$, $A^3B^3$, $A^4B^3$, $A^5B^3$, $A^1B^4$, $A^2B^4$, $A^3B^4$, $A^4B^4$, $A^5B^4$, $A^1B^5$, $A^5B^5$, $A^3B^5$, $A^4B^5$, $A^5B^5$, $A^1B^6$, $A^2B^6$, $A^3B^6$, $A^4B^6$, $A^5B^6$, $A^1B^7$, $A^2B^7$, $A^3B^7$, $A^4B^7$, $A^5B^7$, $A^1B^8$, $A^2B^8$, $A^3B^8$, $A^4B^8$, $A^5B^8$, $A^1C^1$, $A^2C^1$, $A^3C^1$, $A^4C^1$, $A^5C^1$, $A^1C^2$, $A^2C^2$, $A^3C^2$, $A^4C^2$, $A^5C^2$, $A^1D^1$, $A^2D^1$, $A^3D^1$, $A^4D^1$, $A^5D^1$, $A^1D^2$, $A^2D^2$, $A^3D^2$, $A^4D^2$, $A^5D^2$, $A^1D^3$, $A^2D^3$, $A^3D^3$, $A^4D^3$, $A^5D^3$, $A^1D^4$, $A^2D^4$, $A^3D^4$, $A^4D^4$, $A^5D^4$, $B^1C^1$, $B^2C^1$, $B^3C^1$, $B^4C^1$, $B^5C^1$, $B^6C^1$, $B^7C^1$, $B^8C^1$, $B^1C^2$, $B^2C^2$, $B^3C^2$, $B^4C^2$, $B^5C^2$, $B^6C^2$, $B^7C^2$, $B^8C^2$, $C^1D^1$, $C^2D^1$, $C^1D^2$, $C^2D^2$, $C^1D^3$, $C^2D^3$, $C^1D^4$, and $C^2D^4$; wherein $A^1$ means D-allose, $A^2$ means D-altrose, $A^3$ means D-gulose, $A^4$ means D-idose, $A^5$ means D-talose, $B^1$ means L-allose, $B^2$ means L-altrose, $B^3$ means L-glucose, $B^4$ means L-mannose, $B^5$ means L-gulose, $B^6$ means L-idose, $B^7$ means L-galactose, $B^8$ means L-talose, $C^1$ means D-psicose, $C^2$ means D-tagatose, $D^1$ means L-psicose, $D^2$ means L-sorbose, $D^3$ means L-fmctose, and $D^4$ means L-tagatose; and wherein the content of each rare hexose within said binary combination is at least 0.1 wt.-%, relative to the total content of all carbohydrates in the composition.

4. The composition according to any of the preceding claims, wherein

(I) said rare hexose is D-psicose or L-psicose, or wherein said binary combination of two rare hexoses comprises D-psicose and/or L-psicose, or wherein said ternary combination of three rare hexoses comprises D-psicose and/or L-psicose;
preferably wherein the content of D-psicose or L-psicose is at least 1.0 wt.-%, relative to the total content of all carbohydrates in the composition;
and/or

(II) said rare hexose is D-allose or L-allose, or wherein said binary combination of two rare hexoses comprises D-allose and/or L-allose, or wherein said ternary combination of three rare hexoses comprises D-allose and/or L-allose;

preferably wherein the content of D-allose or L-allose is at least 1.0 wt.-%, relative to the total content of all carbohydrates in the composition.

5. The composition according to any of the preceding claims, wherein the overall content of all carbohydrates amounts to at least 90 wt.-% of the total dry matter content of the carbohydrate composition.

6. The composition according to any of the preceding claims, wherein

   - the carboxylic acid is a multicarboxylic acid; and/or
   - the carboxylic acid is a hydroxycarboxylic acid; and/or
   - the content of the carboxylic acid is at least 0.1 wt.-%, relative to the total weight of the composition.

7. The composition according to any of the preceding claims, which comprises no proteinaceous material and/or no pyridine.

8. The composition according to any of the preceding claims, which comprises not more than 2 ppmw 5-(hydroxymethyl)furfural (HMF), relative to the total content of all carbohydrates in the composition.

9. A process for the preparation of an aqueous caramelized carbohydrate composition according to any of the preceding claims comprising the step of

   (A) providing an aqueous starting material comprising

      - at least one common D-aldohexose selected from the group consisting of D-glucose, D-mannose, and D-galactose; and/or
      - at least one common D-ketohexose selected from the group consisting of D-fructose and D-sorbose; and/or
      - at least one disaccharide comprising

         - at least one common D-aldohexose selected from the group consisting of D-glucose, D-mannose, and D-galactose; and/or
         - at least one common D-ketohexose selected from the group consisting of D-fructose and D-sorbose;

   (B) decreasing the pH value of the aqueous starting material by means of at least one carboxylic acid;
   (C) heating the mixture to a caramelization temperature at which caramelization occurs;
   (D) increasing th pH value of the caramelized mixture obtained in step (C) by means of at least one base; and
   (E) heating the mixture to an isomerization temperature at which carbohydrate isomerization occurs.

10. The process according to claim 9, wherein the base is selected from the group consisting of sodium hydroxide, potassium hydroxide, magnesium hydroxide, calcium hydroxide, aluminium hydroxide, and ammonia.

11. The process according to claim 9 or 10, wherein the base is immobilized on a solid support.

12. The process according to any of claims 9 to 11, wherein

   - in step (B) the pH value is decreased to a pH value within the range of from 3 to 6.5; and/or
   - in step (C) the caramelization temperature is within the range of from 40 to 95°C; and/or
   - in step (D) the pH value is increased to a pH value within the range of from 7.5 to 14; and/or
   - in step (E) the isomerization temperature is within the range of from 40 to 95°C.

13. A process for the preparation of a rare hexose comprising the process according to any of claims 9 to 12 and the step of

   (F) separating the rare hexose from the reaction mixture.

14. The process according to claim 13, wherein step (F) involves a separation technique selected from the group consisting of filtration, electrodialysis, chromatography, membrane filtration, crystallization, centrifugation, or any combination of the foregoing.

15. The process according to claim 14, wherein chromatography comprises simulated moving bed chromatography.

**Figure 1**

**Figure 2**

Figure 3

**Figure 4**

Europäisches
Patentamt
European
Patent Office
Office européen
des brevets

# EUROPEAN SEARCH REPORT

Application Number

EP 15 18 1078

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/076908 A1 (FUJIHARA HIDEKI [JP] ET AL) 29 March 2012 (2012-03-29) | 1-8 | INV. A23L1/09 A23L1/236 C07H3/02 |
| A | * example 1; table 1 * * paragraphs [0035] - [0037], [0043] * | 9-15 | |
| A,D | US 2012/094940 A1 (TAKAMINE SATOSHI [JP] ET AL) 19 April 2012 (2012-04-19) * paragraphs [0001], [0024], [0030], [0036], [0073] - [0075], [0085] - [0088], [0091] * | 1-15 | |
| A | JP 2014 140347 A (MATSUTANI KAGAKU KOGYO KK) 7 August 2014 (2014-08-07) * abstract * * paragraphs [0004], [0005], [0012], [0017], [0023] * | 1-15 | |
| A | US 2013/317210 A1 (OROSKAR ANIL R [US] ET AL) 28 November 2013 (2013-11-28) * paragraphs [0001], [0015] - [0019], [0026] * | 1-15 | TECHNICAL FIELDS SEARCHED (IPC) |
| A | CN 102 876 752 A (SHANDONG LVJIAN BIOLOG TECHNOLOGY CO LTD) 16 January 2013 (2013-01-16) * abstract * * the whole document * | 1-15 | A23L C07H |
| A,D | US 3 285 776 A (SCALLET BARRETT L ET AL) 15 November 1966 (1966-11-15) * column 1, lines 10-56 * * column 2, lines 25-27 * | 1-15 | |

The present search report has been drawn up for all claims

| Place of search | Date of completion of the search | Examiner |
|---|---|---|
| Munich | 22 October 2015 | Couzy, François |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 18 1078

This annex lists the patent family members relating to the patent documents cited in the above-mentioned European search report.
The members are as contained in the European Patent Office EDP file on
The European Patent Office is in no way liable for these particulars which are merely given for the purpose of information.

22-10-2015

| Patent document cited in search report | | Publication date | Patent family member(s) | | | Publication date |
|---|---|---|---|---|---|---|
| US 2012076908 | A1 | 29-03-2012 | CN | 102429201 | A | 02-05-2012 |
| | | | JP | 2012070708 | A | 12-04-2012 |
| | | | KR | 20120033282 | A | 06-04-2012 |
| | | | TW | 201216863 | A | 01-05-2012 |
| | | | US | 2012076908 | A1 | 29-03-2012 |
| | | | US | 2015230509 | A1 | 20-08-2015 |
| US 2012094940 | A1 | 19-04-2012 | CN | 102365290 | A | 29-02-2012 |
| | | | JP | 5715046 | B2 | 07-05-2015 |
| | | | KR | 20120004492 | A | 12-01-2012 |
| | | | US | 2012094940 | A1 | 19-04-2012 |
| | | | WO | 2010113785 | A1 | 07-10-2010 |
| JP 2014140347 | A | 07-08-2014 | NONE | | | |
| US 2013317210 | A1 | 28-11-2013 | US | 2013317210 | A1 | 28-11-2013 |
| | | | WO | 2013177058 | A1 | 28-11-2013 |
| CN 102876752 | A | 16-01-2013 | NONE | | | |
| US 3285776 | A | 15-11-1966 | NONE | | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3285776 A
- US 4692514 A
- US 20100204346 A
- US 20130274350 A
- US 20120094940 A
- WO 2014168018 A